(19) Europäisches Patentamt
European Patent Office
Office européen des brevets

(11) **EP 3 422 056 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**31.05.2023   Patentblatt 2023/22**

(45) Hinweis auf die Patenterteilung:
**08.04.2020   Patentblatt 2020/15**

(21) Anmeldenummer: **18189465.0**

(22) Anmeldetag: **25.06.2013**

(51) Internationale Patentklassifikation (IPC):
*B44C 1/17* *(2006.01)*          *B44F 1/14* *(2006.01)*
*G03H 1/00* *(2006.01)*          *G09F 3/02* *(2006.01)*
*B42D 25/36* *(2014.01)*          *B42D 25/355* *(2014.01)*
*B42D 25/346* *(2014.01)*          *B42D 25/378* *(2014.01)*
*B42D 25/373* *(2014.01)*          *G02B 1/14* *(2015.01)*
*G02B 5/28* *(2006.01)*          *B42D 25/351* *(2014.01)*
*G02B 5/18* *(2006.01)*          *G03H 1/02* *(2006.01)*

(52) Gemeinsame Patentklassifikation (CPC):
**G03H 1/0011; B42D 25/346; B42D 25/351;
B42D 25/355; B42D 25/36; B42D 25/373;
B42D 25/378; B44C 1/1729; B44F 1/14;
G02B 1/14; G02B 5/18; G02B 5/1809; G02B 5/285;
G03H 1/0244;** B42D 25/324;          (Forts.)

(54) **DEKORELEMENT SOWIE SICHERHEITSDOKUMENT MIT EINEM DEKORELEMENT**

DECORATIVE ELEMENT AND SAFETY DOCUMENT COMPRISING A DECORATIVE ELEMENT

ÉLÉMENT DÉCORATIF AINSI QUE DOCUMENT DE SÉCURITÉ POURVU D'UN ÉLÉMENT DÉCORATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2012   DE 102012105571**

(43) Veröffentlichungstag der Anmeldung:
**02.01.2019   Patentblatt 2019/01**

(62) Dokumentnummer(n) der früheren Anmeldung(en) nach Art. 76 EPÜ:
**13731331.8 / 2 864 130**

(73) Patentinhaber: **OVD Kinegram AG
6300 Zug (CH)**

(72) Erfinder:
• **SCHILLING, Andreas
  6332 Hagendorn (ZG) (CH)**
• **MADER, Sebastian
  6340 Baar (CH)**
• **STAUB, René
  6332 Hagendorn (CH)**
• **TOMPKIN, Wayne Robert
  verstorben (CH)**
• **WALTER, Harald
  8810 Horgen (CH)**

(74) Vertreter: **Louis Pöhlau Lohrentz
Patentanwälte
Postfach 30 55
90014 Nürnberg (DE)**

(56) Entgegenhaltungen:
**EP-A1- 2 077 459          EP-A1- 2 264 488
EP-A1- 2 264 491          EP-A1- 2 447 743
WO-A1-2007/131375          AU-A1- 2010 327 762
DE-A1-102010 050 031          DE-B3-102011 014 114**

• **Rudolf L. van Renesse: "Optical Document Security (Third Edition)", 2005, Artech House, Boston / London, XP002712491, ISBN: 1-58053-258-6 * Seite 2 - Seite 3 * * Seite 177 - Seite 178 * * Seite 212 - Seite 217 ***

(52) Gemeinsame Patentklassifikation (CPC): (Forts.)
B42D 25/328; G09F 2003/0276

**Beschreibung**

Die Erfindung betrifft ein Dekorelement, insbesondere in Form einer Transferfolie, einer Laminierfolie oder eines Sicherheitsfadens, sowie ein Sicherheitsdokument und ein Verfahren zur Herstellung eines solchen Dekorelements.

Es ist zum einen bekannt, in Sicherheitsdokumenten Mikrostrukturen einzusetzen, welche beim Verkippen einen regenbogenförmigen Farbverlauf zeigen. Hologramme sind die am meisten bekannten Beispiele dazu. Der Farbverlauf wird aufgrund der wellenlängenabhängigen Beugung des Lichts in die erste und höheren Beugungsordnungen generiert. Der Farbverlauf wird so nicht in der nullten Beugungsordnung, beispielsweise bei Betrachtung des Sicherheitsdokuments in Reflexion im Spiegelreflex, sondern erst beim Verkippen aus der nullten Beugungsordnung in einem Kippwinkelbereich sichtbar, welcher der ersten oder höheren Beugungsordnungen entspricht.

WO 2007/131375 A1 oder DE 10 2010 050031 A1 offenbart den Oberbegriff des Anspruchs 1.

Der Erfindung liegt nun die Aufgabenstellung zugrunde, ein Dekorelement sowie ein Verfahren zur Herstellung eines Dekorelements anzugeben, welches sich durch einprägsame Farbeffekte auszeichnet.

Diese Aufgabe wird von einem Dekorelement gemäß Anspruch 1 gelöst.

Diese Aufgabe wird weiter von einem Verfahren gemäß Anspruch 16 gelöst.

Die Mikrostruktur ist hierbei bevorzugt mit einer die Reflexion verstärkende Schicht beschichtet, insbesondere mit einer Schicht aus Metall oder einem hochbrechenden Material, z. B. mit Aluminium oder Zinksulfid (ZnS), beschichtet. Hierbei meint hochbrechend ein Material mit einem Brechungsindex im sichtbaren Spektralbereich (typischerweise bei einer Wellenlänge von ca. 635nm) von mehr als 1,7. Beispiele für derartige hochbrechende erste Materialien sind in Tabelle 1 aufgelistet. Die Zahlenwerte sind nur grobe Richtwerte, da der konkret vorliegende Brechungsindex einer Schicht von vielen Parametern wie Kristallstruktur, Porosität etc. abhängt.

Tabelle 1:

| Material | Summenformel | Brechungsindex n |
|---|---|---|
| Bleisulfid | $PbS$ | 4,33 |
| Zinktellurid | $ZnTe$ | 3,04 |
| Siliziumkarbid | $SiC$ | 2,64 |
| Eisenoxid | $Fe_2O_3$ | 2,92 |
| Bariumtitanat | $BaTiO_3$ | 2,41 |
| Titandioxid (Brechungsindex ist abhängig von der Kristallstruktur) | $TiO_2$ | > 2,4 |
| Zinksulfid | $ZnS$ | 2,35 |
| Niobdenoxid | $Nd_2O_5$ | 2,32 |
| Zirkoniumoxid | $ZrO_2$ | 2,21 |
| Tantalpentoxid | $Ta_2O_5$ | 2,2 |
| Zinkoxid | $ZnO$ | 2,1 |
| Siliziumnitrid | $Si_3O_4$ | 2,02 |
| Indiumoxid | $In_2O_3$ | 2,0 |
| Siliziummonooxid | $SiO$ | 1,97 |
| Hafniumoxid | $HfO_2$ | 1,91 |
| Yttriumoxid | $Y_2O_3$ | 1,9 |
| Aluminiumoxidnitrid | $AlON$ | 1,79 |
| Magnesiumoxid | $MgO$ | 1,74 |

Durch die Wahl der Art von Mikrostruktur ist es einstellbar, ob die erste Farbe in der ersten oder einer höheren Beugungsordnung oder im Streulicht generiert wird. Periodische oder zumindest lokal periodische Mikrostrukturen generieren die erste Farbe in der ersten oder einer höheren Beugungsordnung. Zufällig angeordnete Mikrostrukturen generieren die erste Farbe im Streulicht.

Bei der theoretischen Beschreibung und dem praktischen Verständnis der Wechselwirkung von diffraktiven Mikrostrukturen (z. B. Beugungsgittern oder streuenden Mikrostrukturen), die auch zusätzlich noch mit einem Dünnfilmschichtsystem kombiniert sein können, mit Licht, stellt sich die Frage nach einer adäquaten theoretischen bzw. phänomenologischen Beschreibung. In einer exakten Art und Weise sind die Wechselwirkungen solcher Mikrostrukturen durch die exakte elektromagnetische Theorie in Form der Maxwell-Gleichungen und der entsprechenden Randbedingungen vollständig beschrieben, d. h. Beugungseffizienzen, Wellenfronten, elektromagnetische Feld- oder Intensitätsverteilungen können berechnet werden, wenn die jeweiligen Systeme hinreichend bekannt sind. Diese exakte Herangehensweise ist in der Regel jedoch wenig verständnisbildend, weshalb oft zusätzlich phänomenologische Beschreibungen innerhalb bestimmter Modelle verwendet werden. Hierbei sind insbesondere zu erwähnen: das Huygens-Prinzip für die Propagation (benannt nach dem holländischen Physiker Christiaan Huygens) und die Fresnel-Interferenz (benannt nach dem französischen Physiker Augustin-Jean Fresnel). Die an periodischen Mikrostrukturen auftretende Gitterbeugung ist eine spezielle Art der Beugung und kann phänomenologisch als eine Kombination von Huygens'scher Propagation und Fresnel'scher Interferenz verstanden werden.

Durch entsprechende Wahl des ersten Abstands ist es so möglich, durch konstruktive oder destruktive Interferenz des an benachbarten Elementflächen und Grundflächen reflektierten bzw. durch benachbarte Elementflächen oder Grundflächen transmittierten Lichts einen für den menschlichen Betrachter erkennbaren Farbeffekt zu generieren.

Der erste Abstand wird vorzugsweise so gewählt, dass durch Interferenz des an der Grundfläche und den Elementflächen reflektierten Lichts in der nullten Beugungsordnung im Auflicht und/oder durch Interferenz des durch die Elementflächen und die Grundfläche transmittierten Lichts im Durchlicht in der nullten Beugungsordnung eine Farbe generiert wird, insbesondere die erste Farbe oder die zweite Farbe generiert wird.

Licht, welches von der Grundfläche kommend das Auge eines Betrachters erreicht, durchläuft eine unterschiedliche optische Weglänge im Vergleich zu Licht, welches von den Elementflächen kommt. Das Verhältnis der Fläche der Grundelemente im Vergleich zu der Fläche der Grundfläche bestimmt die Effizient, mit der die Lichtstrahlen mit den verschiedenen Weglängen interferieren. Dieses Verhältnis bestimmt somit auch die Stärke der Farbe bzw. des Farbeindrucks.

Die nullte Beugungsordnung entspricht der direkten Reflexion bzw. direkten Transmission. Die direkte Reflexion zeigt sich beispielsweise beim Spiegelreflex einer Lichtquelle.

Weiter hat sich hierbei überraschenderweise gezeigt, dass die Farbgebung des an der Mikrostruktur in die nullte Beugungsordnung gebeugte bzw. reflektierte Licht und/oder des gestreuten Lichts stark beeinflusst wird, insbesondere eine zweite Farbe in der nullten Beugungsordnung generiert wird und/oder eine erste Farbe im Streulicht generiert wird. Hierdurch wird es möglich, Dekorelemente mit einprägsamen Farbeffekten bereitzustellen, welche sich weiter auch durch eine hohe Fälschungssicherheit auszeichnen.

Der erste Abstand wird erfindungsgemäß zur Erzielung der jeweiligen gewünschten ersten Farbe bei Betrachtung im Streulicht eingestellt. Vorzugsweise ist hierbei der erste Abstand für Effekte in Reflexion zwischen 150 nm und 1000 nm und weiter vorzugsweise zwischen 200 nm bis 600 nm gewählt. Für Effekte in Durchlicht ist vorzugsweise der erste Abstand zwischen 300 nm und 4000 nm und weiter vorzugsweise zwischen 400 nm bis 2000 nm gewählt. Der einzustellende Abstand hängt hierbei vom Brechungsindex des Materials ab, das sich zwischen den beiden Ebenen befindet.

Für das Erzielen eines einheitlichen Farbeindrucks ist eine gute Konstanz der Strukturhöhe bzw. des Abstands notwendig. Bevorzugt variiert dieser Abstand in einem Bereich mit einem einheitlichen Farbeindruck weniger als +/- 50 nm, weiter bevorzugt weniger als +/- 20 nm, noch weiter bevorzugt weniger als +/-10 nm. Die Grundfläche und die Elementflächen sind damit vorzugsweise derart parallel zueinander angeordnet, dass der erste Abstand bzw. der zweite, dritte oder vierte Abstand nicht mehr als +/- 50 nm, bevorzugt weniger als +/- 20 nm, weiter bevorzugt weniger als +/-10 nm variieren, insbesondere im ersten Bereich variieren.

Vorzugsweise werden die Grundelemente derart ausgeformt und im ersten Bereich angeordnet, dass durch die Grundelemente das einfallende Licht derart durch Streuung aus der nullten Beugungsordnung abgelenkt wird, dass bei zumindest einer von der nullten Beugungsordnung abweichenden Betrachtung eine von der zweiten Farbe unterschiedliche erste Farbe, insbesondere eine zur zweiten Farbe komplementäre Farbe generiert wird. Das Sicherheitselement weist somit in der nullten Ordnung einen zweiten Farbeindruck und/oder Farbeffekt bei Kippung des Sicherheitselements auf. Gleichzeitig weist das Sicherheitselement bei leicht von der nullten Ordnung abweichender Betrachtung einen deutlich sichtbaren ersten Farbeindruck und/oder Farbeffekt bei Kippung des Sicherheitselements auf. In vielen Fällen ist dieser zweite Farbeindruck die Komplementärfarbe zu dem ersten Farbeindruck, wie weiter unten noch detailliert erläutert.

Man nennt diejenige Farbe komplementär, die mit der Ursprungsfarbe gemischt einen (neutralen) Grauton ergibt. Ein Farbenpaar kann hierbei farbenpsychologisch als komplementär empfunden werden, auch wenn es dies technisch-physikalisch (etwa in RGB-Werten, R = Rot, G = Grün, B = Blau) nicht ist. In diesem Dokument ist mit komplementär der farbenpsychologische Aspekt gemeint.

Unter Farbe wird weiter vorzugsweise eine Veränderung des Spektrums des einfallenden oder transmittierten Lichts im sichtbaren Wellenlängenbereich verstanden, beispielsweise ein roter oder blauer Farbeindruck bei einer weißen Lichtquelle.

Der gewünschte, für den visuellen Effekt relevante, stärker ins Auge springende Farbeindruck ist hierbei vorzugsweise der erste Farbeindruck.

Durch die wie oben beschriebene Wahl der Reliefform der Grundelemente und die Kombination der Grundelemente mit einer gemäß dem ersten Abstand beabstandeten Grundfläche wird der Farbeindruck der Mikrostruktur im Streulicht eingestellt. Durch die entsprechende Wahl der Flächenabmessungen der Projektion der Grundelemente auf die Grundebene und die Beabstandung der Mikrostrukturen wird, wie auch im Folgenden anhand von mehreren Ausführungsbeispielen detailliert erläutert, bewirkt, dass zusätzlich zu dem Farbeffekt in der ersten Beugungsordnung bzw. im Streulicht bei der nullten Beugungsordnung ein für den menschlichen Betrachter sichtbarer, hiervon unterschiedlicher Farbeindruck, insbesondere komplementärer Farbeindruck generiert wird. Der so bereitgestellte optische Effekt unterscheidet sich deutlich von den bekannten Farbeffekten, welche beispielsweise von Beugungsstrukturen mit Regenbogeneffekten generiert werden, und eignet sich insbesondere auch auf Grund seines einprägsamen Farbwechsels in besonderem Maße als Sicherheitsmerkmal, beispielsweise zum Einsatz in ID-Dokumenten oder Wertdokumenten.

Die Ausformung und Anordnung der Grundelemente beeinflusst die Aufteilung des Lichts in nullter Beugungsordnung sowie im Streulicht. Vorzugsweise sind die Grundelemente derart ausgeformt und im ersten Bereich angeordnet, dass zumindest 10 % des einfallenden Lichts, weiter bevorzugt zwischen 20 % und 90 % des einfallenden Lichts und weiter bevorzugt zwischen 30 % und 70 % des einfallenden Lichts aus der nullten Beugungsordnung abgelenkt wird, insbesondere durch Streuung abgelenkt wird. Durch eine derartige Ausformung und Anordnung der Grundelemente wird ein besonders einprägsamer Farbwechsel zwischen dem sich in der nullten Beugungsordnung zeigenden Farbeindruck und dem sich bei einem von der nullten Beugungsordnung abweichenden Betrachtung zeigenden Farbeindruck erzielt.

Weiter hat sich gezeigt, dass die oben beschriebenen Farbeindrücke besonders stark auftreten, wenn mindestens eine laterale Ausdehnung der Projektionen der Grundelemente auf die Grundebene zwischen 0,25 bis 50 μm, vorzugsweise zwischen 0,4 μm und 20 μm und weiter bevorzugt zwischen 0,75 μm und 10 μm betragen, insbesondere sämtliche lateralen Ausdehnungen der Projektion jedes Grundelements auf die Grundebene diese Bedingung erfüllt.

Unter Projektion eines Grundelements auf die Grundebene ist hierbei die sich bei einer Betrachtung des Grundelements senkrecht zu der Grundebene ergebende, von dem Grundelement belegte Fläche zu verstehen.

Weiter ist es vorteilhaft, den minimalen Abstand benachbarter Grundelemente nicht größer als 500 μm zu wählen, insbesondere zwischen 0,2 μm und 300 μm, weiter bevorzugt zwischen 0,4 μm und 50 μm zu wählen. Es hat sich gezeigt, dass bei einer derartigen Wahl dieses Parameters die oben beschriebenen Farbeindrücke besonders stark auftreten.

Unter Beabstandung benachbarter Grundelemente ist hierbei der Abstand benachbarter Grundelemente in der Grundebene, d. h. die Beabstandung der Projektionen benachbarter Grundelemente auf die Grundebene zu verstehen. Der minimale Abstand benachbarter Grundelemente stellt somit die minimale Beabstandung der Projektion benachbarter Grundelemente auf die Grundebene dar, d. h. die sich bei Draufsicht senkrecht zur Grundebene ergebende minimale Beabstandung benachbarter Grundelemente.

Vorzugsweise wird die mittlere Flächenbelegung der Grundebene mit den Grundelementen im ersten Bereich oder in einem Teilbereich des ersten Bereichs zwischen 30 % und 70 %, weiter bevorzugt zwischen 40 % und 60 % und besonders bevorzugt in etwa 50 % gewählt. Es hat sich gezeigt, dass die oben beschriebenen Farbeindrücke besonders stark bei einer derartigen Wahl der Flächenbelegung auftreten.

Unter mittlerer Flächenbelegung der Grundebene mit den Grundelementen ist hierbei der Flächenanteil der Projektionen der Grundelemente auf die Grundebene an der Gesamtfläche des jeweiligen Bereichs zu verstehen.

Die Flanke der Mikrostruktur ist vorzugsweise als die Fläche definiert, deren Höhe mind. 10 % der Stufenhöhe (Beabstandung der benachbarten Elementfläche von der benachbarten Grundfläche in einer senkrecht zu der Grundebene verlaufenden Richtung) höher als die benachbarte Grundfläche und mind. 10 % der Stufenhöhe tiefer als die der benachbarten Elementfläche ist.

Im Falle einer zweidimensionalen Struktur der Periode p und einer auf die Grundebene projizierten Fläche $\Delta f$ der Flanke ist der auf die Grundebene projizierte Flächenanteil der Flanke

$$100\% \bullet 2 \bullet \frac{\Delta f}{p}$$

Dieser Flächenanteil der Flanken ist vorzugsweise kleiner 50 %, weiter bevorzugt kleiner 40 %, noch weiter bevorzugt kleiner 30 % und besonders bevorzugt kleiner 20 %. Weiter ist der Flächenanteil der Flanke bevorzugt größer als 1 %, weiter bevorzugt größer als 3 %. Es hat sich gezeigt, dass eine Erhöhung des Flächenanteils der Flanken zu einer Reduzierung der Effizienz führt und das die Farben zudem pastellartiger, also unreiner bzw. weißhaltiger, werden.

Damit der Flächenanteil der Flanken kleiner XX % ist, muss der mittlere Flankenwinkel γ folgende Bedingung

erfüllen:

$$\gamma \geq arctan \left[ \frac{h}{(100\% - 2 \bullet 10\%) \bullet XX\% \bullet p} \right]$$

Soll der Flächenanteil der Flanken einer 0,5 μm hohen Struktur z. B. weniger als 20 % betragen, so muss der Flankenwinkel bei einer Struktur mit 1um Periode größer 72° sein, bei einer Struktur mit 2 μm Periode größer 57° sein und bei einer Struktur mit 5 μm Periode größer 32° sein.

Der Flankenwinkel der Flanken der Grundelemente ist vorzugsweise größer als 70 Grad und weiter bevorzugt größer als 80 Grad und besonders bevorzugt in etwa 90 Grad zu wählen.

Unter dem Flankenwinkel ist vorzugsweise der von der Flanke des Grundelements mit der Grundebene eingeschlossene Winkel zu verstehen, bezogen auf den zum Grundelement hin orientierten Bereich der Grundebene.

Die Form der Projektion des Grundelements auf die Grundebene ist vorzugsweise aus folgenden Formen ausgewählt: Kreis, Ellipse, Quadrat, Rechteck, Sechseck, Mehreck, Zeichen, Buchstaben, Symbol oder Mikrotext. Bevorzugt ist die Projektion eines oder mehrerer der Grundelemente auf die Grundebene jeweils in Form eines Symbol oder eines Buchstabens oder eines Mikrotextes ausgeformt. Hierdurch wird eine dem menschlichen Auge ohne Verwendung eines Hilfsmittels verborgene optische Information als zusätzliches Sicherheitsmerkmal bereitgestellt.

Die Grundelemente sind, wie im Folgenden beschrieben, pseudo-zufällig, angeordnet.

Gemäß einem bevorzugten Ausführungsbeispiel sind die Grundelemente derart ausgeformt und im ersten Bereich angeordnet, dass sie das einfallende Licht in zumindest eine Richtung streuen, vorzugsweise in einem Streuwinkelbereich zwischen 45 Grad und 5 Grad, weiter bevorzugt zwischen 30 Grad und 10 Grad, um die nullte Beugungsordnung streuen. Überraschend hat sich gezeigt, dass wohl aufgrund der Energieerhaltung das so von der Mikrostruktur generierte Streulicht eine Farbe zeigt, welche sich von der in der nullten Beugungsordnung generierten Farbe unterscheidet, insbesondere eine hierzu komplementäre Farbe zeigt. Die komplementäre Farbe entsteht insbesondere, wenn die Mikrostruktur mit einem farbneutralen, die Reflexion verstärkenden Material (z. B. Aluminium oder ZnS) beschichtet ist. Farbig reflektierende Materialien wie z. B. Kupfer führen zu nicht komplementären Farbkombinationen.

Unter Streuwinkelbereich wird hierbei der Winkelbereich um die nullte Beugungsordnung verstanden, in welchem das einfallende Licht in Reflexion oder Transmission durch Streuung aus der nullten Beugungsordnung abgelenkt wird. Bei einem Streuwinkelbereich von 30 Grad wird das einfallende Licht somit in einem Winkelbereich von plus 30 Grad bis minus 30 Grad um die nullte Beugungsordnung herum durch Streuung abgelenkt und bei einem Streuwinkelbereich von 10 Grad wird das einfallende Licht in einem Winkelbereich zwischen minus 10 Grad und plus 10 Grad durch Streuung aus der nullten Beugungsordnung abgelenkt.

Zur Erzielung dieses Effekts die Ausformung und/oder Positionierung der Grundelemente in dem ersten Bereich oder in zumindest einem ersten Teilbereich des ersten Bereichs pseudo-zufällig variiert. Es hat sich gezeigt, dass durch eine derartige Ausformung oder Anordnung der Grundelemente ein entsprechender Streueffekt erzielbar ist, bei dem sich die in der nullten Beugungsordnung in Transmission oder in Reflexion generierte Farbe von der Farbe des in Reflexion oder Transmission generierten Streulichts unterscheidet. Weiter unterdrückt oder reduziert die pseudo-zufällige Anordnung ungewünschte diffraktive Effekte, so dass besonders einprägsame Farbwechsel bereitgestellt werden können.

Erfindungsgemäß wird in dem ersten Bereich oder in zumindest einem ersten Teilbereich des ersten Bereichs hierzu einer oder mehrere der Parameter: Positionierung des Grundelements, Beabstandung des Grundelements vom nächsten benachbarten Grundelement, Form- und/oder Flächengröße der Projektion des Grundelements auf die Grundebene, Anzahl der vertikalen Stufen der Grundelemente und laterale Vorzugsrichtung der Projektion des Grundelements auf die Grundebene der im ersten Bereich bzw. in dem zumindest einen ersten Teilbereich angeordneten Grundelemente pseudo-zufällig innerhalb eines jeweils für den ersten Bereich bzw. jeweiligen ersten Teilbereich vordefinierten Variationsbereich variiert. Es ist hierbei vorteilhaft, wenn die Parameter nicht alle möglichen Werte einnehmen können, sondern nur Werte aus einem engeren, vordefinierten Variationsbereich einnehmen können.

Weiter hat es sich bewährt, wenn die vordefinierten Variationsbereiche jeweils einen Satz von vordefinierten Werten umfassen, vorzugsweise zwischen 5 und 20 Werte umfassen. Es können so pseudo-zufällig nicht sämtliche von dem Variationsbereich umfasste Zahlenwerte ausgewählt werden, sondern lediglich die für den jeweiligen Variationsbereich vordefinierten Werte.

Weiter ist es möglich, dass alle Werte des Variationsbereichs mit gleicher Wahrscheinlichkeit pseudo-zufällig ausgewählt werden. Es ist jedoch auch möglich und bevorzugt, dass die Werte des Variationsbereichs mit einer Wahrscheinlichkeit gemäß einer Funktion, insbesondere einer Gaußfunktion oder eine inversen Gaußfunktion pseudo-zufällig ausgewählt werden. Es hat sich gezeigt, dass durch eine derartige Auswahl die Prägnanz des Farbeindrucks weiter verbessert werden kann.

Die Variationsbereiche für die oben beschriebenen Parameter sind wie folgt gewählt:

Variationsbereich für den Parameter Positionierung des Grundelements: Abweichung von +/- 0,5 $\mu$m bis +/-30 $\mu$m und weiter +/-1 $\mu$m bis +/- 10 $\mu$m aus der jeweiligen Regelposition.

Variationsbereich für den Parameter Beabstandung der Grundelemente vom nächsten benachbarten Grundelement: 0,2 $\mu$m bis 500 $\mu$m, erfindungsgemäß 0,4 $\mu$m bis 50 $\mu$m und weiter bevorzugt 0,5 $\mu$m bis 10 $\mu$m.

Variationsbereich des Parameters Form der Projektion des Grundelements auf die Grundebene: Auswahl aus einem vordefinierten Formenschatz umfassend beispielsweise Buchstaben, verschiedene Symbole, oder beispielsweise einen Kreis, ein Quadrat und ein Rechteck. Die Anordnung der verschiedenen Formen kann zufällig erfolgen, es kann aber auch eine lokale Gruppierung der verschiedenen Formen vorliegen.

Variationsbereich des Parameters Flächengröße der Projektion des Grundelements auf die Grundebene: Variation zumindest einer lateralen Abmessung der Projektion des Grundelements auf die Grundebenen in einem Variationsbereich von 0,5 $\mu$m bis 30 $\mu$m (erfindungsgemäß) und weiter bevorzugt von 1 $\mu$m bis 10 $\mu$m.

Variationsbereich des Parameters laterale Vorzugsrichtung der Projektion des Grundelements auf die Grundebene: Winkelbereich von + 180 Grad bis - 180 Grad, Winkelbereich von + 90 Grad bis - 90 Grad, Winkelbereich von +30 Grad bis - 30 Grad.

Weiter ist es vorteilhaft, wenn für jedes der im ersten Bereich oder im ersten Teilbereich angeordneten Grundelemente eine Winkelposition des jeweiligen Grundelements in der Grundebene durch ein zweidimensionales, von der Koordinatenachse x und der Koordinatenachse y aufgespanntes Raster definiert ist.

Weiter ist es vorteilhaft, hierbei den Parameter "Positionierung des Grundelements" gemäß dem folgenden Ansatz pseudo-zufällig zu variieren: Die Position der Grundelemente im ersten Bereich oder im ersten Teilbereich wird sodann durch eine pseudo-zufällige Verschiebung des Grundelements aus der jeweiligen Regelposition in Richtung der durch die Koordinatenachse x und/oder der Koordinatenachse y bestimmten Richtung bestimmt. Vorzugsweise bezieht sich hierbei die Regelposition auf den Flächenschwerpunkt der Projektion des jeweiligen Grundelements auf die Grundebene.

Weiter ist es auch möglich, den Parameter "Positionierung des Grundelements" durch jede andere pseudo-zufällige Anordnung der Grundelemente pseudo-zufällig zu variieren.

Der Variationsbereich der zufälligen Verschiebung aus der Regelposition beträgt vorzugsweise zwischen + D/2 und - D/2, wobei D die Abmessung der Projektion des Grundelements auf die Grundebene in Richtung der Koordinatenachse x bzw. der Koordinatenachse y ist. Die Rasterweite des Rasters ist vorzugsweise zwischen 0,5 $\mu$m bis 100 $\mu$m, weiter bevorzugt zwischen 1,5 $\mu$m und 20 $\mu$m gewählt.

Gemäß einem weiteren bevorzugten Ausführungsbeispiel der Erfindung sind die Parameter, die pseudo-zufällig in einem ersten der ersten Teilbereiche und in einem zweiten der ersten Teilbereiche variiert sind, unterschiedlich gewählt und/oder mindestens ein Variationsbereich der variierten Parameter in einem ersten der ersten Teilbereiche und in einem zweiten der ersten Teilbereiche sind unterschiedlich gewählt. Durch die unterschiedliche Variation der Parameter, die pseudo-zufällig variiert werden, und/oder die unterschiedlichen Variationsbereiche kann eine unterschiedliche Streuung des Lichts in dem ersten der ersten Teilbereiche und dem zweiten der zweiten Teilbereiche bewirkt werden, so dass durch ein Verkippen aus der nullten Beugungsordnung im ersten der ersten Teilbereiche und im zweiten der zweiten Teilbereiche unterschiedliche Farbeffekte generiert werden und so diese Bereiche unterscheidbar werden. Die unterschiedliche Variation der Parameter kann aber auch so gewählt sein, dass durch ein Verkippen aus der nullten Beugungsordnung im ersten der ersten Teilbereiche und im zweiten der zweiten Teilbereiche für das menschliche Auge gleich erscheinende Farbeffekte generiert werden, aber im Mikroskop die Unterschiede nachweisbar sind. Beispielsweise kann ein Text oder ein Muster durch die Teilbereiche geformt sein, was im Mikroskop sichtbar wird. Dies kann als verstecktes Merkmal verwendet werden.

Bevorzugt unterscheidet sich die Form der Projektion der Grundelemente auf die Grundfläche von zwei oder mehreren Grundelementen im ersten Bereich oder im ersten Teilbereich.

Vorzugsweise sind eines oder mehrere der Grundelemente als symmetrische Grundelemente ausgebildet. Unter symmetrischen Grundelementen werden hier Grundelemente verstanden, bei denen die Projektion der Grundelemente auf die Grundebene eine symmetrische Form besitzt, d. h. Grundelemente verstanden, die bezüglich der Formgebung ihrer Projektion symmetrisch sind. Beispiele dafür sind Kreise, Quadrate, gleichseitige Dreiecke etc.

Weiter ist es vorteilhaft, wenn eines oder mehrere Grundelemente asymmetrische oder anisotrope Grundelemente sind. Unter asymmetrischen oder anisotropen Grundelementen werden Grundelemente verstanden, bei denen die Projektion des Grundelements auf die Grundebene eine asymmetrische Form mit einer lateralen Abmessung in einer Vorzugsrichtung aufweist, welche größer als die laterale Abmessung der Projektion quer zur Vorzugsrichtung ist. Unter asymmetrischen oder anisotropen Grundelementen werden so Grundelemente mit einer asymmetrischen Formgebung der Projektion des Grundelements auf die Grundebene verstanden. Beispiele dafür sind Ellipsen, Rechtecke oder gleichschenklige Dreiecke.

Vorzugsweise ist die laterale Abmessung der Projektion quer zur Vorzugsrichtung mehr als 2-mal größer, bevorzugt mehr als 5-mal größer als quer zur Vorzugsrichtung.

Durch die Verwendung von asymmetrischen oder anisotropen Grundelementen ist es möglich, einen von der Beleuchtung und Betrachtung abhängigen Streuwinkelbereich zu erzielen. Der Streuwinkelbereich ist unter anderem abhängig von der jeweiligen Strukturgröße des Grundelements in der Beleuchtungs-/Betrachtungsrichtung. Dies führt dazu, dass sich der Farbeindruck des Streulichts bei Drehung des Sicherheitselements in der Grundebene und Beibehaltung des Betrachtungswinkels verändert. Beispielsweise kann das Streulicht bei Betrachtung in der von den Koordinatenachsen x und z aufgespannten Ebene cyan-farbig bzw. in hellem Blau oder Türkis erscheinen und sich bei Drehung in der Grundebene in die y/z Ebene zu einem dunkelbläulichen Licht bzw. einem dunkelgrauen Farbeindruck verändern. Durch das unterschiedliche Streuverhalten der asymmetrischen Grundelemente in Vorzugsrichtung und quer zur Vorzugsrichtung wird so letztendlich bewirkt, dass sich der Farbeindruck, insbesondere die Helligkeit bzw. Intensität der Farbe, bei einer Drehung des Dekorelements um eine senkrecht zur Grundebene stehende Achse verändert.

Gemäß einem bevorzugten Ausführungsbeispiel der Erfindung sind in dem ersten Bereich oder in einem Teilbereich des ersten Bereichs die Grundelemente asymmetrische Grundelemente, welche die gleiche Vorzugsrichtung aufweisen. In dem ersten Bereich oder in diesem Teilbereich zeigt sich so der oben beschriebene Farbeffekt.

Gemäß einem weiteren bevorzugten Ausführungsbeispiel sind in dem ersten Bereich oder in einem Teilbereich des ersten Bereichs die Grundelemente asymmetrische Grundelemente, deren Vorzugsrichtung pseudo-zufällig in einem vordefinierten Variationsbereich variiert ist. Durch eine derartige Ausgestaltung kann zum einen eine Vergrößerung des Streuwinkelbereichs erzielt werden und, je nach Auswahl des Variationsbereichs, bei einem bestimmten Winkel der oben beschriebene Farbeffekt beobacht werden. Der Variationsbereich wird vorzugsweise von einem Winkelbereich von plus 180 Grad bis minus 180 Grad bzw. plus 90 Grad bis minus 90 Grad zur Erzielung des oben beschriebenen ersten Effekts und von einem Winkelbereich von weniger als plus 90 Grad bis minus 90 Grad, beispielsweise plus 30 Grad bis minus 30 Grad zur Erzielung des zweiten, oben beschriebenen Effektes gebildet.

Gemäß einem weiteren bevorzugten Ausführungsbeispiel der Erfindung sind in dem ersten Bereich oder in dem ersten Teilbereich des ersten Bereichs eine oder mehrere erste Zellen und/oder eine oder mehrere zweite Zellen vorgesehen. Die in den ersten und zweiten Zellen angeordneten Grundelemente werden als asymmetrische Grundelemente ausgebildet. Die asymmetrischen Grundelemente der ersten Zellen weisen hierbei eine einheitliche erste Vorzugsrichtung und die asymmetrischen Grundelemente der zweiten Zellen eine zweite einheitliche Vorzugsrichtung auf. Die erste und zweite Vorzugsrichtung sind unterschiedlich gewählt und unterscheiden sich vorzugsweise um mindestens 5 Grad, weiter bevorzugt um mindestens 10 Grad.

Bei Drehung des Dekorelements um eine senkrecht auf der Grundebene stehende Achse wird der oben bereits beschriebene Effekt in den ersten und zweiten Zellen generiert. Werden die ersten und zweiten Zellen in ihrer Abmessung im makroskopischen Bereich gewählt, d. h. die lateralen Abmessungen der ersten und zweiten Zellen parallel zur Grundebene größer als 300 μm gewählt, so wird beim Drehen des Dekorelements um eine senkrecht zur Grundebene stehende Achse die Formgebung der ersten und zweiten Zellen für den Betrachter sichtbar (bei einer entsprechenden Verkippung aus der nullten Ordnung), so dass eine durch die Ausformung der ersten und zweiten Zellen bestimmte Information, z. B. eine Denomination, sichtbar wird.

In einer alternativen Ausführungsform mit Zellen mit Abmessungen im makroskopischen Bereich werden Bewegungseffekte bei Drehung erzeugt, z. B. Rolling Bar artige Effekte erzeugt. Zur Erzeugung eines "rolling bar"-Effektes ist es beispielsweise möglich, mehrere längliche Zellen mit den asymmetrischen Grundelementen nebeneinander zu platzieren, wobei die Vorzugsrichtung der Grundelemente von Zelle zu Zelle stetig variiert, beispielsweise in 10 Grad-Schritten, bevorzugt in maximal 5 Grad-Schritten zunimmt. Die Größe der länglichen Zellen ist beispielsweise 20 mm in Längsrichtung und 500 μm in Querrichtung. Werden 19 derartige Zellen nebeneinander angeordnet, wobei die Vorzugsrichtung der ersten Zelle 0 Grad ist und die Vorzugsrichtung der anderen Zellen in 10 Grad-Schritten zunimmt, so weist die mittlere Zelle die Vorzugsrichtung 90 Grad auf und die letzte Zelle 180 Grad (bzw. wieder 0 Grad).Wird nun ein Dekorelement einer derartigen Ausführungsform bei geeignetem festem Kippwinkel betrachtet und dann gedreht, variiert die Helligkeit des Farbeindrucks wie ein Leuchtband über das Dekorelement.

Ein "rolling bar"-Effekt ist ein optischer Effekt ähnlich einer reflektierenden Zylinderlinse. Dabei erscheinen die Bereiche der Zylinderlinse, welche das Licht in die Richtung eines Beobachters reflektieren heller, als die Bereiche, welche das Licht in andere Richtungen reflektieren. Somit erzeugt diese Funktion eine Art "Lichtband", welches scheinbar über die Zylinderlinse wandert, wenn der Mehrschichtkörper in Richtung des Blickwinkels gekippt wird.

Weiter ist es auch möglich, die Größe der ersten und zweiten Zellen so zu wählen, dass sie eine laterale Abmessung parallel zur Grundebene von weniger als 300 μm, insbesondere weniger als 100 μm besitzen. Hierdurch vermischt sich für den menschlichen Betrachter bei Betrachtung ohne Hilfsmittel der von den ersten und zweiten Zellen generierte Effekt, so dass die ersten und zweiten Zellen für diesen nicht unterscheidbar sind und sich ein Farbeindruck beim Drehen um eine senkrecht auf der Grundebene stehende Achse zeigt, welcher sich aus einer Farbmischung der in den ersten und zweiten Zellen generierten Farbeffekte ergibt. Hierdurch können zum einen interessantere Farbeffekte beim Drehen generiert werden. Weiter kann die für den menschlichen Betrachter nicht sichtbare Unterteilung in erste und zweite Zellen als zusätzliches verstecktes Sicherheitsmerkmal dienen, welches beispielsweise nur unter Zuhilfenahme eines Mikroskops überprüft werden kann.

Weiter ist es auch möglich, dass der erste Bereich oder der erste Teilbereich des ersten Bereichs eine oder mehrere dritte Zellen aufweist, und dass die in den dritten Zellen angeordneten Grundelemente symmetrische Grundelemente sind. Je nach Wahl der Größe der dritten Zellen können aufgrund des unterschiedlichen Streuverhaltens der dritten Zellen bei entsprechender Kombination mit ersten und zweiten Zellen die beiden oben beschriebenen Effekte ergänzt um ein weiteres Designmerkmal bereitgestellt werden und so die Attraktivität des Dekorelements weiter verbessert werden.

Weiter ist es auch möglich, die oben beschriebenen Effekte miteinander zu kombinieren und beispielsweise in einem ersten der ersten Teilbereiche erste, zweite und dritte Zellen vorzusehen, welche eine makroskopische laterale Größenabmessung besitzen, und in einem zweiten der ersten Teilbereiche erste, zweite und dritte Zellen vorzusehen, die zumindest eine laterale Abmessung parallel zur Grundebene von weniger als 300 $\mu$m, insbesondere weniger als 100 $\mu$m besitzen.

Gemäß einem weiteren bevorzugten Ausführungsbeispiel der Erfindung folgen in dem ersten Bereich oder in einem oder mehreren zweiten Teilbereichen des ersten Bereichs die Grundelemente zumindest bereichsweise periodisch aufeinander, insbesondere mit einer Periode zwischen 0,75 $\mu$m und 10 $\mu$m aufeinander. Die Grundelemente sind so vorzugsweise gemäß einem regelmäßigen ein- oder zweidimensionalen Raster positioniert.

Die Grundelemente sind weiter in dem ersten Bereich oder in den ein oder mehreren zweiten Teilbereichen vorzugsweise identisch ausgeformt und weisen insbesondere in Bezug auf ihre Projektion auf die Grundebene eine identische Formgebung auf.

Durch die Richtung, in welche die Grundelemente periodisch aufeinander abfolgen, wird der Azimutwinkel der Grundelemente in dem ersten Bereich bzw. zweiten Teilbereich bestimmt und durch die Beabstandung der Flächenschwerpunkte der Projektion der Grundelemente auf die Grundebene die Periode der Grundelemente in dem ersten Bereich bzw. zweiten Teilbereich bestimmt. Die Mikrostruktur kann so beispielsweise aus stegförmigen, punktförmigen oder rechteckförmigen Grundelementen (bei Betrachtung senkrecht zur Grundebene) aufgebaut sein, die isotrop oder pseudo-isotrop gemäß einem Azimutwinkel ausgerichtet sind.

Gemäß einem weiteren bevorzugten Ausführungsbeispiel ist es weiter möglich, dass die Grundelemente eine kreisringförmige Formgebung, bei Betrachtung senkrecht zu der Grundebene, besitzen und ein Kreisgitter ausbilden.

Gemäß einem bevorzugten Ausführungsbeispiel der Erfindung weist das Dekorelement eine oder mehrere Zellen mit jeweils mehreren zweiten Teilbereichen auf, in welchen die Grundelemente jeweils periodisch aufeinander abfolgen. Die Abfolge der Grundelemente in jedem dieser zweiten Teilbereiche ist hierbei durch die Parameter: Azimutwinkel und/oder Grundelementform und/oder Spatialfrequenz definiert. Einer oder mehrere der Parameter Azimutwinkel und/oder Grundelementform und/oder Spatialfrequenz der in der Zelle angeordneten Teilbereiche sind von zweiten Teilbereichen zu zweiten Teilbereiche pseudo-zufällig innerhalb eines für die Zelle vordefinierten Variationsbereich variiert.

Die zweiten Teilbereiche weisen vorzugsweise jeweils mindestens eine laterale Abmessung parallel zur Grundebene zwischen 5 $\mu$m und 100 $\mu$m, vorzugsweise 10 $\mu$m und 50 $\mu$m, auf. Die Zellen weisen vorzugsweise zumindest eine laterale Abmessung parallel zur Grundebene zwischen 40 $\mu$m bis 300 $\mu$m, vorzugsweise zwischen 80 $\mu$m und 200 $\mu$m auf.

In den zweiten Teilbereichen wird so das Licht in unterschiedliche Richtungen unterschiedlich gebeugt. Das gebeugte Licht weist hierbei aufgrund der speziellen Ausgestaltung der Mikrostruktur nicht den typischen Regenbogenfarbeffekt auf oder weist ihn zumindest nur stark abgeschwächt auf. Das gebeugte Licht zeigt vielmehr wohl aufgrund der Energieerhaltung eine Färbung, welche meist den komplementären Farbeindruck im Vergleich zum Lichtstrahl aufweist, welcher in der nullten Ordnung reflektiert bzw. transmittiert wird. Durch die spezielle Ausgestaltung und Positionierung der in der Zellen angeordneten Grundelemente wird weiterhin eine entsprechend breite Ablenkung des Lichts aus der nullten Beugungsordnung und damit ein ähnlicher Effekt wie bei der vorhergehend beschriebenen Streuung des Lichts an den Grundelementen bewirkt.

Vorzugsweise wird der Parameter Azimutwinkel in einem Variationsbereich von minus 180 Grad bis plus 180 Grad, minus 90 Grad bis plus 90 Grad oder minus 30 Grad bis plus 30 Grad variiert, vorzugsweise in 15-Grad-Schritten variiert. Durch die Wahl des Variationsbereichs von minus 90 Grad bis plus 90 Grad können durch die Zellen ähnliche Effekte erzielt werden, wie diese durch die Anordnung von symmetrischen Grundelementen in den vorhergehend erläuterten dritten Zellen beschrieben sind. Wird der Variationsbereich des Azimutwinkels kleiner als plus 90 Grad bis minus 90 Grad gewählt, können durch die Zellen ähnliche optische Effekte bewirkt werden, wie dies vorhergehend mittels asymmetrischer Mikrostrukturen in den ersten und zweiten Zellen beschrieben ist. Die vorhergehenden Ausführungen bezüglich der Größenabmessung der Zellen und der Kombination von unterschiedlichen Zellen zu den ersten, zweiten und dritten Zellen sind so ebenfalls bei diesem Ausführungsbeispiel anwendbar und diesbezüglich wird so auf die vorhergehenden Ausführungen verwiesen.

Gemäß einem weiteren bevorzugten Ausführungsbeispiel der Erfindung sind in dem ersten Bereich und/oder in einem oder mehreren dritten Teilbereichen des ersten Bereichs die Grundelemente einer nicht periodischen Funktion folgend positioniert. Bei dieser Ausführungsform wird vorzugsweise der sich bei Betrachtung in der nullten Beugungsordnung sowie bei Betrachtung in einer von der nullten Beugungsordnung abweichenden Betrachtungsrichtung zeigende Farbeffekt durch den ersten Abstand und die spezielle Reliefform der Grundelemente bestimmt und die Position und der Betrachtungswinkelbereich, unter dem die erste, insbesondere komplementäre Farbe generiert wird, durch die nicht-periodische Funktion bestimmt.

Vorzugsweise ist ein wie oben dargestellt ausgebildetes erfindungsgemäßes Dekorelement wie im Folgenden beschrieben ausgebildet:

- Heißprägefolie, bedampft mit ca. 30 nm Alu. Die Mikrostrukturen sind vorzugsweise eingebettet in Polymer mit einem Brechungsindex $n_1$ von ca. 1.5
- Kreisförmige Zufallsstrukturen mit lateraler Ausdehnung der Projektionen der Grundelemente von 2,5 $\mu$m und einem ersten Abstand von 300 nm. Mittlere Flächenbelegung ist 50 % und Flankenwinkel nahe 90 Grad. Diese Strukturen führen beispielsweise zu einem violetten ersten Farbeindruck im Streulicht und einem grünlichen zweiten Farbeindruck in der Nullten Beugungsordnung.

Gemäß einer bevorzugten Ausführungsform wird die Anordnung der Grundelemente und die Flächenabmessung der Projektion der jeweiligen Grundelemente in dem ersten Bereich oder in dem dritten Teilbereich durch eine Funktion f (x,y) bestimmt, welche ein binäre Beugungsstruktur beschreibt, die das einfallende Licht zur Generierung einer ersten Information durch Beugung, vorzugsweise durch Beugung in die erste Beugungsordnung ablenkt. Als Beabstandung der Elementflächen der Grundelemente von der Grundfläche ist der wie oben beschrieben ermittelte erste Abstand oder ein Vielfaches des ersten Abstands und nicht die für die binäre Beugungsstruktur "normalerweise" vorzusehende Reliefhöhe gewählt, so dass als zweite Information eine hierdurch bestimmte Farbinformation in dem ersten Bereich oder dem dritten Teilbereich generiert wird. Die binäre Beugungsstruktur wird so mit einer gegenüber der üblicherweise für Beugungsstrukturen verwendeten Strukturtiefe deutlich vergrößerten Strukturtiefe kombiniert, welche wie oben dargelegt gewählt wird und so ein zusätzliche Farbinformation in der ersten Beugungsordnung sowie in der nullten Beugungsordnung generiert, wie oben dargelegt.

Die binäre Beugungsstruktur lenkt das Licht vorzugsweise gemäß einer vordefinierten, frei wählbaren, dreidimensionalen Freiformfläche mit einer oder mehreren Freiformelementen ab. Die Freiformelemente sind hierbei vorzugsweise ausgewählt aus: Freiformelemente in Form eines Ausschnittes einer Oberfläche eines dreidimensionalen Objekts, linsenartige Vergrößerungs-, Verkleinerungs- oder Verzerrungseffekt in Form eines alphanumerischen Zeichens, einer geometrischen Figur (z. B. zylindrische Linse oder runde Linse) oder eines sonstigen Objekterzeugende Freiformelemente, z. B. eines Logos, einer Zahl oder eines Buchstabens.

Durch die Ausstattung einer derartigen Freiformfläche mit einer definierten Farbe ergibt sich nicht nur eine einfache Farbigkeit, sondern ein visuell sehr attraktives Zusammenspiel von Farbeffekt mit dem räumlichen Effekt der Freiformfläche, ähnlich den in der Natur vorkommenden strukturellen, zum Teil metallisch erscheinenden, Farbeffekten auf gewissen Schmetterlingsflügeln (z.B. Blue Morpho didius). Dieses Zusammenspiel von Farbeffekt und räumlichen Freiformflächen-Effekt ist für die visuelle Wahrnehmung sehr wichtig.

Weiter ist es auch möglich, folgende zusätzliche vorteilhafte Effekte durch eine entsprechende Modifikation einer derartigen, eine Freiformflächen-generierte Mikrostruktur zu erzielen:

Es ist vorteilhaft, den Freiformflächen-Effekt mit Farbvariationen bzw. Farbverläufen, z. B. "Blau zu Grün" zu kombinieren. Zur Erzielung dieses Effekts wird, wie weiter unten noch allgemein erläutert die Beabstandung der Elementfläche der Grundelemente von der Grundebene bereichsweise unterschiedlich gewählt, beispielsweise gemäß dem zu erzielenden Farbverlauf insbesondere auch linear variiert.

Weiter ist es möglich, den Freiformflächen-Effekt mit einer Farbinformation zu überlagern, so beispielsweise im Bereich des Freiformflächen-Effekts eine zusätzliche Information zu codieren, beispielsweise ein rotes "OK" auf grünem Hintergrund. In einem Musterbild, welches musterförmig, beispielsweise in Form des "OK" ausgeformt ist, ist hierzu die Beabstandung der Elementflächen der Grundelemente von der Grundfläche unterschiedlich zu der Beabstandung der Elementflächen der Grundelemente von der Grundfläche im Hintergrundbereich gewählt.

Weiter ist es vorteilhaft, wenn der Freiformflächen-Effekt in verschiedenen Teilbereichen in verschiedenen Farben erscheint, beispielsweise in "Blau", "Grün" und "Rot" erscheint, vorzugsweise auch in Kombination mit einer referenzierten gedruckten Farbe, welche beispielsweise im Offset- oder Intaglio-Druck aufgebracht ist. Auch hierzu wird in den unterschiedlichen Teilbereichen die Beabstandung der Elementflächen der Grundelemente von der Grundfläche entsprechend unterschiedlich gewählt. Vorzugsweise wird eine derartige Ausgestaltung der Mikrostruktur auch in Kombination mit referenzierten optisch variablen Farben (OVI, Spark, etc.) gewählt. Dabei ist es bevorzugt, die Anordnung dieser optisch variablen Farben im Register, d. h. lagegenau zu den Teilbereichen auszuführen. Weiter ist es auch vorteilhaft, eine derartige Ausgestaltung der Mikrostruktur in Kombination mit einer nur bereichsweise vorgesehenen insbesondere metallischen Reflexionsschicht zu verwenden, wobei die Reflexionsschicht vorzugsweise im Register, d. h. lagegenau zu den Teilbereichen angeordnet ist, zu verwenden.

Im Weiteren ist es auch möglich, die oben beschriebene, einen räumlichen Freiformflächen-Effekt bereitstellende Mikrostruktur lokal in dem Abstand zwischen den Elementflächen und der Grundfläche wie im Folgenden beschrieben zu variieren, um beispielsweise den Freiformflächen-Effekt mit einem Mehrfarbenbild oder Echtfarbenbild zu kombinieren.

Weiter wird ein erfindungsgemäßes Dekorelement mit einer einen Freiformflächen-Effekt generierenden Mikrostruktur, welche vorzugsweise wie oben dargestellt ausgebildet ist, vorzugsweise wie folgt ausgestaltet:

- Heißprägefolie, bedampft mit Alu/Cu/Cr etc. oder ZnS bzw. alternativen Materialien; oder auch mit HRI/Metall-Kombinationen (z. B. ZnS/(Alu)
- Freiformflächen-Effekt (Surface Relief Effekt), d.h. Beugungsstrukturen, die eine makroskopische Freiformfläche simulieren, in Kombination mit anderen visuellen Effekten
- Freiformflächen-Effekt (Surface Relief Effekt), d. h. Beugungsstrukturen, die eine makroskopische Freiformfläche simulieren, mit einer binären Gitterstruktur, bei der die Periodizität/Orientierung gemäß einer vorbestimmten Funktion variiert, mit dem Ziel einen räumlich hervorspringendes Element zu visualisieren.
- Beabstandung der Elementflächen von der Grundfläche zwischen 150 nm und 500 nm, überdeckt mit einem Material mit einem Brechungsindex zwischen 1,4 und 1,7.

Weiter ist es vorteilhaft, wenn die Anordnung der Grundelemente und die Flächenabmessung der Projektion der jeweiligen Grundelemente gemäß einer Funktion gewählt wird, welche sich aus der Binarisierung einer Funktion eines Hologramms, eines computergenerierten Hologramms oder eines Kinoforms ergibt, und bei der als Beabstandung der Elementflächen der Grundelemente der erste Abstand oder ein Vielfaches des ersten Abstands gewählt wird, wie oben ausgeführt. Auch hier wird die Farbinformation durch den ersten Abstand und die Blickwinkelbereiche, bei denen diese Farbeffekte auftreten, durch die von der Funktion bestimmte Ablenkung des Lichts durch Beugung bestimmt. Zur Binarisierung wird z.B. die Funktion, welche beispielsweise die Reliefhöhe h in Abhängigkeit von den x- und y-Koordinaten beschreibt, d. h. $h = F(x, y)$ mit einem Schwellwert bzw. Grenzwert hs verglichen und Grundelemente, in den Bereichen der Grundebene vorgesehen, in welchen $h \geq hs$ ist. Die Beabstandung der Elementfläche der Grundelemente von der Grundfläche wird hierbei durch den ersten Abstand und nicht durch h oder hs bestimmt. Ein derartiges Dekorelement zeigt einerseits den durch den ersten Abstand definierten ersten Farbeindruck im Streulicht- bzw. im gemäß der Hologrammfunktion gebeugten Licht sowie den zweiten Farbeindruck in der nullten Beugungsordnung. Andererseits zeigt es vor allem bei Beleuchtung mit stark gerichtetem Licht, insbesondere Laserlicht, zusätzlich eine Rekonstruktion des Hologramms. Auf diese Weise kann ein verstecktes Sicherheitsmerkmal direkt in die Fläche des Dekorelements, welche den Farbeffekt aufweist, integriert werden. Es ist auch möglich, als Hologramm das Bild einer homogenen Fläche zu wählen. Dies führt zu einer homogenen Farbfläche ähnlich wie bei den Zufallsstrukturen. Dennoch ist die Anordnung der Grundelemente in diesem Fall nicht pseudo-zufällig oder zufällig, sondern einer Funktion folgend. Die homogene Farbfläche kann hierbei auch nach vorne oder hinten aus der Ebene des Dekorelementes herausragen, wenn das Bild der Fläche, aus welchem das Hologramm berechnet wurde, vor oder hinter der Hologrammebene lag.

Gemäß eines weiteren bevorzugten Ausführungsbeispiels der Erfindung weist die Mikrostruktur Grundelemente mit unterschiedlicher Beabstandung der Elementfläche von der Grundfläche in Bezug auf eine senkrecht zur Grundebene stehende Richtung auf.

In einer oder mehreren zweiten und/oder dritten Zone des ersten Bereichs sind die Elementflächen der Grundelemente und die Grundfläche in einer senkrecht zur Grundebene in Richtung der Koordinatenachse z verlaufenden Richtung somit vorzugsweise beabstandet mit einem zweiten bzw. dritten Abstand, der sich vom ersten Abstand unterscheidet und so gewählt ist, dass insbesondere durch Interferenz des an der Grundfläche und den Elementflächen reflektierten Lichts im Auflicht im Streulicht oder in der nullten Beugungsordnung und/oder insbesondere durch Interferenz des durch die Elementflächen und die Grundfläche transmittierten Lichts im Durchlicht im Streulicht oder in der nullten Beugungsordnung eine dritte bzw. vierte Farbe in den ein oder mehreren zweiten bzw. dritten Zonen generiert wird, die sich von der ersten Farbe bzw. zweiten Farbe unterscheidet. Neben derartigen zweiten oder dritten Zonen können auch noch weitere Zonen vorgesehen sein, in welchen die Elementflächen der Grundelemente in einer senkrecht zur Grundebene in Richtung der Koordinatenachse z verlaufenden Richtung beabstandet sind mit einem oder mehreren weiteren Abständen, die sich von dem ersten, zweiten und dritten Abstand unterscheidet und so gewählt sind, dass insbesondere durch Interferenz des an der Grundfläche und den Elementflächen reflektierten Lichts im Auflicht und/oder insbesondere durch Interferenz des durch die Elementflächen und die Grundfläche transmittierten Lichts im Durchlicht entsprechende weitere Farben in den ein oder mehreren weiteren Zonen generiert werden, die sich von der ersten, dritten und vierten Farbe unterscheidet. Der zweite, dritte, und weitere Abstand wird wie oben dargelegt zur Erzielung der jeweiligen Farbe bei Betrachtung in der nullten Beugungsordnung oder zur Erzielung einer entsprechenden (komplementären) Farbe in einer von der nullten Beugungsordnung abweichenden Betrachtungsrichtung eingestellt, wobei vorzugsweise der zweite, dritte und weitere Abstand zwischen 150 nm und 1000 nm, vorzugsweise zwischen 200 nm bis 600 nm gewählt ist (bevorzugt für Effekte im Auflicht). Für Effekte in Durchlicht ist vorzugsweise der zweite, dritte und weitere Abstand zwischen 300 nm und 4000 nm, vorzugsweise zwischen 400 nm bis 2000 nm gewählt.

Durch eine derartige Ausgestaltung der Mikrostruktur lassen sich unterschiedliche Farbeindrücke im ersten Bereich sowohl bei Betrachtung in der nullten Beugungsordnung als auch beim Verkippen generieren, wodurch eine weitere Klasse von Farbeffekten durch das Dekorelement als Sicherheitsmerkmal bereitgestellt wird.

Gemäß einem bevorzugten Ausführungsbeispiel sind hierbei die eine oder mehreren ersten, zweiten, dritten und weiteren Zonen jeweils so ausgeformt, dass sie laterale Abmessungen parallel zur Grundebene im makroskopischen Bereich aufweisen und insbesondere laterale Abmessungen, beispielsweise Breite und Länge, von mehr als 300 $\mu$m, vorzugsweise zwischen 300 $\mu$m bis 50 mm aufweisen. Durch die Ausformung dieser ersten, zweiten, dritten, vierten und/oder weiteren Zonen als Muster und/oder Hintergrundbereiche kann so eine optisch erkennbare Information in dem ersten Bereich durch die Mikrostrukturen bereitgestellt werden, welche insbesondere bei Betrachtung in der nullten Beugungsordnung und/oder bei einem speziellen Verkippen aus der nullten Beugungsordnung sichtbar wird.

Vorzugsweise wird in den ein oder mehreren ersten, zweiten und/oder dritten Zonen die Flächenbelegung der jeweiligen Zonen mit den Grundelementen lokal variiert. Durch eine derartige Variation der Flächenbelegung wird hierbei ermöglicht, lokal den Farbhelligkeitswert der jeweiligen Zone zu modulieren und beispielsweise zusätzlich eine Information nach Art eines Graustufenbildes vorzusehen.

Gemäß einem weiteren Ausführungsbeispiel der Erfindung weisen eine oder mehrere der ersten, zweiten, dritten und/oder weiteren Zonen zumindest eine laterale Abmessung parallel zur Grundebene von weniger als 300 $\mu$m, vorzugsweise zwischen 20 $\mu$m und 250 $\mu$m, weiter bevorzugt zwischen 30 $\mu$m und 150 $\mu$m auf. Durch eine derartige Ausgestaltung der Zonen lassen sich zahlreiche optische Effekte generieren, welche insbesondere durch additive Farbmischung der von den ersten, zweiten, dritten und/oder weiteren Zonen erzeugten Zonen generiert werden.

So ist es beispielsweise möglich, dass in ein oder mehreren dieser ersten, zweiten, dritten und/oder weiteren Zonen die Flächenbelegung der jeweiligen Zonen mit den Grundelementen unterschiedlich gewählt ist, um so eine unterschiedliche Farbhelligkeit der jeweiligen Zonen zu erzielen. Zwei oder mehrere der ersten, zweiten, dritten bzw. weiteren Zonen unterscheiden sich so in der Flächenbelegung der jeweiligen Zone mit den Grundelementen und weisen so zwar denselben Farbwert, jedoch eine unterschiedliche Farbhelligkeit auf.

Weiter ist es vorteilhaft, eine oder mehrere vierte Zonen mit einer Mikrostruktur vorzusehen, in welchen die Mikrostruktur von einer Mottenaugenstruktur gebildet ist, und die mit der Mottenaugenstruktur versehenen Zonen sowie erste, zweite, dritte und/oder weitere Zonen nebeneinander anzuordnen, um so lokal eine Variation der Farbhelligkeit zu erzielen. Als Mottenaugenstrukturen werden hierbei vorzugsweise Beugungsstrukturen mit einer Beabstandung der Strukturelemente unterhalb der Wellenlänge des sichtbaren Lichtes verwendet, vorzugsweise unterhalb 400 nm verwendet. Diese Strukturen werden vorzugsweise von Kreuzgittern oder Hexagonalgittern mit einer Periode im Bereich von 200 nm bis 400 nm und einer Gittertiefe/Periodenverhältnis zwischen 0,5 und 2 bereitgestellt.

Gemäß einem weiteren bevorzugten Ausführungsbeispiel der Erfindung werden erste, zweite, dritte und/oder weitere Zonen zur Generierung eines Mehrfarben- oder Echtfarbenbildes eingesetzt. Vorzugsweise wird hierzu ein Ausgangsbild in eine Vielzahl von Bildpunktbereiche unterteilt. Für jeden der Bildpunktbereiche des Ausgangsbildes wird ein zugeordneter Farbwert und ein zugeordneter Farbhelligkeitswert bestimmt. Für jeden der Bildpunktbereiche des Ausgangsbildes wird in dem Dekorelement ein zugeordneter Bildpunktbereich bereitgestellt, wobei jeder Bildpunktbereich zumindest eine laterale Abmessung parallel zur Grundebene von weniger als 300 $\mu$m aufweist, insbesondere weniger als 150 $\mu$m aufweist. Die Bildpunktbereiche des Dekorelements werden jeweils mit einer oder mehreren Zonen ausgewählt aus ersten, zweiten, dritten, vierten und weiteren Zonen belegt. Die Auswahl der Zonen sowie der Flächenanteile der jeweiligen Zone an dem Bildpunktbereich wird hierbei so gewählt, dass sich für einen definierten Blickwinkel (z. B. 25 Grad) der zugeordnete Farbwert und Farbhelligkeitswert des Bildpunktbereiches ergibt.

Der Farbwert zumindest eines Bildpunktbereiches des Dekorelements ergibt sich hierbei vorzugsweise durch additive Farbmischung der von zwei oder mehreren unterschiedlichen Zonen der Mikrostruktur generierten Farben, welche in dem Bildpunktbereich angeordnet sind. Der Flächenanteil dieser Zonen an dem Bildpunktbereich bestimmt hierbei den Farbwert des jeweiligen Bildpunktbereichs. Die Gesamtfläche dieser Zonen und/oder der Flächenanteil der mit den Mottenaugenstrukturen belegten Zonen bestimmt den Farbhelligkeitswert des jeweiligen Bildpunktbereichs.

Werden als Grundelemente in mindestens einer der ersten, zweiten, dritten, vierten und/oder weiteren Zonen asymmetrische Grundelemente ausgewählt, so variiert der Farbeindruck des jeweiligen Bildpunktbereichs und damit das Erscheinungsbild des Mehrfarbenbildes beim Drehen um eine senkrecht auf der Grundebene stehende Achse. Die Vorzugsrichtung der asymmetrischen Grundelemente kann in allen Zonen mit asymmetrischen Grundelementen gleich sein, sie kann aber auch variieren. Hierdurch ist es möglich, ein entsprechendes, sich dynamisch beim Drehen zeigendes Mehr- oder Echtfarbenbild im dem Bildbereich durch die Mikrostruktur zu generieren. Das Bild kann beim Drehen beispielsweise heller und dunkler werden oder es kann von Echtfarben zu Falschfarben oder zumindest verfälschte Farben wechseln.

Die ersten, zweiten, dritten und/oder weiteren Zonen des ersten Bereichs können beliebig mit den oben beschriebenen ersten Teilbereichen, zweiten Teilbereichen, dritten Teilbereichen und Zellen überlappen. Die Ausformung der Projektion des jeweiligen Grundelements auf die Grundebene sowie die Anordnung der Grundelemente auf der Grundebene wird gemäß den obigen Erläuterungen zu den ersten, zweiten und dritten Teilbereichen sowie Zellen bestimmt. Der Abstand der Elementfläche von der Grundebene wird bezüglich der jeweiligen Zone gewählt, und so beispielsweise hierfür der erste Abstand, der zweite Abstand, der dritte Abstand, oder der weitere Abstand gewählt. Hierdurch ergeben sich weitere interessante Kombinationseffekte, welche die Fälschungssicherheit weiter erhöhen.

Besonders vorteilhaft ist es hierbei, die ersten, zweiten und dritten Zellen jeweils mit ersten, zweiten und dritten Zonen in Überdeckung anzuordnen, und so die Elementflächen der Grundelemente und die Grundfläche in einer senkrecht zur Grundebene verlaufende Richtung in den ein oder mehreren ersten Zellen mit dem ersten Abstand, in den ein oder mehreren zweiten Zellen mit dem zweiten Abstand und den ein oder mehreren dritten Zellen mit dem dritten Abstand zu beabstanden. Weiter ist es auch möglich, lediglich einen Teil der ersten, zweiten und dritten Zellen als erste Zonen, einen Teil der ersten, zweiten und dritten Zellen als zweite Zonen und einen Teil der dritten Zellen als erste, zweite und dritte Zonen auszubilden, um so beispielsweise ein sich mit dem Betrachtungswinkel verändernde Mehrfarbenbilder oder sich beim Drehen um eine Senkrechte zur Grundebene der Achse verändernde Mehrfarbenbilder bereitzustellen. Weiter können so auch in einer Zelle mehrere zweite Teilbereiche vorgesehen sein, welche als unterschiedliche erste, zweite, dritte, und/oder weitere Zonen ausgebildet sind und welche sich so jeweils in der Beabstandung der Elementfläche von der Grundfläche unterscheiden. Durch die zusätzliche additive Farbmischung ergeben sich auch hier in Abhängigkeit von der Wahl der Variationsbereiche der Parameter interessanten Farbwechseleffekte. Weiter kann auch beispielsweise durch die entsprechende Überlagerung eines dritten Teilbereiches durch erste, zweite, dritte und/oder weitere Zonen die erste Information mit einer Mehrfarben-Information überlagert werden, wodurch sich einprägsame Farbeffekte ergeben.

Gemäß einem weiteren bevorzugten Ausführungsbeispiel der Erfindung ist es möglich, die Mikrostruktur in dem ersten Bereich nicht nur zweistufig, sondern auch mehrstufig zur Erhöhung der Farbreinheit auszubilden. So weisen eines oder mehrere der Grundelemente vorzugsweise eine oder mehrere weitere Elementflächen auf, die jeweils im Wesentlichen parallel zu der Grundfläche verlaufen. Die eine oder mehreren weiteren Elementflächen sind in Richtung der z-Achse von der Grundfläche bei Anordnung des Grundelements in einer der ersten Zonen mit einem Vielfachen des ersten Abstandes, bei Anordnung der Grundelemente in einer der zweiten Zonen mit einem Vielfachen des zweiten Abstands und bei Anordnung des Grundelements in einer der dritten Zonen mit einem Vielfachen des dritten Abstands beabstandet, entsprechend bei einer Anordnung in der weiteren Zone mit dem weiteren Abstand beabstandet. Je mehr Stufen die Grundelemente aufweisen, desto reiner bzw. stärker ist der Farbeindruck. Die höhere Farbreinheit von mehrstufigen Grundelementen ist insbesondere für Dekorelemente mit Farbmischung und Echtfarbenbildern hilfreich. Für einen möglichst starken Farbeindruck bzw. eine möglichst hohe Farbreinheit ist es vorteilhaft, wenn die Fläche aller Elementflächen der Grundelemente in etwa gleich groß ist.

Weiter ist es vorteilhaft, die Elementflächen und die Grundfläche zueinander geringfügig verkippt auszubilden, insbesondere diese zwischen 5 Grad und 30 Grad, weiter bevorzugt zwischen 5 Grad bis 15 Grad gegeneinander verkippt auszubilden. Hierdurch kann das Farbspektrum sowie der Streuwinkelbereich erweitert werden. Allerdings schwächt eine zu starke Verkippung den Farbeffekt ab. Die Verkippung ist besser geeignet für binäre (zweistufige) als für mehrstufige Grundelemente.

Weiter ist es vorteilhaft, in dem ersten Bereich oder in einem vierten Teilbereich des ersten Bereichs die Elementfläche zur Bereitstellung einer versteckten Information zu modulieren, welche insbesondere mittels eines Lasers oder mittels eines Polarisators auslesbar ist. So ist es beispielsweise möglich, die Elementflächen gemäß der Oberfläche eines Hologramms zu modulieren, welches lediglich bei Bestrahlung mit einem Laser seine Informationen zeigt, um so eine versteckte Information bereitzustellen. Weiter ist es auch möglich, die Elementfläche und/oder Grundfläche mit einem Beugungsgitter einer Gitterperiode zwischen 100 nm bis 2000 nm, weiter bevorzugt zwischen 200 nm bis 500 nm, zu modulieren, um so eine mittels eines Polarisators lesbare Information einzubringen. Die Modulationstiefe des Hologramms bzw. der Beugungsgitter ist bevorzugt kleiner als 100 nm, besonders bevorzugt kleiner als 50nm und weiter bevorzugt kleiner als 30 nm. Dadurch stört die Modulation die Interferenz, welche den Farbeffekt erzeugt, nur gering.

Der Begriff "im Wesentlichen parallel zu der Grundfläche verlaufende Elementfläche" bedeutet in diesem Zusammenhang, dass über den Bereich der Elementfläche die Beabstandung der Elementfläche zu der Grundfläche in einem Wertebereich verläuft, so dass, wie bereits oben ausgeführt, durch Interferenz des an der Elementfläche und der Grundfläche reflektierten bzw. durch diese transmittierten Lichts in der nullten Beugungsordnung eine Farbe generiert wird, wie dies oben erläutert worden ist. Vorzugsweise variiert hierzu die Beabstandung der Elementfläche des Grundelements von der Grundfläche in Richtung der z-Achse nicht mehr als 20 % weiter bevorzugt nicht mehr als 10% von ihrem Mittelwert.

Gemäß einem bevorzugten Ausführungsbeispiel der Erfindung ist die Mikrostruktur zumindest bereichsweise

**EP 3 422 056 B2**

zwischen einer ersten Schicht des Dekorelements und einer zweiten Schicht des Dekorelements abgeformt, wobei die erste Schicht eine transparente Schicht mit einem Brechungsindex $n_1$ und die zweite Schicht eine Reflexionsschicht ist, insbesondere eine Metallschicht eine HRI-Schicht (HRI = High Refraction Index) oder ein reflektives Multischichtsystem ist. Die Metallschicht kann opak oder semi-transparent sein. Das Material der Metallschicht kann sehr gut spiegelnd (z. B. Aluminium oder Silber) sein oder auch teilweise absorbierend (z. B. Kupfer oder Chrom) sein. Durch geschickte Wahl des Materials der Reflexionsschicht kann der Farbeffekt noch deutlicher sichtbar gemacht werden.

Unter transparente Schicht wird hierbei eine im sichtbaren Wellenlängenbereich eine Transmission von zumindest 50 %, weiter bevorzugt von zumindest 80 %, aufweisende Schicht verstanden.

Wird ein derartiges Element in Reflexion betrachtet, so bestimmt sich der erste, zweite, bzw. dritte Abstand vorzugsweise durch den Brechungsindex $n_1$ multipliziert mit dem optischen Abstand, welcher durch die Erfüllung der $\lambda/2$-Bedingung mit für eine Wellenlänge $\lambda$ im Bereich des sichtbaren Lichts bestimmt ist. Hierbei muss allerdings der Betrachtungswinkel berücksichtigt werden.

Weiter ist es auch möglich, dass die Mikrostruktur zumindest bereichsweise zwischen einer ersten Schicht des Dekorelements und einer dritten Schicht des Dekorelements abgeformt ist, wobei die erste Schicht eine transparente Schicht mit einem Brechungsindex $n_1$ und die dritte Schicht eine transparente Schicht mit einem Brechungsindex $n_2$ ist, und wobei sich der Brechungsindex $n_1$ und der Brechungsindex $n_2$ zumindest um 0,2 unterscheidet, sich vorzugsweise zwischen 0,4 und 1,5 unterscheidet. Wird eine derartige Mikrostruktur in Transmission betrachtet, so wird der erste Abstand, der zweite Abstand bzw. dritte Abstand vorzugsweise durch die Gleichung

$$\lambda = \frac{\left| n_1 - n_2 \right| \times h}{\cos(\alpha)}$$

bestimmt.

Gemäß einem weiteren bevorzugten Ausführungsbeispiel der Erfindung weist die Mikrostruktur einen zweiten Bereich auf, in welchem die Mikrostruktur in Form eines linearen oder gekreuzten Sinus- oder Rechteck-Beugungsgitters, eines 2D/3D- oder 3D-Hologramms, eine Kinegrams®, einer Mikrolinsenstruktur, eines farbigen oder achromatischen Blaze-Gitters, einer Makrostruktur, einer isotrop oder anisotrop Mattstruktur, einer Kombination aus obigen Strukturen, eines Volumenhologramms, eines Dünnschichtfarbsystems oder dergleichen ausgebildet ist, welche eine weitere optisch erkennbare Information generiert. Vorzugsweise weisen die vom ersten Bereich und vom zweiten Bereich generierten optischen Informationen sich ergänzende oder zueinander in Beziehung stehende Informationen auf, wodurch Fälschungsversuche unmittelbar erkennbar werden. Der erste und zweite Bereich können beispielsweise mosaikartig verschachtelt sein. Der zweite Bereich kann aber auch in Form von feinen Linien, z. B. Guillochen, über den ersten Bereich angeordnet sein, etc. Der zweite Bereich kann auch eine ein- oder mehrfarbig bedruckte Fläche sein.

Das Dekorelement ist vorzugsweise in Form einer Transferfolie, einer Laminierfolie, eines Sicherheitsfadens oder eines Etiketts ausgebildet. Das Dekorelement weist so neben der Mikrostruktur vorzugsweise noch eine oder mehrere Kunststoffschichten und/oder Papierschichten, Kleberschichten, Haftvermittlungsschichten und auch weitere Dekorschichten auf, welche vorzugsweise noch weitere Informationen in dem Dekorelement bereitstellen. Das Dekorelement kann eingesetzt werden, um einen besonders guten Schutz vor Fälschungen zu schaffen. Es wird auf Sicherheitsdokumenten wie Banknoten, Kreditkarten, Passdokumenten, Personalausweisen etc. eingesetzt, um eine Nachahmung zu erschweren. Dekorelemente mit diffraktiver Struktur können auch in eine Kreditkarte, eine ID-Karte, in ein Passdokument, einen Personalausweis etc. im Rahmen eines Schichtaufbaus integriert sein. Aufkleber mit Hologrammen befinden sich auf zu schützenden kommerziellen Produkten oder Waren. Auch Verpackungen von zu schützenden kommerziellen Produkten oder Waren oder Druckerzeugnissen werden mit derartigen Dekorelementen versehen, als Fälschungsschutz und/oder als Dekorationselement zur Bereitstellung eines dekorativen Effekts.

Aspekte verschiedener Ausführungsformen der Erfindung sind in den Ansprüchen spezifiziert.

Im Folgenden wird die Erfindung anhand von mehreren Ausführungsbeispielen unter Zuhilfenahme der beiliegenden Zeichnungen beispielhaft erläutert.

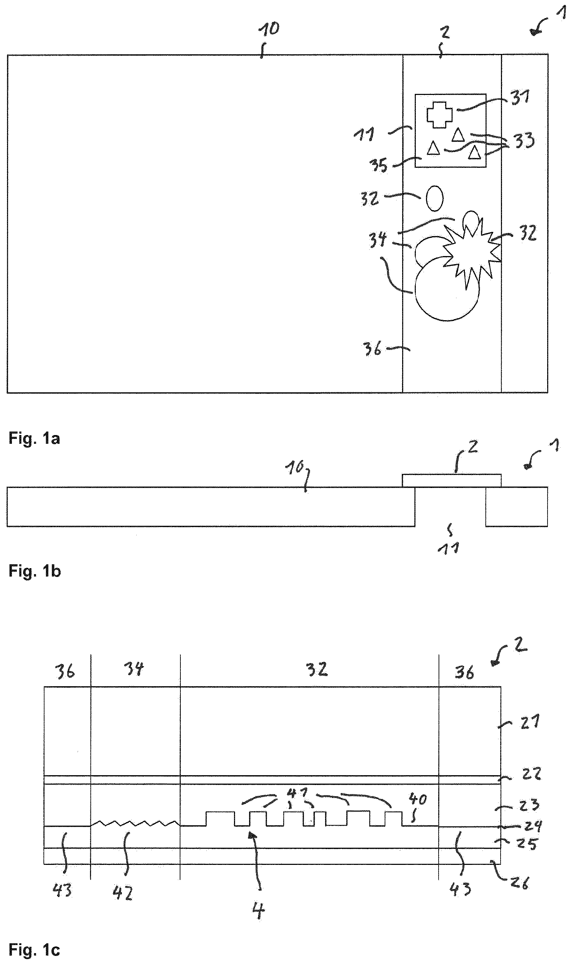

Fig. 1a      zeigt eine schematische Draufsicht auf ein Sicherheitsdokument mit einem Dekorelement.

Fig. 1b      zeigt eine schematische Schnittdarstellung des Sicherheitsdokuments nach Fig. 1a.

Fig. 1c      zeigt eine schematische Schnittdarstellung eines Ausschnitts des Dekorelements nach Fig. 1a.

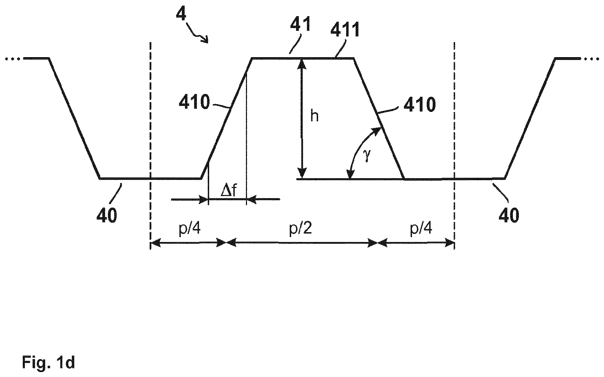

Fig. 1d      zeigt eine schematische Schnittdarstellung eines Ausschnitts einer Mikrostruktur

| | |
|---|---|
| Fig. 2a und Fig. 2b | zeigen jeweils eine schematische, dreidimensionale Darstellung einer Mikrostruktur. |
| Fig. 2c | zeigt eine schematische Draufsicht auf eine Mikrostruktur mit mehreren Grundelementen. |
| Fig. 3a | zeigt eine schematische Schnittdarstellung eines Dekorelements mit mehreren Grundelementen. |
| Fig. 3b | zeigt eine schematische Draufsicht auf zwei Grundelemente zur Verdeutlichung des an den Grundelementen gestreuten Lichts. |
| Fig. 3c | zeigt eine schematische Schnittdarstellung eines Dekorelements mit mehreren Grundelementen. |
| Fig. 4 | zeigt eine schematische Draufsicht auf eine Mikrostruktur mit mehreren Grundelementen. |
| Fig. 5a | zeigt eine schematische Draufsicht auf einen Bereich einer Mikrostruktur mit mehreren asymmetrischen Grundelementen. |
| Fig. 5b | zeigt eine schematische Draufsicht auf einen Bereich einer Mikrostruktur mit mehreren asymmetrischen Grundelementen. |
| Fig. 5c | zeigt eine schematische Draufsicht auf einen Bereich einer Mikrostruktur, welche Teilbereiche mit unterschiedlich orientierten asymmetrischen Grundelementen aufweist. |
| Fig. 5d | zeigt eine schematische Draufsicht auf einen Bereich einer Mikrostruktur mit asymmetrischen und symmetrischen Grundelementen. |
| Fig. 6a und Fig. 6b | zeigen jeweils eine schematische Darstellung eines Bereichs einer Mikrostruktur mit asymmetrischen Grundelementen bei unterschiedlicher Beleuchtungs- und/oder Betrachtungsrichtung. |
| Fig. 7 | zeigt eine schematische Draufsicht auf mehrere Grundelemente. |
| Fig. 8a | zeigt eine schematische dreidimensionale Darstellung einer Mikrostruktur mit mehreren Grundelementen. |
| Fig. 8b | zeigt eine schematische Schnittdarstellung der Mikrostruktur nach Fig. 8a. |
| Fig. 9a | zeigt eine schematische Draufsicht auf eine Zelle eines Dekorelements, welche in mehrere Teilbereiche unterteilt ist, die jeweils mit Grundelementen belegt sind. |
| Fig. 9b | zeigt eine schematische Darstellung zur Verdeutlichung des Aufbaus der Mikrostrukturen im Bereich der Zelle nach Fig. 9a. |
| Fig. 10a | zeigt eine Fotografie einer Draufsicht auf einen Bereich des Dekorelements. |
| Fig. 10b | zeigt ein Spektrum eines ersten Farbeindrucks des Dekorelements nach Fig. 10a sowie das dazugehörige Farbdiagramm. |
| Fig. 11a | zeigt eine schematische Draufsicht auf einen Ausschnitt einer Mikrostruktur mit mehreren Grundelementen. |
| Fig. 11b | zeigt eine schematische Schnittdarstellung eines Dekorelements im Bereich des Ausschnitts nach Fig. 11a. |
| Fig. 11c und Fig. 11d | zeigen jeweils Diagramme, welche die wellenlängenabhängige Beugungseffizienz einer Mikrostruktur verdeutlichen. |
| Fig. 12a | zeigt Diagramme zur Verdeutlichung der Binarisierung einer Funktion. |

Fig. 12b      zeigt schematische Draufsichten auf Darstellungen.

Fig. 12c      zeigt schematische Draufsichten auf Schnitte der Darstellungen nach Fig. 12b

Fig. 12d      zeigt ein Foto eines binären Hologramms.

Fig. 13a      zeigt eine schematische dreidimensionale Darstellung eines Ausschnitts einer Mikrostruktur mit zwei Grundelementen unterschiedlicher Höhe.

Fig. 13b      zeigt mehrere schematische Draufsichten auf einen Bereich eines Dekorelements.

Fig. 13c      zeigt eine schematische Draufsicht auf einen Bereich eines Dekorelements bei Betrachtung unter unterschiedlichen Betrachtungs-/Beleuchtungswin keln.

Fig. 14a      zeigt eine schematische Draufsicht auf einen Bildbereich eines Dekorelements,

Fig. 14b      zeigt eine schematische Draufsicht auf einen Ausschnitt des Bildbereichs nach Fig. 14a mit mehreren Bildpunktbereichen.

Fig. 14c      zeigt eine schematische Schnittdarstellung eines Ausschnitts des Dekorelements nach Fig. 14b.

Fig. 15      zeigt mehrere Diagramme zur Verdeutlichung der Modulierung von Elementflächen einer Mikrostruktur mit mehreren Grundelementen.

Fig. 16      zeigt eine schematische dreidimensionale Darstellung eines Ausschnitts aus einer Mikrostruktur.

Fig. 17      zeigt eine schematische Schnittdarstellung eines Dekorelements.

Fig. 1a und Fig. 1b zeigen eine Draufsicht bzw. eine Schnittdarstellung eines Sicherheitsdokuments 1, welches mit einem Dekorelement 2 versehen ist.

Bei dem Sicherheitsdokument 1 handelt es sich bei der Ausführungsform nach Fig. 1a und Fig. 1b um eine Banknote. Es ist jedoch auch möglich, dass es sich bei dem Sicherheitsdokument 1 um ein beliebiges anderes Sicherheitsdokument, beispielsweise ein ID-Dokument, wie einen Personalausweis, einen Reisepass oder einen Firmenausweis, um eine Kreditkarte oder Geldkarte, um ein Softwarezertifikat, um einen Sicherheitsaufkleber zur Warensicherung oder um ein Sicherheitsetikett handelt.

Das Sicherheitsdokument 1 weist ein Trägersubstrat 10 auf, auf welches das Dekorelement 2 appliziert ist. Das Trägersubstrat 10 besteht hierbei vorzugsweise aus einem Papiersubstrat. Es ist jedoch auch möglich, dass das Trägersubstrat 10 aus einem Kunststoffsubstrat oder aus einem mehrschichtigen Substrat mit einem oder mehreren Kunststoff- und/oder Papierschichten besteht. Weiter ist es auch möglich, dass in das Trägersubstrat 10 Sicherheitsmerkmale, beispielsweise Wasserzeichen oder Mikroperforationen, eingebracht sind, und dass das Trägersubstrat 10 mit weiteren Dekorelementen, Aufdrucken und Ähnlichem versehen ist, welche weitere Sicherheitsmerkmale zur Verfügung stellen.

Das Dekorelement 2 weist - wie in Fig. 1a gezeigt - eine streifenförmige Formgebung auf und überspannt die gesamte Breite des Trägersubstrats 10 von der oberen Längskante des Trägersubstrats bis zur unteren Längskante des Trägersubstrats. In dem Trägersubstrat 10 ist weiter ein transparentes Fenster 11 eingebracht, welches von dem Dekorelement 2 abgedeckt ist. Das transparente Fenster 11 kann - wie in Fig. 1b gezeigt - in Form einer Ausnehmung in dem Trägersubstrat 10 realisiert sein, welche beispielsweise durch eine entsprechende Stanzung oder ein entsprechendes Wasserzeichen in das Trägersubstrat 10 eingebracht ist. Es ist jedoch auch möglich, dass das transparente Fenster 11 von einem transparenten Bereich des Trägersubstrats gebildet wird, insbesondere dann, wenn das Trägersubstrat aus einem transparenten Kunststoffsubstrat besteht.

Das Dekorelement 2 weist nun mehrere Bereiche auf, in welchen im Auflicht oder im Durchlicht von dem Dekorelement 2 ein optischer Effekt generiert wird. In Fig. 1a sind von diesen Bereichen zum einen Bereiche 31 und 33 gezeigt, welche im Bereich des transparenten Fensters angeordnet sind und welche in Durchlichtbetrachtung einen optischen Effekt generieren. Weiter sind Fig. 1a Bereiche 32 und 34 gezeigt, in welchen in Auflichtbetrachtung, d. h. in Reflexion ein optischer Effekt generiert wird. Die Bereiche 31 und 33 sind weiter von einem Hintergrundbereich 35 umgeben, in dem das Dekorelement 2 beispielsweise bei Durchlichtbetrachtung ein transparentes Erscheinungsbild zeigt. Weiter sind die Bereiche 32 und 34 von einem Hintergrundbereich 36 umgeben, in welchem das Dekorelement 2 in Reflexion einen optischen Effekt zeigt, beispielsweise ein metallisch glänzendes oder mattes oder auch farbiges Erscheinungsbild zeigt.

Das Dekorelement 2 weist in dem Bereich 31, 32, 33 und 34 eine Mikrostruktur auf, welche wie oben beschrieben im Auflicht oder im Durchlicht einen optischen Effekt generiert. Die Mikrostruktur weist hierbei in den Bereichen 31 und 32 eine spezielle Ausgestaltung auf und umfasst eine Grundfläche und mehrere Grundelemente, die jeweils eine gegenüber der Grundfläche erhöhte und versenkte Elementfläche und einen zwischen der Elementfläche und der Grundfläche angeordnete Flanke aufweisen. Die genaue Ausgestaltung der Mikrostruktur in den Bereichen 31 und 32 wird im Folgenden detailliert anhand der Figuren Fig. 1c bis Fig. 16 erläutert.

In den Bereich 33 und 34 ist die Mikrostruktur in Form eines Beugungsgitters, eines Hologramms, eines KINEGRAM®, einer Mikrolinsenstruktur, eines Blaze-Gitters, einer Makrostruktur oder einer sonstigen, sich von der Ausbildung der Mikrostruktur in dem Bereich 31 und 32 unterscheidenden Reliefstruktur ausgeformt, so dass das Dekorelement 2 in den Bereichen 31 und 32 einerseits und in den Bereichen 33 und 34 andererseits unterschiedliche optische Effekte, insbesondere unterschiedliche optisch variable Effekte erzeugt. Vorzugsweise sind - wie in der Figur 1a angedeutet - die Bereiche 32 und 34 und ggf. auch die Bereiche 31 und 33 benachbart zueinander angeordnet und bilden vorzugsweise sich ergänzende und/oder mosaikartig verschachtelte Darstellungen, um so die Fälschungssicherheit weiter zu erhöhen.

Die Anordnung der Bereiche 31 und 33 im Bereich des transparenten Fensters 11 sowie die Anordnung der Bereiche 32 und 34 im reflektiven Bereich des Dekorelements 2 ist nicht auf die in Fig. 1a gezeigte Anordnung beschränkt, sondern sowohl die Anzahl als auch die Anordnung der Bereiche 31 bis 36 kann beliebig erfolgen. Weiter kann sich auch die Formgebung des Dekorelements 2 von der in Fig. 1 a und Fig. 1b gezeigten Formgebung unterscheiden und beispielsweise die Form eines Patches oder eines Sicherheitsfadens besitzen. Weiter ist es auch möglich, dass das Dekorelement 2 nicht über einen transparenten Bereich verfügt, der für eine Durchlichtbetrachtung ausgelegt ist, und somit lediglich über die Bereiche 34, 32 und 36 verfügt. Umgekehrt kann es auch sein, dass das Dekorelement 2 lediglich für die Durchlichtbetrachtung ausgelegt ist und somit lediglich über die Bereiche 31, 33 und 35 verfügt.

Das Dekorelement 2 ist dem Ausführungsbeispiel nach Fig. 1a und Fig. 1b als Laminierfolie ausgebildet. Gemäß weiteren bevorzugten Ausführungsbeispielen ist das Dekorelement 2 als Transferfolie, insbesondere als Heißprägefolie, oder als Sicherheitsfaden ausgebildet. Weiter ist es auch von Vorteil, dass Dekorelement 2 in das Schichtgebilde des Sicherheitsdokuments 1 zu integrieren, beispielsweise wenn es sich bei dem Sicherheitsdokument 1 um ein kartenförmiges Sicherheitsdokument, beispielsweise eine Kreditkarte oder ein ID-Dokument, insbesondere um eine multilagige Polycarbonat-Karte, handelt. In diesem Fall wird das Dekorelement von einer oder mehreren Schichten des Sicherheitsdokuments bereitgestellt. Es ist weiter auch möglich, dass das Dekorelement 2 nicht Teil eines Sicherheitsdokuments ist und beispielsweise in Form einer Transferfolie, eines Etiketts oder eines Aufklebers ausgebildet ist.

Fig. 1c zeigt nun eine Schnittdarstellung eines Ausschnitts des Dekorelements 2, bei einer Ausbildung des Dekorelements 2 als Laminierfolie.

Das Dekorelement 2 weist bei diesem Ausführungsbeispiel eine Trägerfolie 21, eine Haftvermittlungsschicht 22, eine Kunststoffschicht 23, eine Reflexionsschicht 24, eine Kunststoffschicht 25 und eine Klebeschicht 26 auf.

Die Trägerfolie 21 besteht vorzugsweise aus einer transparenten Kunststofffolie, beispielsweise einer PET oder BOPP-Folie, einer Schichtdicke zwischen 20 $\mu$m und 250 $\mu$m. Die Oberfläche der Trägerfolie kann mit einer oder mehrerer Funktionsschichten versehen sein, z. B. zur Verbesserung der Bedruckbarkeit. Die Kunststoffschicht 23 besteht vorzugsweise aus einer transparenten Kunststoffschicht, welche im Bereich des sichtbaren Lichts eine Transmissivität von mehr als 50 %, vorzugsweise von mehr als 80 % aufweist. Es ist hierbei auch möglich, dass die Kunststoffschicht 23 oder die Trägerfolie 21 auch mit einem Farbstoff eingefärbt ist. Eine Einfärbung kann die Farbeindrücke verändern und beeinflusst insbesondere auch die Ausbildung der komplementären Farbeindrucke.

Bei der Kunststoffschicht 23 handelt es sich vorzugsweise um eine Lackschicht, welche die Abformung einer Reliefstruktur in eine Oberfläche der Kunststoffschicht 23 durch thermisches Replizieren oder mittels UV-Replikation ermöglicht. Bei der Kunststoffschicht 23 handelt es sich so vorzugsweise um einen thermoplastischen Lack oder um einen UV-härtbaren Lack.

Bei der Reflexionsschicht 24 handelt es sich vorzugsweise um eine opake Reflexionsschicht, welche vorzugsweise im Bereich des für das menschliche Auge sichtbaren Licht eine Transmissivität von weniger als 50 %, weiter bevorzugt von weniger als 20 % aufweist. Diese Werte beziehen sich auf Bereiche ohne Mikrostruktur, d. h. Spiegelflächen.

Bei der Reflexionsschicht 24 handelt es sich vorzugsweise um Reflexionsschicht aus Metall, insbesondere aus Aluminium, Silber, Chrom oder Kupfer. Weiter ist es auch möglich, dass die Reflexionsschicht 24 aus einem hochbrechenden Material (HRI = High Refraction Index), beispielsweise aus ZnS oder TiO$_2$ besteht. Die Reflexionsschicht 24 weist bei ihrer Ausgestaltung als Metallschicht vorzugsweise eine Dicke im Bereich von 10 nm bis 100 nm und bei ihrer Ausgestaltung aus einem HRI-Material zwischen 40 nm und 200 nm auf. Die Reflexionsschicht 24 kann vollflächig oder nur partiell vorliegen.

Weiter ist es auch möglich, dass die Reflexionsschicht 24 aus einem Multischichtsystem besteht. Die Reflexionsschicht 24 kann so beispielsweise aus einer Abfolge von hoch- und niederbrechenden Materialien bestehen oder aus einer Abfolge einer Absorptionsschicht, einer Distanzschicht und einer Reflexionsschicht bestehen und so beispielsweise als Fabry-Pérot-Filter ausgebildet sein. Ein derartiges Multischichtsystem besteht so beispielsweise aus einer semi-transparenten Metallschicht, einer dielektrischen Abstandsschicht und einer Spiegelschicht, beispielsweise einer 8 nm-Chromschicht, einer 400 nm-SiO$_2$-Schicht oder Polymerschicht und einer 50 nm-Aluminiumschicht. Die Reflexionsschicht 24 kann vollflächig oder nur partiell vorliegen.

Die Kunststoffschicht 25 besteht vorzugsweise aus einem transparenten polymeren Material und weist optional - wie weiter unten erläutert - zumindest im Bereich der Bereiche 31 einen Brechungsindex auf, welcher sich vom Brechungsindex der Kunststoffschicht 23 um mindestens 0,2 unterscheidet. Wenn keine Reflexionsschicht 24 vorgesehen ist, kann die Kunststoffschicht 25 die Funktion einer Reflexionsschicht erfüllen.

Die Kunststoffschichten 23 und 25 weisen vorzugsweise eine Schichtdicke zwischen 1 μm und 8 μm auf.

Die Kleberschicht 26 weist eine Schichtdicke zwischen 1 μm und 10 μm auf und dient zur Festlegung des Dekorelements 2 auf dem Trägersubstrat 10. Die Kleberschicht 26 besteht vorzugsweise aus einem Heißkleber, einem Kaltkleber und/oder aus einem UV-härtbaren Kleber. Es ist hierbei auch möglich, dass die Kleberschicht 26 zweilagig oder mehrlagig ausgebildet ist.

Das Dekorelement 2 ist weiter im Bereich des transparenten Fensters 11 transparent ausgebildet, so dass sämtliche im Bereich des transparenten Fensters 11 vorgesehenen Schichten des Dekorelements 2 transparent ausgebildet sind. So ist beispielsweise die Kleberschicht 26 vorzugsweise auch transparent und klar ausgebildet, mindestens im Bereich des transparenten Fensters 11 transparent und klar ausgebildet.

Das Dekorelement 2 kann neben den in Fig. 1c gezeigten Schichten noch über weitere Dekorschichten, Haftvermittlungsschichten, Kleberschichten und Trägerschichten verfügen. Weiter ist es auch möglich, dass das Dekorelement lediglich aus der Schicht 23 besteht, und insbesondere auch auf die Haftvermittlungsschicht 22, die Trägerfolie 21, die Kunststoffschicht 25 und/oder die Kleberschicht 26 verzichtet wird.

Zur Herstellung des Dekorelements 2 werden auf die Trägerfolie 21 zunächst die Haftvermittlungsschicht 22 und sodann die Kunststoffschicht 23 aufgebracht. Sodann wird in die Kunststoffschicht 23 mittels eines Replizierwerkzeugs, beispielsweise einer Replizierwalze, eine Mikrostruktur 4 abgeformt. Das Abformen der Mikrostruktur 4 kann hierbei beispielsweise unter Einsatz von Hitze und Druck bei Verwendung eines thermoplastischen Replizierlacks für die Kunststoffschicht 23 oder mittels anschließender UV-Bestrahlung bei Einsatz eines UV-härtbaren Replizierlacks als Kunststoffschicht 23 erfolgen. Anschließend wird die Reflexionsschicht 24 aufgebracht, beispielsweise aufgedampft oder aufgesputtert oder aufgedruckt. Anschließend wird die Reflexionsschicht 24 optional wieder bereichsweise entfernt, beispielsweise im Bereich des transparenten Fensters 11 wieder entfernt. Hierbei ist es auch möglich, die Reflexionsschicht 24 auch lediglich in musterförmiger Form in dem Bereich 32, 33 und 36 vorzusehen und so ein zusätzliches Designelement in dem Dekorelement 2 einzubringen. Anschließend wird die Kunststoffschicht 25 und sodann die Kleberschicht 26 beispielsweise mittels eines Druckverfahrens aufgebracht.

Die Mikrostruktur 4 ist beispielsweise in den Bereichen 35 und 36 als Spiegelfläche und in den Bereichen 33 und 34 als diffraktive Struktur 42 ausgeformt. In den Bereichen 31 und 32 weist die Mikrostruktur 4 eine Grundfläche 40 und mehrere Grundelemente 41 auf, die jeweils eine gegenüber der Grundfläche erhöhte oder versenkte Elementfläche und eine zwischen der Elementfläche und der Grundfläche angeordnete Flanke aufweist. Die Elementflächen der Grundelemente 41 verlaufen jeweils im Wesentlichen parallel zu der Grundfläche 40. In einer oder mehreren ersten Zonen der Bereiche 31 und 32 sind die Elementflächen der Grundelemente 41 und die Grundfläche in einer senkrecht zu einer von der Grundfläche 40 definierten Grundebene beabstandet mit einem ersten Abstand, der so gewählt ist, dass durch Interferenz des an der Grundfläche 40 und den Elementflächen reflektierten Lichts in den Bereichen 32 im Auflicht im Streulicht eine erste Farbe generiert wird und/oder dass durch Interferenz des durch die Elementflächen und die Grundfläche 40 in den Bereichen 31 transferierten Lichts im Durchlicht in der ersten oder einer höheren Beugungsordnung oder im Streulicht eine erste Farbe in den ein oder mehreren ersten Zonen generiert wird.

Fig. 1d zeigt einen Ausschnitt der Mikrostruktur 4 in dem Bereich 31, 32. Die Mikrostruktur 4 weist die Grundfläche 40 und die Grundelemente 41 auf, die jeweils eine gegenüber der Grundfläche 40 erhöhte oder versenkte Elementfläche 411 und eine zwischen den Elementflächen 411 und der Grundfläche 40 angeordnete Flanke 410 aufweisen. Die Elementflächen 411 der Grundelemente 41 verlaufen im Wesentlichen parallel zu der Grundebene. Die zu der jeweiligen Flanke 410 benachbarte Elementfläche 411 und die zu dieser benachbarten Grundfläche 40 sind in einer senkrecht auf der Grundebene stehenden Richtung in einer Stufenhöhe h voneinander beabstandet. Vorzugsweise ist die Flanke 410 der Mikrostruktur 4 als Fläche definiert, deren Höhe mindestens 10 % der Stufenhöhe h höher als die benachbarte Grundfläche 40 und mindestens 10% der Stufenhöhe h tiefer als die der benachbarten Elementfläche 411 ist.

Im Falle einer zweidimensionalen Struktur der Periode p und einer auf die Grundebene projizierten Fläche Δf der Flanke 410 ist der auf die Grundebene projizierte Flächenanteil Δf der Flanke

$$100\% \bullet 2 \bullet \frac{\Delta f}{p}$$

Dieser Flächenanteil der Flanken 410 ist vorzugsweise kleiner 50 %, weiter bevorzugt kleiner 40 %, noch weiter bevorzugt kleiner 30 % und besonders bevorzugt kleiner 20 %. Es hat sich gezeigt, dass eine Erhöhung des Flächenanteils der Flanken 410 zu einer Reduzierung der Effizienz führt und das die Farben zudem pastellartiger, also unreiner bzw. weißhaltiger, werden. Damit der Flächenanteil der Flanken kleiner XX % ist, muss der mittlere Flankenwinkel $\gamma$ folgende Bedingung erfüllen:

$$\gamma \geq arctan \left[ \frac{h}{(100\% - 2 \bullet 10\%) \bullet XX\% \bullet p} \right]$$

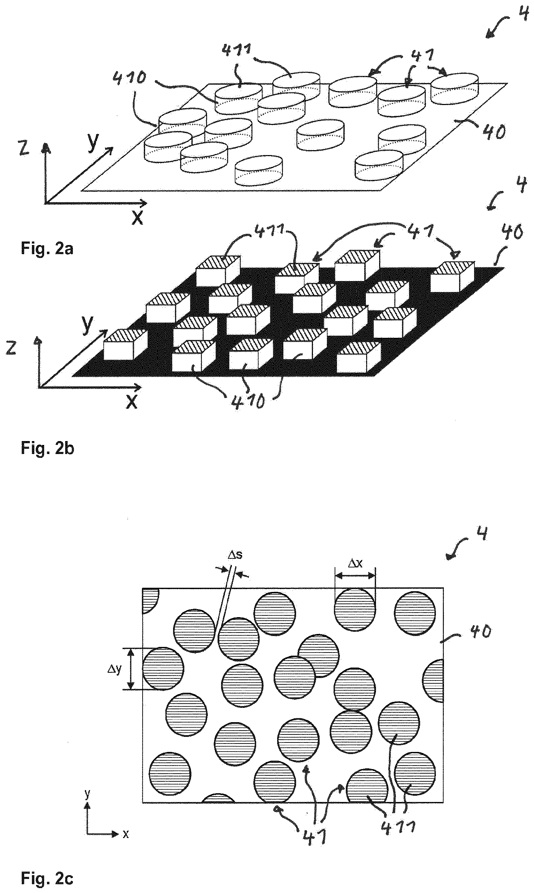

Die spezielle Ausgestaltung der Mikrostruktur 4 in den Bereichen 31 und 32 wird nun im Folgenden anhand der Figuren Fig. 2a bis Fig. 16 erläutert.

Die Mikrostruktur 4 weist in den Bereichen 31 und 32 oder in einem Teilbereich der Bereiche 31 und 32 beispielsweise die in den schematischen dreidimensionalen Darstellungen von Fig. 2a und Fig. 2b gezeigte Formgebung auf. Die Mikrostruktur 4 weist hier die Grundfläche 40 auf, welche, wie in den Figuren Fig. 2a und Fig. 2b angedeutet, eine durch die Koordinatenachsen x und y aufgespannte Grundebene definiert. Die Grundelemente 41 weisen Elementflächen 411 auf, welche, wie in den Figuren Fig. 2a und Fig. 2b gezeigt, gegenüber der Grundfläche 40 erhöht angeordnet sind. Weiter ist es auch möglich, dass die Mikrostruktur 4 nicht in die untere Oberfläche der Kunststoffschicht 23, sondern in deren oberen Oberfläche abgeformt sind und so die Elementflächen 411 nicht erhöht, sondern versenkt gegenüber der Grundfläche 40 angeordnet sind. Zwischen den Elementflächen 411 und der Grundfläche 40 sind weiter Flanken 410 angeordnet. In dem Ausführungsbeispiel nach Fig. 2a und Fig. 2b bestehen die Grundelemente 41 somit jeweils aus einer Elementfläche 411 und einer diese umschließende Flanke 410. Die Elementfläche 411 ist zu einer senkrecht von den Koordinatenachsen x und y definierten Grundebene in Richtung einer Koordinatenachse z verlaufenden Richtung beabstandet mit einem speziellen Abstand, der so gewählt ist, dass im Auflicht bzw. im Durchlicht in der ersten oder einer höheren Beugungsordnung oder im Streulicht eine erste Farbe generiert wird, wie dies später auch noch detailliert erläutert wird.

In dem Ausführungsbeispiel nach Fig. 2a sind die Grundelemente 41 in Form von Zylindern ausgeformt, welche pseudo-zufällig auf der Grundebeneangeordnet sind. Weiter ist es auch möglich, dass die Grundelemente 41 eine beliebig andere Formgebung besitzen. So zeigt Fig. 2b beispielsweise eine Ausformung der Grundelemente 41 in Form von Quadern.

Die Elementflächen 411 sind, wie in den Figuren Fig. 2a und Fig. 2b gezeigt, vorzugsweise parallel zur Grundfläche 40 angeordnet. Es ist jedoch auch möglich, dass die Elementflächen 411 zur Grundfläche 40 nur lediglich im Wesentlichen parallel angeordnet sind und so beispielsweise die Elementflächen 411 zur Grundfläche 40 leicht verkippt sind. Hierbei hat es sich als vorteilhaft herausgestellt, dass eine Verkippung der Elementflächen 411 gegenüber der Grundfläche 40 im Bereich zwischen 5 Grad und 30 Grad, bevorzugt im Bereich von 5 Grad bis 15 Grad eine Vergrößerung des Streuwinkelbereichs sowie des Farbspektrums ermöglicht. Unter "im Wesentlichen parallel" ist in diesem Zusammenhang auch eine derartige Verkippung der Elementflächen 411 gegenüber der Grundfläche 410 zu verstehen.

Die Flächenbelegung des Bereichs oder Teilbereichs mit den Grundelementen beträgt vorzugsweise zwischen 30 % und 70 %, weiter bevorzugt zwischen 40% und 60 %, und weiter bevorzugt möglichst etwa 50 % bzw. 1/2. Dies gilt für zweistufige Mikrostrukturen. Bei dreistufigen Mikrostrukturen ist die Flächenbelegung bevorzugt möglichst etwas 2/3, bei vierstufigen Mikrostrukturen möglichst 3/4, etc.

Der Flankenwinkel der Flanken 410 ist vorzugsweise größer als 70 Grad, weiter bevorzugt größer als 80 Grad, und weiter bevorzugt möglichst in etwa 90 Grad, wie dies in den Ausführungsformen gemäß der folgenden Ausführungsbeispiele gezeigt ist.

Fig. 2c zeigt nun eine Ausführungsform, bei der die Grundelemente 41 in den Bereichen 31 und 32 bzw. in einem Teilbereich der Bereiche 31 und 32 pseudo-zufällig angeordnet sind. Die Mikrostruktur 4 setzt sich so aus einem oder mehreren Grundelementen zusammen, wobei die Anordnung der Grundelemente in der x-/y-Ebene pseudo-zufällig ist. Diese pseudo-zufällige Anordnung unterdrückt bzw. reduziert ungewünschte diffraktive Effekte, da keine periodischen Strukturen wie bei einem Gitter mehr vorliegen. Fig. 2c zeigt nun eine Draufsicht in eine senkrecht auf der Grundebene stehenden Richtung, d. h. in Richtung der z-Koordinatenachse, auf einen Ausschnitt eines derartigen Bereichs der Mikrostruktur 4 mit mehreren Grundelementen 41 und der Grundfläche 40. In der Darstellung nach Fig. 2c sind so die Projektionen der Grundelemente 41 auf die Grundebene in einer senkrecht auf der Grundebene stehenden Richtung gezeigt, welche hier mit den Elementflächen 411 aufgrund der Ausbildung des Flankenwinkels der Flanken 410 als 90 Grad-Winkel zusammenfallen. Wird der Flankenwinkel geringer gewählt, so vergrößert sich die Fläche der Projektion entsprechend.

Die lateralen Ausdehnungen $\Delta$x und $\Delta$y der Grundelemente in der x-/y-Ebene liegen im Bereich von 0,25 $\mu$m bis 50 $\mu$m, vorzugsweise zwischen 0,4 $\mu$m und 20 $\mu$m und weiter bevorzugt zwischen 0,75 $\mu$m und 10 $\mu$m. Unter "lateraler Ausdehnung der Grundelemente" ist hierbei die lateral Ausdehnung der Projektion der Grundelemente in einer senkrecht zur Grundebene stehenden Richtung zur verstehen. Der minimale Abstand benachbarter Grundelemente $\Delta$s ist bei dem Ausführungsbeispiel nach Fig. 2c pseudo-zufällig gewählt. Vorzugsweise kann hierbei der minimale Abstand benachbarter Grundelemente $\Delta$s nicht alle möglichen Werte einnehmen, sondern nur Werte aus einem engeren, vordefinierten Variationsbereich. Vorzugsweise ist so die Anordnung der Grundelemente 41 derart eingeschränkt, dass die Grundelemente 41 nicht überlappen und gleichzeitig der minimale Abstand $\Delta$s nicht größer als 300 $\mu$m ist, bevorzugt nicht größer als 50 $\mu$m ist. Werden überlappende Grundelemente zugelassen, so werden diese bevorzugt so hergestellt, dass die Ebene am Überlappungsbereich die gleiche Höhe hat wie nicht überlappende Bereiche der Grundelemente. Vorzugsweise beträgt der minimale Abstand $\Delta$s zwischen zwei benachbarten Grundelementen zwischen 0,5 $\mu$m und 50 $\mu$m, weiter bevorzugt zwischen 0,5 $\mu$m und 20 $\mu$m,

Vorzugsweise wird eine derartige pseudo-zufällige Anordnung der Grundelemente 41 dadurch erreicht, dass in dem entsprechenden Bereich oder Teilbereich ein zweidimensionales, von der x- und y-Achse aufgespanntes Raster vorgesehen ist, welches eine Regelposition des jeweiligen Grundelements 41 in der Grundebene definiert. Die Grundelemente werden nun in diesem Bereich oder in diesem Teilbereich durch eine pseudo-zufällige Verschiebung aus der jeweiligen Regelposition in Richtung der Koordinatenachsen x und/oder y positioniert, wobei der Variationsbereich dieser pseudo-zufälligen Verschiebung so gewählt ist, dass bevorzugt die oben dargelegten Bedingungen für die minimale Beabstandung zweiter benachbarter Grundelemente 41 eingehalten werden.

Weiter ist es auch möglich, dass jeweils der minimale Abstand zweier benachbarter Grundelemente pseudo-zufällig bestimmt wird und sodann ausgehend von diesen beiden Grundelementen wiederum der minimale Abstand der zu diesen Grundelementen benachbarten Grundelemente pseudo-zufällig ausgewählt wird usw. und auf diese Weise eine entsprechend pseudo-zufällige Positionierung der Grundelemente 41 erzielt wird.

Die pseudo-zufällige Variation, beispielsweise die pseudo-zufällige Verschiebung der Grundelemente aus der Regelposition oder die pseudo-zufällige Variation des minimalen Abstands der Grundelemente kann hierbei alle Werte aus dem engeren, vordefinierten Variationsbereich mit gleicher Wahrscheinlichkeit berücksichtigen. Es ist jedoch auch möglich, dass eine mathematische Funktion für die Wahrscheinlichkeit der Berücksichtigung eines Werts aus diesem Variationsbereich eingesetzt wird. Beispiele solcher Funktionen sind die Gauß-Funktion sowie eine invertierte Gauß-Funktion. Weiter ist es auch möglich, dass der vordefinierte Variationsbereich mehrere vordefinierte Werte umfasst, aus denen pseudo-zufällig ein Wert ausgewählt wird. So ist es beispielsweise möglich, die minimale Beabstandung $\Delta$s zweier Grundelemente 41 aus einem Variationsbereich auszuwählen, welcher beispielsweise 10 Werte in einer Abstufung von 0,5 $\mu$m umfasst.

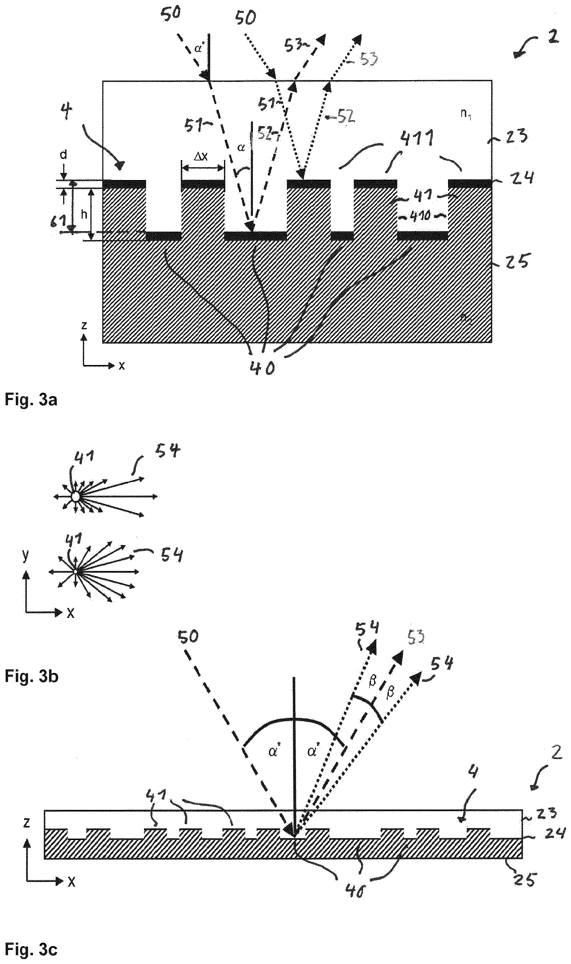

Fig. 3a zeigt nun eine schematische Schnittdarstellung des Dekorelements 2 im Bereich der Mikrostruktur 4 nach Fig. 2c. Das Dekorelement 2 weist hier die Kunststoffschichten 23 und 25 sowie die Reflexionsschicht 24 auf. Die Kunststoffschicht 23 weist einen Brechungsindex $n_1$ und die Kunststoffschicht 25 einen Brechungsindex $n_2$ auf. Die Mikrostruktur 4 weist die Grundfläche 40 sowie mehrere Grundelemente 41 mit den Elementflächen 411 und den Flanken 410 auf. Die Mikrostruktur 4 ist mit der Reflexionsschicht 24 beschichtet, welche eine Dicke d aufweist, und ist weiter in die Kunststoffschichten 23 und 25 eingebettet. Wie bereits oben ausgeführt, ist der Flankenwinkel der Flanken 410 größer als 70 Grad, insbesondere größer als 80 Grad und bevorzugt nahezu senkrecht (nahezu 90 Grad) ausgebildet. Die unteren Oberflächen der Reflexionsschicht 24 im Bereich der Elementflächen 411 und im Bereich der Grundfläche 40 sind voneinander in Richtung der z-Achse mit einer Höhe h beabstandet, so dass der erste Abstand, d. h. die Beabstandung 61 der Elementflächen 411 von der Grundfläche 40 ebenfalls den Wert h besitzt.

Das aus Luft auf das Dekorelement 2 in einem Einfallswinkel $\alpha^*$ einfallende Licht 50 wird an der Kunststoffschicht 23 gebrochen und trifft so unter Berücksichtigung der Lichtbrechung auf die Grundelemente 41 sowie die Grundfläche 40 der Mikrostruktur 4 unter dem Winkel $\alpha$ auf. Dabei gilt das Brechungsgesetz von

$$\sin\left(\alpha^*\right) = n_1 \times \sin\left(\alpha\right)$$

Das auf die Mikrostruktur einfallende Licht 50 wechselwirkt auf zwei Wegen mit der Mikrostruktur 4. Erstens wird das einfallende Licht 50 aufgrund der Reflexion an der Reflexionsschicht 24 in den durch die Elementflächen 411 und die Grundfläche 40 bestimmten, mit dem Abstand 61 und damit dem Wert h beabstandeten Ebenen reflektiert. Dabei gilt das Reflexionsgesetz von Einfallswinkel = Ausgangswinkel. Das von diesen beiden Ebenen reflektierte Licht interferiert konstruktiv und destruktiv. Konstruktive Interferenz ergibt sich für die Wellenlänge $\lambda$, wenn:

$$\lambda = 2 \times n_1 \times h \times \cos(\alpha)$$

ist. Für den Winkel $\alpha$ von 20 Grad und $n_1$ = 1,5 ergibt sich so beispielsweise ein blauer Farbeindruck in der direkten Reflexion, d. h. in der nullten Beugungsordnung, wenn die Höhe h = 160 nm ist. Ein grünlicher Farbeindruck ergibt sich für h = 195 nm und ein rötlicher Farbeindruck für h = 230 nm. Je nach Abstand 61 und damit Höhe h der Mikrostruktur sowie dem Brechungsindex $n_1$ entsteht somit ein unterschiedlicher Farbeindruck bei Betrachtung des Dekorelements 2 in der nullten Beugungsordnung. Bevorzugt liegt die Höhe h hierbei im Bereich von 150 nm bis 1000 nm, besonders bevorzugt zwischen 200 nm und 600 nm.

In analoger Weise wird von der Mikrostruktur 4 in dem Bereich 31 oder in einem Teilbereich des Bereichs 31 bei Durchlichtbetrachtung in Transmission mittels Interferenz eine Farbe in der nullten Beugungsordnung generiert. Im Gegensatz zu der Ausbildung des Dekorelements 2 nach Fig. 3a kann in diesem Bereich die Reflexionsschicht 24 nicht vorgesehen sein, sodass hier die Mikrostruktur 4 unmittelbar zwischen die Kunststoffschichten 23 und 25 eingebettet sind.

Die Interferenzbedingung hängt dann auch von $n_2$ ab. Ohne Reflexionsschicht 24 und unter Vernachlässigung der Lichtbrechung an der Grenzfläche zwischen den Kunststoffschichten 23 und 25 ergibt sich konstruktive Interferenz zwischen den durch die Grundelemente 41 und die Grundfläche 40 transmittierten Teile des einfallenden Lichts 50 in erster Näherung, wenn:

$$\lambda = \frac{\left| n_1 - n_2 \right| \times h}{\cos(\alpha)}$$

Für einen Winkel $\alpha$ von 20 Grad und $n_1$ = 1,40 und $n_2$ = 1,65 ergibt sich ein blauer Farbeindruck bei Durchlichtbetrachtung in der nullten Beugungsordnung, wenn die Höhe h = 1710 nm ist. Grünlich ergibt sich für h = 2070 nm und rötlich für h = 2440 nm.

Alternativ wird eine transparente hochbrechende Reflexionsschicht 24 eingesetzt.

Neben der Interferenz aufgrund der speziellen Wahl des Abstands 61 kommt es gleichzeitig noch zur Lichtstreuung aufgrund der lateralen Ausdehnung, beispielsweise der lateralen Ausdehnung $\Delta x$ der Grundelemente, wie oben beschrieben. Aufgrund der wie oben beschrieben gewählten lateralen Ausdehnung der Grundelemente parallel zur Grundebene tritt Streustrahlung auf. Strukturen in der Größenordnung der Grundelemente 41 streuen hierbei Licht vermehrt in die Vorwärtsrichtung. Das von den unregelmäßig angeordneten Grundelementen 41 gestreute Licht verteilt sich dabei in einem Raumwinkelbereich um die direkt reflektierten bzw. direkt transmittierten Lichtstrahlen, d. h. um die nullte Beugungsordnung. Die laterale Ausdehnung der Grundelemente bestimmt hierbei den Winkelbereich, um welchen um die nullte Beugungsordnung herum gestreutes Licht von der Mikrostruktur generiert wird. Je größer die laterale Ausdehnung der Grundelemente 41 ist, umso stärker ausgeprägt ist die Vorwärtsstreuung. Folglich wird der Streuwinkel $\beta$, welcher den Winkelbereich umgibt, in welchem durch die Mikrostruktur das Licht durch Streuung aus der nullten Beugungsordnung abgelenkt wird, kleiner je größer die Grundelemente 41 sind.

Fig. 3b und Fig. 3c verdeutlichen diesen Effekt. Fig. 3b zeigt eine Draufsicht auf zwei Grundelemente 41, die verschieden stark ausgeprägte Vorwärtsstreuung von zwei beispielhaft unterschiedlich groß ausgebildeten Grundelementen 41 darstellt. Fig. 3c zeigt eine entsprechende Schnittdarstellung des Dekorelements 2 mit den Kunststoffschichten 23 und 25 sowie der Reflexionsschicht 24 und der Mikrostruktur 40 mit den Grundelementen 41 und der Grundfläche 40. Das unter dem Winkel $\alpha^*$ einfallende Licht 50 wird hierbei zum einen von dem Dekorelement direkt in der nullten Beugungsordnung reflektiert und so das Licht 53 generiert. Weiter wird von der Mikrostruktur 4 Streulicht 54 in einem Winkelbereich $\beta$ um das in der nullten Beugungsordnung reflektierte Licht 53 herum generiert.

Eine entsprechende Generierung von Streulicht wird in analoger Weise auch bei einer für eine Durchlichtbetrachtung ausgelegte Mikrostruktur 4 bewirkt, sodass hier ebenfalls auf die obigen Ausführungen verwiesen wird.

Isotrop ausgebildete Grundelemente 41 wie die in Fig. 2a und 2c gezeigten Grundelemente generieren Streulicht 54 bis zu dem Streuwinkel $\beta$. Der Streuwinkel $\beta$ wird hierbei durch die Minimallänge der Projektion des verwendeten Grundelements 41 auf die Grundebene gegeben und damit durch die entsprechende laterale Abmessung des Grundelements 41 gegeben, beispielsweise durch den Durchmesser des Kreises bestimmt, bei einer kreisscheibenförmigen Projektion des Grundelements auf die Grundebene. Vorzugsweise liegt $\beta$ im Bereich von +/- 30 Grad und weiter bevorzugt von +/- 15 Grad.

Wenn das einfallende Licht 50 weißes Licht ist und alle Materialien der Schichten 23, 24 und 25 farbneutral transparent bzw. farbneutral reflektierend sind weist das Streulicht 54 meist den komplementären Farbeindruck im Vergleich zum Lichtstrahl 53 auf, welcher in der nullten Beugungsordnung zu beobachten ist. Aufgrund der Energieerhaltung muss in diesem Fall das einfallende weiße Licht in das direkt reflektierende Licht 53 und das Streulicht 54 aufgeteilt werden, was zu dem komplementären Farbeindruck führt. Das einfallende Licht 50, welches nicht konstruktiv in die direkte Reflexion bzw. Transmission geht und nicht absorbiert wird, ist zum größten Teil im Streulicht zu finden. Erscheint das Streulicht so beispielsweise grünlich, erscheint das direkt in der nullten Beugungsordnung reflektierte Licht violett. Der komplementäre Farbeindruck entsteht vor allem dann, wenn die Reflexionsschicht 24 aus einem farbneutral reflektierenden Material wie z. B. Aluminium oder Silber besteht. Aluminium reflektiert so beispielsweise Licht über den gesamten sichtbaren Spektralbereich mit ca. 90 % Effizienz und eignet sich somit für die Realisierung komplementärer Farbeindrücke. Kupfer dagegen besitzt eine stärkere Absorption im kurzwelligen, d. h. blauen, Spektralbereich und verändert dementsprechend die Farbeindrücke, weil Kupfer nicht farbneutral reflektiert.

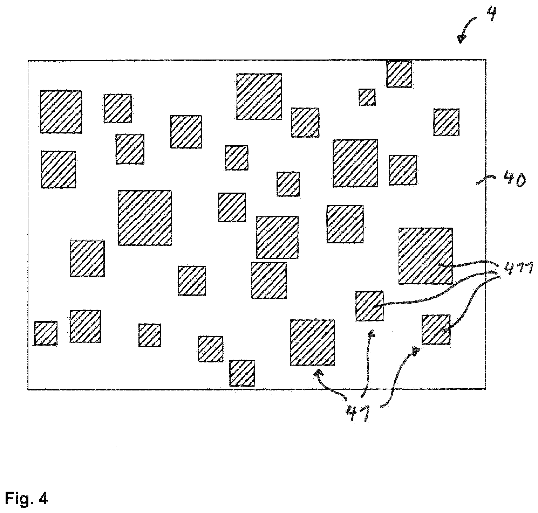

Neben der pseudo-zufälligen Positionierung der Grundelemente 41 kann zusätzlich auch die Größe der Grundelemente pseudo-zufällig variiert werden. Fig. 4 zeigt so beispielsweise eine Draufsicht auf die Mikrostruktur 4 mit der Grundfläche 40, den Grundelementen 41 und den Elementflächen 411. Die Elementflächen 411 der Grundelemente 41 haben hier eine quadratische Formgebung, wobei die Größe der Quadrate von Grundelement 41 zu Grundelement 41 in einem vorgegebenen Variationsbereich variiert ist. Zur Variation der Flächengröße der Projektion der Grundelemente 41 auf die Grundebene wird vorzugsweise die Abmessung der Projektion des jeweiligen Grundelements auf die Grundebene in Richtung der x-Achse und/oder y-Achse pseudo-zufällig innerhalb eines vorgegebenen Variationsbereichs variiert. So wird beispielsweise die laterale Abmessung $\Delta x$ der Elementflächen bzw. der Projektion des Grundelements in die x-Richtung oder die laterale Abmessung der Elementflächen oder der Projektion des Grundelements in die y-Richtung pseudo-zufällig in einem Variationsbereich von beispielsweise 1 $\mu m$ bis 10 $\mu m$ variiert.

Neben der Positionierung der Grundelemente, Beabstandung der Grundelemente vom nächsten benachbarten Grundelement, der Flächengröße der Projektion des Grundelements auf die Grundebene ist es auch weiter möglich, die Form der Projektion des Grundelements auf die Grundebene oder auf die laterale Vorzugsrichtung der Projektion des Grundelements auf die Grundebenen pseudo-zufällig innerhalb eines vordefinierten Variationsbereichs zu variieren. Weiter ist es auch möglich, dass nur einer der vorgehend angeführten Parameter pseudo-zufällig innerhalb eines vorgegebenen Variationsbereichs variiert ist.

In den obigen Ausführungen wurden Grundelemente 41 beschrieben, welche symmetrische Grundelemente in dem Sinne ausbilden, dass deren Projektion auf die Grundebene in einer senkrecht auf der Grundebene stehenden Richtung eine symmetrische Flächenform besitzen. Besonders vorteilhaft ist jedoch die Verwendung von asymmetrischen Grundelementen, bei denen die Projektion des jeweiligen Grundelements auf die Grundebenen eine asymmetrische Form mit einer lateralen Abmessung in einer in der Grundebene liegenden Vorzugsrichtung aufweist, welche größer als die laterale Abmessung der Projektion quer zur Vorzugsrichtung ist, vorzugsweise 50 % größer, bevorzugt um mehr als 80 % größer weiter bevorzugt mehr als 2 Mal und insbesondere mehr als 5 Mal größer als die Abmessung quer zur Vorzugsrichtung ist. Mit derartigen asymmetrischen Grundelementen lassen sich komplexe optische Effekte erzielen.

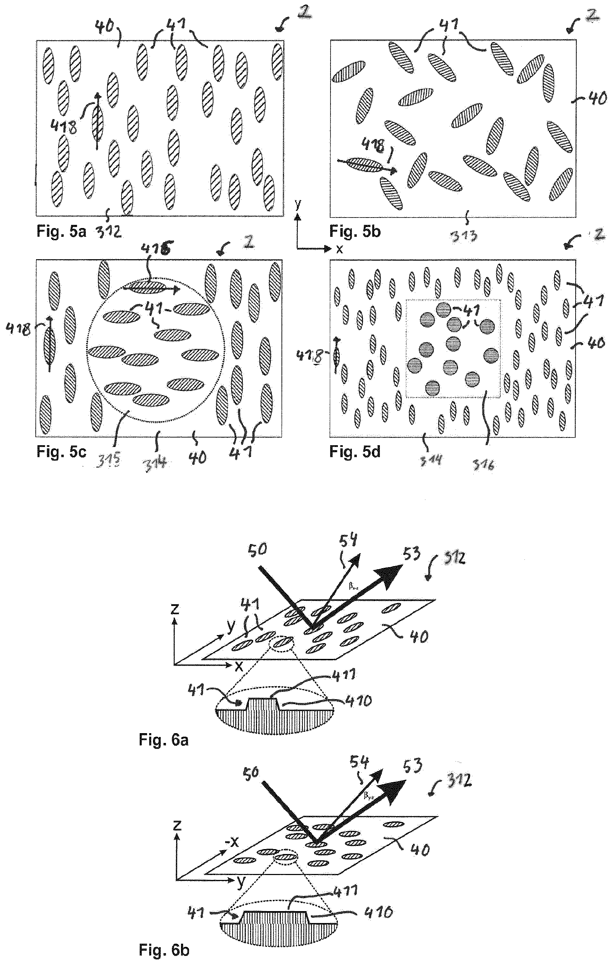

Fig. 5a zeigt so einen Bereich 312 des Dekorelements 2, in welchem die Mikrostruktur 4 eine Vielzahl von Grundelementen 41 umfasst, welche eine asymmetrische Formgebung besitzen. Die Projektion der Grundelemente 41 auf der Grundebene bzw. die Elementflächen besitzen so eine längliche, beispielsweise ellipsenförmig ausgebildete Formgebung, deren Längsachse, wie in Fig. 5a gezeigt, eine Vorzugsrichtung 418 definiert. Die Grundelemente 41 in dem Bereich 312 sind identisch ausgeformt, sodass die Vorzugsrichtungen 418 der Grundelemente 41 in dem Bereich 312 parallel zueinander ausgerichtet sind. Weiter sind die Grundelemente 41 pseudo-zufällig auf der Grundfläche 40 positioniert, wie bereits oben ausgeführt.

Der Streuwinkel $\beta_{x-z}$ bei Beleuchtung und Betrachtung in der x/z-Ebene und der Streuwinkel $\beta_{y-z}$ bei Beleuchtung und Betrachtung in der y/z-Ebene unterscheidet sich hierbei in dem Bereich 312, wie in den Figuren 6a und 6b dargestellt. Fig. 6a zeigt so eine Darstellung der Mikrostruktur 4 mit den Grundelementen 41 und der Grundfläche 40 in dem Bereich 312 bei Beleuchtung und Betrachtung in der x/z-Ebene und Fig. 6b bei der Beleuchtung und Betrachtung in der y/z-Ebene. Da der Streuwinkelbereich $\beta$, wie oben dargelegt, abhängig von der Lateralabmessung der Grundelemente in Betrachtungs- / Beleuchtungsrichtung ist, unterscheiden sich die Streuwinkel $\beta_{x-z}$ wie in den Figuren Fig. 6a und Fig. 6b dargestellt. Dies führt dazu, dass sich der Farbeindruck des Streulichts bei Drehung des Sicherheitselements in der x/y-Ebene, d. h. bei Drehung um die z-Achse und bei Beibehaltung des Betrachtungswinkels verändert. Beispielsweise kann das Streulicht bei Betrachtung in der x/z-Ebene cyanfarbig bzw. in hellem Blau oder Türkis erscheinen und sich bei Drehung in der y/z-Achse zu dunkelblau/grün bzw. dunkelgrau verändern. Der Effekt erscheint hierbei in Art einer Anisotrop-Matt erscheinenden Farbe.

Fig. 5b zeigt die Ausbildung der Mikrostruktur 4 in einem Bereich 313 des Dekorelements 2. Die Mikrostruktur 4 weist hier eine Vielzahl von Grundelementen 41 und die Grundfläche 40 auf. Die Grundelemente 41 sind ebenfalls als asymmetrische Grundelemente ausgeformt. Die Grundelemente 41 sind hier jedoch nicht nur pseudo-zufällig in der Grundebene positioniert, sondern auch deren Vorzugsrichtung 418 ist im Weiteren ebenfalls pseudo-zufällig innerhalb eines vordefinierten Variationsbereichs von Grundelement zu Grundelement variiert. Hierbei tritt keine Änderung des Streulichts bei Drehung des Dekorelements auf. Allerdings ist der Streuwinkelbereich im Vergleich zu symmetrischen Grundelementen größer. Die pseudo-zufällige Variation der Vorzugsrichtung der Grundelemente 41 kann den gesamten Winkelbereich von minus 180 Grad bis plus 180 Grad umfassen. Der Winkelbereich kann jedoch auch eingeschränkt sein und hierbei wie bereits oben ausgeführt, vorzugsweise zwischen minus 90 Grad und plus 90 Grad, weiter bevorzugt minus 30 Grad und plus 30 Grad, betragen.

Fig. 5c zeigt ein weiteres Ausführungsbeispiel der Ausbildung der Mikrostruktur 4 in den Bereichen 31 und 32 des Dekorelements 2.

Bei diesem Ausführungsbeispiel weist der Bereich 31 oder der Bereich 32 ein oder mehrere erste Zellen 314 auf, in den die Grundelemente 41 als asymmetrische Grundelemente mit einer ersten Vorzugsrichtung ausgebildet sind und ein oder mehrere zweite Zellen 315 auf, in welchem die Grundelemente als asymmetrische Grundelemente mit einer zweiten Vorzugsrichtung ausgebildet sind. In den ersten Zellen 314 weisen die Grundelemente so eine identische Vorzugsrichtung 418 auf. Ebenso weisen die Grundelemente in den ein oder mehreren zweiten Zellen 315 identische Vorzugsrichtungen 415 auf. Wie in Fig. 5c gezeigt ist die Vorzugsrichtung der Grundelemente 41 in den ein oder mehreren ersten Zellen 314 und in den ein oder mehreren zweiten Zellen 315 unterschiedlich gewählt. Jedoch wird in den ersten und zweiten Zellen bei einer Drehung des Dekorelements 2 um eine senkrecht zur Grundebene stehende Richtung ein wie oben beschriebener optischer Effekt in einem entsprechenden Winkelversatz zueinander generiert, sodass die ersten und zweiten Zellen unterschiedliche optische Effekte generieren. Weiter ist es auch möglich, in dem Bereich 31 bzw. 33 nicht nur erste und zweite Zellen vorzusehen, sondern auch ein oder mehrere dritte Zellen vorzusehen, in welchem die Grundelemente als symmetrische Grundelemente ausgebildet sind. Fig. 5d zeigt ein Ausführungsbeispiel einer derartigen Ausgestaltung eines Bereichs der Mikrostruktur 4 des Dekorelements 2 mit einer ersten Zelle 314 und einer dritten Zelle 316, in welchem die Grundelemente 41 als symmetrische Grundelemente ausgebildet sind.

Weiter ist es auch möglich, weitere Zellen vorzusehen, welche wie die ersten und zweiten Zellen ausgebildet sind und bei denen die Vorzugsrichtung der Grundelemente sich von der Vorzugsrichtung der ersten und zweiten Zellen unterscheidet, und diese Zellen beliebig mit den ersten und zweiten Zellen zu kombinieren. Bevorzugt ist die Größe der Zellen mehr als 300 $\mu$m, weiter bevorzugt mehr als 500 $\mu$m, weiter bevorzugt mehr als 1 mm und insbesondere mehr als 5 mm. In einer Ausführungsform mit Zellen mit Abmessungen im makroskopischen Bereich werden Bewegungseffekte bei Drehung erzeugt, z. B. "rolling-bar"-artige Effekte erzeugt. Zur Erzeugung eines "rolling-bar"-Effektes ist es beispielsweise möglich, mehrere längliche Zellen mit den asymmetrischen Grundelementen nebeneinander zu platzieren, wobei die Vorzugsrichtung der Grundelemente von Zelle zu Zelle stetig variiert, beispielsweise in 10 Grad-Schritten zunimmt. Die Größe der länglichen Zellen ist beispielsweise 20 mm in Längsrichtung und 500 $\mu$m in Querrichtung. Werden 19 derartige Zellen nebeneinander angeordnet, wobei die Vorzugsrichtung der ersten Zelle 0 Grad ist und die Vorzugsrichtung der anderen Zellen in 10 Grad-Schritten zunimmt, so weist die mittlere Zelle die Vorzugsrichtung 90 Grad auf und die letzte Zelle 180 Grad (bzw. wieder 0 Grad). Wird nun ein Dekorelement einer derartigen Ausführungsform bei geeignetem festem Kippwinkel betrachtet und dann gedreht, variiert die Helligkeit des Farbeindrucks wie ein Leuchtband über das Dekorelement.

Gemäß einem alternativen Ausführungsbeispiel der Erfindung ist die Größe der ersten, zweiten und dritten Zellen 314 bis 316 unterhalb der Auflösungsgrenze des menschlichen Auges gewählt, vorzugsweise kleiner als 300 $\mu$m und weiter bevorzugt kleiner als 100 $\mu$m gewählt. Bei einer derartigen Ausformung der Zellen 314 bis 316 ergibt sich als Farbeindruck des Streulichts eine Mischung aus den Effekten der einzelnen Zellen 314 bis 316. Bei dieser Ausgestaltung beinhaltet das Dekorelement ein verstecktes Sicherheitselement. Bei Betrachtung unter einem Mikroskop unterscheidet sich die Helligkeit der verschiedenen Zellen, wenn die Auflösung hoch genug gewählt ist.

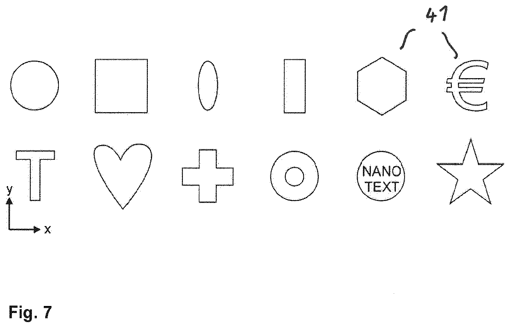

Weiter ist es auch möglich, die Formen der Grundelemente anders als in den vorgehenden Ausführungsbeispielen nach Fig. 2a bis Fig. 6b auszugestalten. Die Projektion der Grundelemente auf die Grundebene kann so beispielsweise die in Fig. 7 beispielhaft gezeigten Formgebungen besitzen, und so beispielsweise die Form einer Kreisscheibe, eines Quadrats, einer Ellipse, eines Rechtecks, eines Sechsecks, eines Währungs-Zeichens, Denominations-Zeichens, eines Buchstabens, die Form eines Symbols, beispielsweise eine Herzform, ein Kreuz, ein Ring, ein Kreis mit Nanotext oder ein Stern besitzen. Die Grundelemente bzw. deren Projektion auf die Grundebenen können weiter auch von Buchstaben und Symbolen gebildet werden, welche auf Grund der Anordnung der Grundelemente auf der Grundebene einen Mikrotext ausbilden. Bevorzugt weisen die Grundelemente, welche den Mikrotext bilden, eine pseudozufällige Variation der Positionierung der Grundelemente in dem ersten Bereich oder in zumindest einem ersten Teilbereich des ersten Bereichs auf, wobei der Mikrotext trotz der Variation lesbar ist. Die Form der Grundelemente bzw. die Form der Projektion der Grundelemente auf die Grundebene kann auf diese Weise auch ein verstecktes Sicherheitsmerkmal in dem Dekorelement 2 bereitstellen. Durch Analyse des Dekorelements beispielsweise mittels optischer Mikroskoptechnik lässt sich die Formgebung der Grundelemente bzw. die Formgebung der Projektion der Grundelemente auf die Grundebene nachweisen und so das versteckte Sicherheitsmerkmal überprüfen. Weiter kann auch die Anordnung einer Form der Grundelemente eine versteckte Information tragen. Wird beispielsweise die Mikrostruktur zu 95 % aus Grundelementen einer Form - z. B. Kreise - und zu 5 % aus Grundelementen einer anderen Form - z. B. Kreuze - gebildet, so kann die Anordnung der Kreuze die versteckte Information sein.

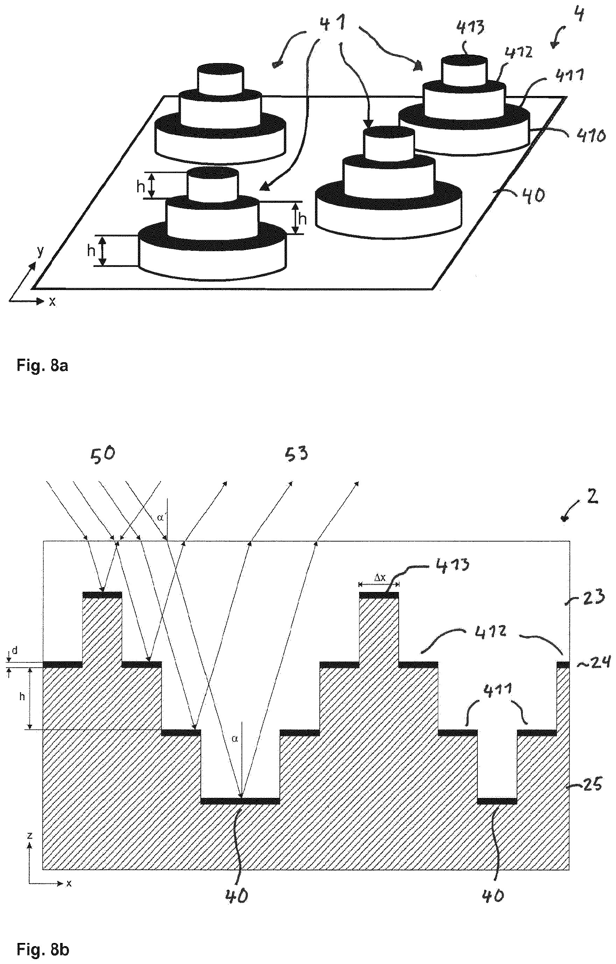

Gemäß einer weiteren Ausführungsform ist es auch möglich, dass die Grundelemente 41 nicht nur eine Elementfläche aufweisen, sondern auch mehrere Elementflächen aufweisen, welche die Interferenz des einfallenden Lichts und damit die Generierung der Farbe beeinflussen. Eine derartige Ausführungsform wird im Folgenden beispielhaft anhand der Figuren Fig. 8a und Fig. 8b beschrieben.

Fig. 8a zeigt eine dreidimensionale Darstellung des Ausschnitts der Mikrostruktur 4 in einem der Bereiche 31 und 32. Die Mikrostruktur 4 weist hier die Grundfläche 40 sowie eine Vielzahl von Grundelementen 41 auf, von denen in Fig. 8a vier Stück gezeigt sind. Die Grundelemente 41 weisen nicht nur jeweils die Elementfläche 411, sondern noch weitere Elementflächen 412 und 413 auf. Diese Elementflächen 412 und 413 sind ebenfalls jeweils im Wesentlichen parallel zu der Grundfläche 40 angeordnet und weiter in Richtung der z-Achse von der Grundfläche bei Anordnung der Grundelemente 41 in einer der ersten Zonen mit einem Vielfachen des ersten Abstands, also des Abstands 61 beabstandet. Die Elementflächen 412 und 413 sind so voneinander sowie von der Elementfläche 411 ebenfalls mit dem Abstand h beabstandet, sodass die Interferenzbedingung, wie diese vorhergehend anhand von Fig. 3a erläutert worden ist, ebenfalls für die Elementflächen 412 und 413 erfüllt ist. Bevorzugt ist die Fläche der Elementflächen 411, 412 und 413 möglichst gleich groß. D. h. der Flächenanteil jeder Stufe inkl. der Grundfläche ist in etwa gleich groß, z. B. bei vierstufigen Grundelementen etwas 1/4.

Fig. 8b zeigt eine entsprechende Schnittdarstellung eines Ausschnitts des Dekorelements 2 mit den Kunststoffschichten 23 und der Reflexionsschicht 24. Das unter dem Winkel $\alpha$ einfallende Licht 50 wird hier in der nullten Beugungsordnung als Licht 53 reflektiert, wobei sich die an der Grundfläche 40, an den Elementflächen 411, an den Elementflächen 412 und an den Elementflächen 413 reflektierten Lichtstrahlen überlagern und durch konstruktive oder destruktive Interferenz von der Mikrostruktur 4 eine Farbe generiert wird. Die Grundelemente 41 können hier nicht nur dreistufig, sondern auch zweistufig oder mehrstufig ausgeführt sein und so neben der Elementfläche 411 ein oder mehrere weitere Elementflächen aufweisen, welche vorzugsweise wie vorhergehend erläutert angeordnet sind.

Die Farbreinheit bei Betrachtung in der nullten Beugungsordnung wird durch Einführung dieser weiteren Ebenen deutlich erhöht. Hierbei ist es bevorzugt, dass die Flächenanteile der verschiedenen Elementflächen an der Projektion des Grundelements 41 auf der Grundebene gleich sind, wodurch sich auch die reinsten Farben ergeben. Die Höhe h, in der die weiteren Elementflächen 412 und 413 beabstandet sind, ist bevorzugt gleich. Bevorzugt liegt die Höhe h im Bereich von 150 nm bis 1000 nm und besonders bevorzugt im Bereich von 200 nm bis 600 nm. Die Mehrstufigkeit hat den Vorteil einer besser gerichteten konstruktiven Interferenz und damit eines stärkeren Farbeindrucks. Je größer die Anzahl der voneinander beabstandeten Elementflächen ist, umso enger wird das Spektrum des konstruktiv reflektierten Lichts. Die Anzahl der voneinander beabstandeten Elementflächen der Grundelemente ist bevorzugt in dem Bereich von 2 bis 6 gewählt.

Bezüglich der Ausformung der Projektion der Grundelemente auf die Grundebene sowie der Positionierung der Grundelemente in der Grundebene gilt das oben bezüglich der Grundelemente 41 Ausgeführte entsprechend. Die Projektion der Grundelemente 41 kann somit die in den Figuren Fig. 7, Fig. 5a bis Fig. 5d, Fig. 4 und Fig. 2a bis Fig. 2c gezeigte Formgebung besitzen. Vorzugsweise sind hierbei weiter die weiteren Elementflächen und die Elementfläche 411 so ausgeformt, dass diese einen konzentrischen, pyramidenförmigen Aufbau ergeben und so die Elementflächen 411 und 412 eine bandförmige, der Außenkontur folgenden Formgebung besitzt. Bevorzugt ist der Flächenanteil der Elementflächen gleich groß.

Gemäß einer weiteren bevorzugten Ausführungsform weist die Mikrostruktur in den Bereichen 31 und 32 bzw. in ein oder mehreren Teilbereichen der Bereiche 31 und 32 eine periodische Anordnung von Grundelementen 41 auf, deren Projektion auf die Grundebene vorzugsweise eine identische Formgebung besitzt. Die Projektion der Grundelemente auf die Grundebene besitzt vorzugsweise die Form von Stegen oder Punkten. Weiter folgen die Grundelemente vorzugsweise periodisch isotrop oder pseudo-isotrop in Richtung eines Azimutwinkels aufeinander ab, welcher so die Raumrichtung der Abfolge in der x/y-Ebene beschreibt. Der Abstand der Elementflächen der Grundelemente von der Grundfläche ist hierbei vorzugsweise konstant.

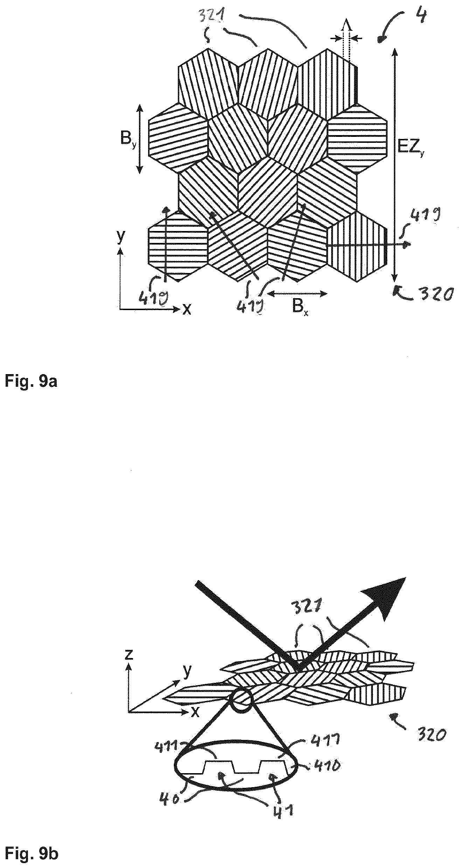

Die Figuren Fig. 9a und Fig. 9b verdeutlichen nun beispielhaft eine derartige Ausführungsform. Fig. 9a zeigt eine Draufsicht auf einen eine Zelle 320 ausbildenden Teilbereich der Mikrostruktur 4. Die Zelle 320 umfasst mehrere Teilbereiche 321, in welchen die Grundelemente 41 jeweils periodisch aufeinander abfolgen. Dies ist beispielhaft in Fig. 9b erläutert. So weist in den Bereichen 321 die Mikrostruktur 4 die Grundfläche 40 und die Grundelemente 41 mit den Elementflächen 411 und den Flanken 410 auf. Die Grundelemente 41 sind hierbei in Form von Stegen ausgebildet, deren Querschnitt in der unteren Darstellung von Fig. 9b gezeigt ist und deren Erstreckung in der x/y-Ebene in den Figuren Fig. 9a und Fig. 9b durch eine entsprechende Linie angedeutet ist. Der Querschnitt der Grundelement 410 des jeweiligen Teilbereichs 321 ist hierbei identisch und die Projektion der Grundelemente 41 auf die Grundebene folgt, wie in den Figuren Fig. 9a und Fig. 9b angedeutet, in Richtung eines jeweiligen Azimutwinkels 419 periodisch aufeinander. Die Mikrostruktur 4 ist damit in den Teilbereichen 321 jeweils durch die Parameter-Azimutwinkel 419 durch die Grundelementeform, beispielsweise die stegförmige Formgebung gemäß der unteren Darstellung nach Fig. 9b, und durch die Spatialfrequenz und damit die Periode bestimmt, in welchem die Grundelemente 41 in Richtung des Azimutwinkels 416 aufeinander abfolgen.

Vorzugsweise sind nun ein oder mehrere der Parameter-Azimutwinkel, Grundelementeform und/oder Spatialfrequenz der in der Zelle 320 angeordneten Teilbereiche 321 von Teilbereich 321 zu Teilbereich 321 pseudo-zufällig innerhalb eines für die Zelle 320 vordefinierten Variationsbereichs variiert.

Die in Fig. 9a gezeigt Zelle 320 weist so beispielsweise Teilbereiche 321 auf, bei denen der Azimutwinkel 419 und damit die Orientierung der Grundelemente 41 in den verschiedenen Teilbereichen 321 pseudo-zufällig variiert ist. So variiert beispielsweise der Azimutwinkel pseudo-zufällig und damit isotrop zwischen 0 und 180 Grad in 15 Grad-Schritten. Der Abstand der Elementflächen der Grundelemente 41 in den Teilbereichen 321 ist hierbei vorzugsweise konstant, kann jedoch auch ebenfalls pseudo-zufällig variiert werden.

Die pseudo-zufällige Ausrichtung des Azimutwinkels 419 kann den gesamten Winkelbereich von minus 180 Grad bis plus 180 Grad umfassen. Es ist jedoch auch vorteilhaft, den Winkelbereich und damit den Variationsbereich der pseudo-zufälligen Variation einzuschränken. So ist es weiter bevorzugt, den Azimutwinkel 419 zwischen minus 90 Grad und plus 90 Grad, weiter bevorzugt zwischen minus 30 Grad und plus 30 Grad zu variieren.

Weiter ist es auch vorteilhaft, die Mikrostruktur 4 in den Bereichen 31 und 32 bzw. in Teilbereichen der Bereiche 31 und 32 in Form eines Kreisgitters auszubilden, bei welchem die Grundelemente 41 vorzugsweise eine kreisringförmige Formgebung besitzen.

Allgemein gilt für die vorhergehend erläuterten Mikrostrukturen, dass die Periode, in welcher die Grundelemente 41 aufeinander periodisch abfolgen, bevorzugt im Bereich von 0,75 μm bis 10 μm liegt. Die Größe der Teilbereiche 321 liegt vorzugsweise im Bereich von 5 μm bis 100 μm und weiter bevorzugt zwischen 10 μm und 30 μm. Die Größe der Zellen 320 wird vorzugsweise zwischen 40 μm und 300 μm, weiter bevorzugt zwischen 80 μm und 200 μm gewählt. Auch hier können die Grundelement gemäß den Ausführungen nach Fig. 8a und Fig. 8b mehrstufig mit mehreren Elementflächen ausgebildet sein. Die mehreren Stufen können symmetrisch sein - d. h. wie eine auf- und dann wieder absteigende Treppe - oder asymmetrisch sein - d. h. wie eine nur auf- oder nur absteigende Treppe. Bevorzugt liegt der Abstand der Elementflächen 411 von der Grundfläche 40 im Bereich von 150 nm bis 2000 nm, weiter bevorzugt im Bereich von 200 nm bis 1000 nm und weiter bevorzugt im Bereich von 200 nm bis 500 nm.

Im Unterschied zu den anhand der Figuren Fig. 2a bis Fig. 8b erläuterten Ausführungsformen trifft bei dem nicht erfindungsgemäßen Dekorelement nach Fig. 9a und Fig. 9b der komplementäre Farbeindruck nicht in Streulicht, sondern in der Diffraktion in erster und teilweise höherer Ordnung auf. Die Diffraktion erscheint dabei nicht als Regenbogenfarbeneffekt oder zumindest nur stark abgeschwächt. Aufgrund der Energiehaltung geht ein Großteil des Lichts, welcher nicht konstruktiv in der nullten Beugungsordnung abgelenkt wird, in die erste oder höhere Beugungsordnung, sodass der Farbeindruck bei zumindest einer Betrachtung außerhalb der nullten Beugungsordnung weitgehend durch den komplementären Farbeindruck der Farbe bei Betrachtung in der nullten Beugungsordnung bestimmt wird. Vorzugsweise ist die Periode und Ausformung der Grundelemente 41 hier so zu wählen, dass ein Großteil des aus der nullten Beugungsordnung abgelenkten Lichts in einem Winkelbereich β von +/- 30 Grad um die nullte Beugungsordnung abgelenkt wird, um den wie vorhergehend erläuterten vorteilhaften optischen Effekt zu erzielen.

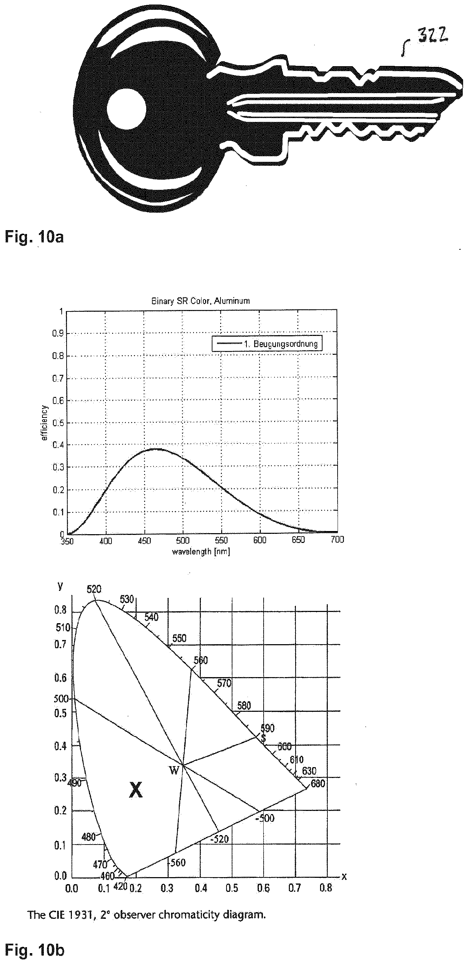

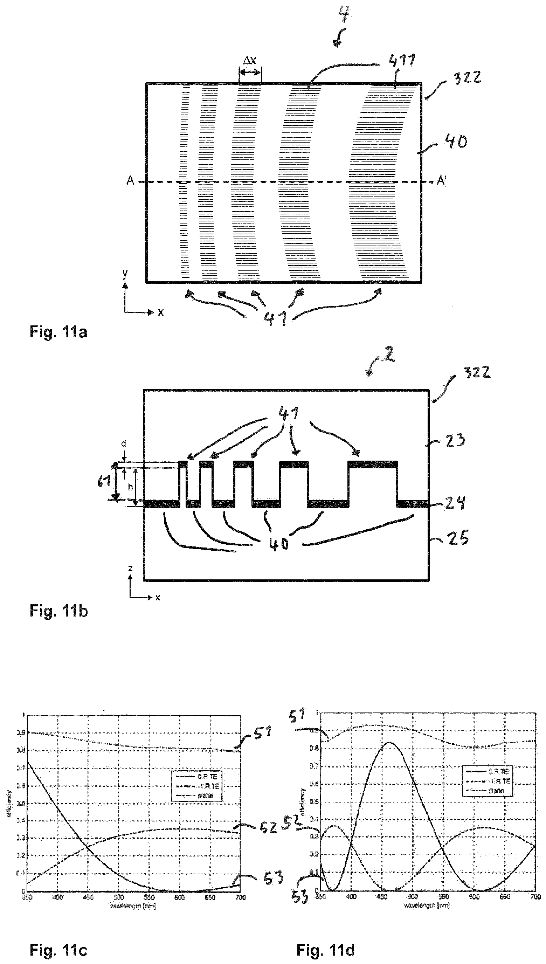

Gemäß einer weiteren bevorzugten Ausführungsform der Erfindung sind in den Bereichen 31 bzw. 32 bzw. in einem Teilbereich der Bereiche 31 und 32 die Grundelemente 41 der Mikrostruktur 4 einer nicht periodischen Funktion folgend positioniert. Fig. 10 zeigt beispielhaft eine Draufsicht auf einen Bereich 322 des Dekorelements 2, welcher die in Fig. 10a gezeigte optische Information mittels einer derartigen Anordnung der Grundelemente generiert. Fig. 10b zeigt ein zugeordnetes Spektrum eines ersten Farbeindrucks sowie das zugehörige Farbdiagramm. Die Strukturtiefe ist h = 350 nm und die Struktur grenzt an Luft, d. h. n = 1,0. Die Grundelemente sind hierbei mit einem Abstand 61 der Elementflächen 411 und der Grundfläche 40 von 330 nm angeordnet und die Anordnung der Grundelemente auf der Grundebene sowie die Ausformung der Projektion der Grundelemente auf die Grundebene sind wie in nachfolgend anhand der Figuren Fig. 11a bis Fig. 11d erläutert ausgebildet. Für den Betrachter ist so beispielsweise im Bereich 322 die Form eines dreidimensionalen Objektes, beispielsweise des in der Darstellung nach Fig. 10a gezeigten Schlüssels sichtbar. In den Bereichen des dreidimensionalen Objekts, welche eine starke Krümmung visualisieren, erscheint die Darstellung des dreidimensionalen Objektes bläulich. In den anderen Bereichen erscheint das dreidimensionale Objekt in gelber Farbe. Beim Verkippen des Dekorelements verändern sich die blau und gelb erscheinenden Flächen entsprechend, sodass ein dreidimensionaler Eindruck des dreidimensionalen Objektes von dem Dekorelement visualisiert wird.

Fig. 11a zeigt nun eine Draufsicht auf einen Ausschnitt des Bereichs 322, bei Betrachtung senkrecht zu der von der Grundebene aufgespannten Ebene. Fig. 11b zeigt eine entsprechende Schnittdarstellung des Dekorelements 2 in einem Teilbereich des Bereichs 322 entlang der Linie A-A' aus Fig. 11a.

In dem Teilbereich 322 weist das Dekorelement 2 so die Kunststoffschichten 23 und 25 sowie die Reflexionsschicht 24 auf. Weiter ist die Mikrostruktur 4 vorgesehen, welche in dem Teilbereich 322 die Grundfläche 40 sowie die Grundelemente 41 aufweist, deren Elementflächen 411 von der Grundfläche 40 in dem Abstand 61 in Richtung der z-Achse beabstandet sind. Die Grundelemente 41 sind hierbei - wie in den Figuren Fig. 11a und Fig. 11b gezeigt - im Allgemeinen nicht in einer periodischen Abfolge angeordnet und unterscheiden sich weiter auch durch die Ausformung und Größe der Projektionen auf die Grundebene. Die Anordnung der Grundelemente 41 und die Flächenabmessung der Projektionen der jeweiligen Grundelemente 41 in dem Bereich 322 sind hierbei durch eine Funktion bestimmt, welche eine binäre Beugungsstruktur beschreibt, die das einfallende Licht gemäß einer vordefinierten dreidimensionalen Freiformfläche mit ein oder mehreren Freiformelementen ablenkt. Ein solches Freiformelement kann beispielsweise von einem Ausschnitt einer Oberfläche eines dreidimensionalen Objektes gebildet werden, wie dies beispielsweise der Darstellung nach Fig. 10 erfolgt ist. Hier wird das Freiformelement von einem Ausschnitt der Oberfläche eines dreidimensionalen Objekts, nämlich eines Schlüssels gebildet. Weiter ist es auch möglich, dass Freiformelemente Vergrößerungs-, Verkleinerungs- und/oder Verzerrungseffekte erzeugende Freiformelemente in Form eines alphanumerischen Zeichens, einer geometrischen Figur oder eines sonstigen Objektes sind.

Die binäre Beugungsstruktur kann hierbei beispielsweise mittels eines lithographischen Maskenprozesses oder mittels eines lithographischen Direktschreibprozesses (z. B. Ebeam oder Laserwriter) erzeugt werden. So ist es beispielsweise möglich, die dreidimensionale Oberfläche des Freiformelements optisch zu erfassen und in Abhängigkeit von der jeweiligen Krümmung des dreidimensionalen Objekts die Beabstandung der Grundelemente und die Flächengröße der Projektion der Grundelemente zu variieren, um so beispielsweise eine Darstellung nach Fig. 10 zu erzeugen: Die Projektionen der Grundelemente bzw. die Elementflächen der Grundelemente wird somit in Abhängigkeit von der lokalen Wölbung des dreidimensionalen Objektes gewählt, wobei im Bereich einer starken Wölbung die Beabstandung der Grundelemente sowie die Flächenabmessung der Projektionen bzw. der Elementflächen quer zum Verlauf der Wölbung verkleinert werden. Es ergibt sich somit eine im Wesentlichen konzentrisch verlaufende Anordnung der Projektionen bzw. Elementflächen parallel zu den Bereichen starker Wölbung des dreidimensionalen Objektes, wobei die Beabstandung der Grundelemente sowie die Flächenausdehnungen der Projektionen der Grundelemente quer zu den Bereichen der Wölbungen variieren und Minima im Bereich der größten Wölbungen besitzen.

Fig. 11a und Fig. 11b zeigen beispielhaft einen Ausschnitt aus einer derartigen Anordnung der Grundelemente. Die hauptsächlich zu dem Farbeindruck beitragenden Grundelemente 41 im Bereich der Wölbungen der Freiformflächen weisen eine laterale Ausdehnung in der x/y-Ebene in mindestens einer Richtung im Bereich von 0,25 $\mu$m bis 500 $\mu$m, bevorzugt zwischen 4 $\mu$m und 100 $\mu$m auf. Die Breite der Grundelemente 41 in dem in Fig. 11a gezeigten Ausschnitt sowie die Beabstandung der Grundelemente beträgt so entlang der Schnittlinie A-A' Abmessungen aus dem vorgenannten Bereich. Die Variation der Breite der Grundelemente 41 sowie der Zwischenräume zwischen den Grundelemente 41 folgt hier einer Funktion f (x, y), die die Form der Freiformfläche und - wie oben dargelegt - die Änderung der Steigerung der Freiformfläche in Bezug auf die z-Achse widerspiegelt. Der Abstand 61 der Elementflächen 41 von der Grundfläche 40 wird wie oben dargelegt gewählt. Überraschenderweise hat sich anhand von praktisch hergestellten Prototypen gezeigt, dass durch die deutliche größere Wahl der Strukturtiefe 61 gemäß den vorhergehend diskutierten Grundsätzen der optische Effekt einer dreidimensionale Freiformfläche nur unwesentlich verändert und eine zusätzliche Farbinformation erzeugt wird. Durch die entsprechende Wahl des Abstands 61 wie oben dargelegt erhält die erste oder höhere Beugungsordnung eine Farbmodulation, die als klare Nicht-Regenbogenfarbe erscheint, in Kombination mit dem unverändert bleibenden Effekt einer dreidimensionalen Freiformfläche. Die erste Beugungsordnung weist meist einen komplementären Farbeindruck im Vergleich zum direkt reflektierten Lichtstrahl auf. Das einfallende Licht, welches weder konstruktiv in die nullte Beugungsordnung reflektiert wird, noch gestreut wird, findet sich weitgehend in der ersten Beugungsordnung wieder. Durch die Ausstattung des Effekts einer dreidimensionalen Freiformfläche mit einer definierten Farbe ergibt sich nicht nur eine einfache Farbigkeit, sondern ein visuell sehr attraktives Zusammenspiel von Farbeffekten mit räumlichen Effekten einer dreidimensionalen Freiformfläche, ähnlich der in der Natur vorkommenden strukturell, zum Teil metallisch erscheinenden Farbeffekte aus Schmetterlingsflügeln (z. B. Blue Morpho Didius). Dieses Zusammenspiel von Farbeffekten und Effekten der dreidimensionalen Formfreifläche ist für die visuelle Wahrnehmung von großer Bedeutung. So wird der in der Darstellung nach Fig. 10a im Bereich 322 dargestellte Schlüssel in seiner Wahrnehmbarkeit im Wesentlichen durch die in die erste Ordnung gebeugten und farbveränderten Anteile des reflektierten Lichts bestimmt, welches bläulich erscheint, und das in nullter Ordnung reflektierte Licht, welches gelblich erscheint, tritt in der Wahrnehmung eher zurück.

Fig. 11c und Fig. 11d verdeutlichen so die unterschiedliche Wirkung der Mikrostruktur 4 bei entsprechender Veränderung des Abstands zwischen Elementflächen 411 und Grundfläche 40 entsprechend dem Abstand 61 (h = 300 nm) in Fig. 11d und bei einer geringeren Wahl des Abstands (h = 100 nm) in Fig. 11c. Eine Mikrostruktur nach Fig. 11c zeigt im sichtbaren Spektralbereich keine ausgeprägte Abhängigkeit der Beugungseffizienz von der Wellenlänge und somit einen bekannten Regenbogenfarbeffekt bei Betrachtung mit dem menschlichen Auge. Eine solche Mikrostruktur zeigt praktisch keinen einprägsamen Farbeffekt im Sinne der Erfindung, der erst bei einer deutlich ausgeprägten Abhängigkeit der Beugungseffizienz von der Wellenlänge auftritt, wie z. B. in Fig. 11d dargestellt.

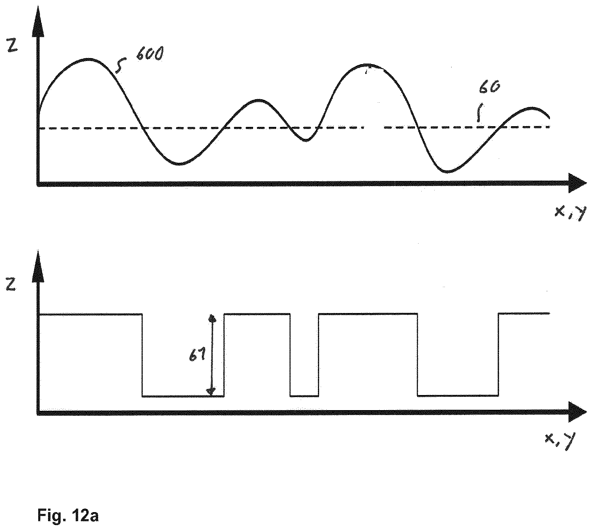

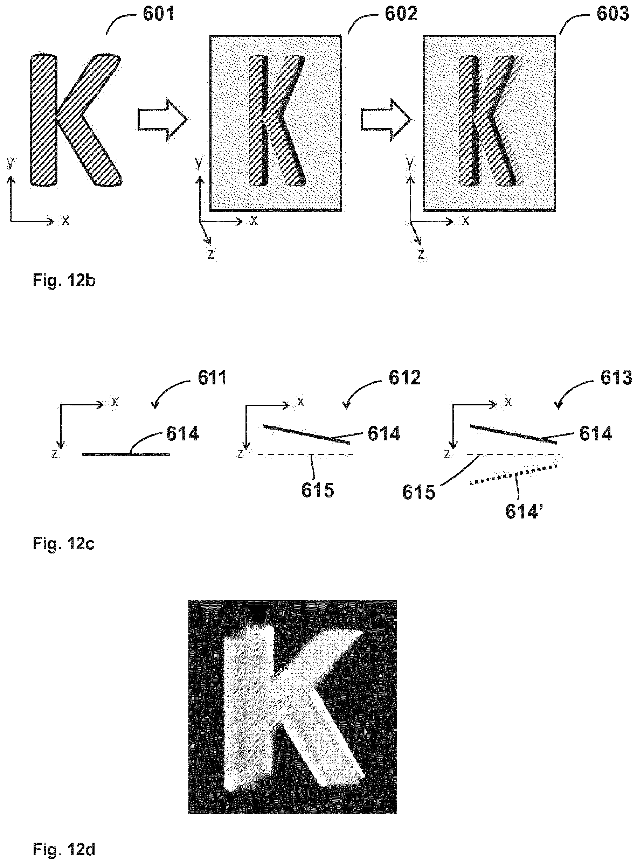

Eine weitere Variante einer Anordnung der Grundelemente 41 gemäß einer nicht periodischen Funktion wird im Folgenden anhand von Fig. 12 beschrieben.

Hier wird ein Hologramm eines oder mehrerer virtueller 2D-und/oder 3D-Objekte berechnet und idealerweise sowohl die Amplitude als auch die Phase des Hologramms hierbei berechnet und das Hologramm binarisiert. Als Funktion wird so beispielsweise ein binäres computergeneriertes Hologramm (CGH = Computer Generiertes Hologramm), beispielsweise ein Kinoform eingesetzt.

Fig. 12a zeigt die Binarisierung anhand eines möglichen Phasenverlaufs 600 eines computergenerierten Hologramms. Gezeigt ist eine schematische Darstellung eines Schnitts mit Höhe in z-Richtung als Funktion der Position in x/y-Richtung. Bei der Binarisierung wird der Phasenwert oberhalb eines Grenzwerts 60, welcher durch eine gestrichelte Linie angedeutet ist, auf einen Maximalwert der Höhe gesetzt und unterhalb auf einen Minimalwert der Höhe. Wie in der unteren Darstellung von Fig. 12a gezeigt, ergibt sich damit eine binäre Funktion. Die Differenz zwischen Maximalwert der Höhe und dem Minimalwert der Höhe wird nun entsprechend dem wie vorhergehend bestimmten Abstand 61 gewählt und bestimmt so den Farbeindruck des entsprechenden Bereichs des Dekorelements 2. Die für die Rekonstruktion des Hologramms optimale Laserwellenlänge ist zweimal die Stufenhöhe mal dem Brechungsindex des umgebenen Mediums, wobei hier als Stufenhöhe der Abstand 61 gewählt ist. Bei dieser Ausführungsform der Erfindung wird die Flächenbelegung von der Hologramminformation und dem Binarisierungsalgorithmus bestimmt.

Ein Beispiel für ein computergeneriertes binäres Hologramm ist schematisch in Fig. 12b und 12c gezeigt.

In Fig. 12b links ist die Vorlage 601, welche zur Berechnung des Hologramms verwendet wird gezeigt. In diesem Fall ist dies der Buchstabe "K". In der Mitte ist das auf Basis dieser Vorlage 601 gewünschte Zielbild 602 gezeigt, welches als Hologramm berechnet wird. Das K schwebt hierbei hinter der Hologrammebene, wobei die rechte Kante des K's näher an der Hologrammebene ist als die linke Kante. Dies ist durch den Schattenwurf angedeutet. Rechts ist dann die Rekonstruktion 603 der Binarisierung des berechneten computergenerierten Hologramms gezeigt.

Fig. 12c zeigt schematisch den jeweiligen Schnitt 611, 612 bzw. 613, d. h. einen Schnitt in der x/z-Ebene. Links, d. h. bei dem Schnitt 611, liegt das K 614 in der Hologrammebene. In der Mitte, d. h. bei dem Schnitt 612, wird das K 614 hinter der Hologrammebene 615 dargestellt. Rechts in Fig. 12c ist der Schnitt 613 der Rekonstruktion des Hologramms durch das binäre computergenerierte Hologramm dargestellt. Da das Hologramm binär ist, entsteht nicht nur das Zielbild, sprich das K 614 hinter der Hologrammebene 615, sondern auch das Spiegelbild 614', welches vor der Hologrammebene 615 zu schweben scheint.

Die Rekonstruktion mit Tiefe und die Überlagerung der beiden Bilder führt neben dem Farbeffekt in Form des "K" zusätzlich noch zu einem Bewegungseffekt beim Verkippen. In der Regel dominiert bei der Rekonstruktion jedoch das rekonstruierte K für welches das Hologramm berechnet wurde, hier das hintere K, siehe auch Fig. 12d, welche ein Foto eines derartigen binären Hologramms zeigt.

Weiter ist es auch möglich, bei der vorhergehend beschriebenen Ausgestaltung der Mikrostruktur gemäß den Figuren Fig. 11a bis Fig. 12a - c nicht nur Grundelemente mit einer Elementfläche, sondern auch Grundelement mit zwei oder mehr Elementflächen gemäß dem Ausführungsbeispiel nach Fig. 8a und Fig. 8b einzusetzen, sodass die diesbezüglichen Ausführungen auch hier analog gelten.

Gemäß einer weiteren Ausführungsform weisen die Grundelemente 41 der Mikrostrukturen in den Bereichen 31 und 32 nicht eine einheitliche Beabstandung der Elementflächen von der Grundfläche auf. Neben ein oder mehreren ersten Zonen, in welchen der Abstand der Elementflächen der Grundelemente 41 von der Grundfläche 40 dem Abstand 61 oder einem Vielfachen des Abstands 61 (siehe Ausführungsform nach Fig. 8a, 8b) entspricht, weist die Mikrostruktur in den Bereichen 31 noch ein oder mehrere zweite und/oder dritte Zonen auf, in denen die Elementflächen in Richtung der Koordinatenachse z von der Grundfläche 40 mit einem zweiten bzw. dritten Abstand oder einem Vielfachen eines zweiten bzw. dritten Abstands beabstandet sind, der vom ersten Abstand unterschiedlich ist. Der zweite und dritte Abstand ist hierbei so gewählt, dass durch Interferenz des an der Grundfläche 40 und den Elementflächen 41 reflektierten Lichts im Auflicht in der ersten Beugungsordnung oder im Streulicht und/oder durch Interferenz des durch die Elementflächen 411 und die Grundflächen 40 transmittierten Lichts im Durchlicht in der ersten oder höheren Beugungsordnung oder im Streulicht eine dritte bzw. vierte Farbe in den ein oder mehreren zweiten bzw. dritten Zonen generiert wird, die sich von der ersten Farbe unterscheidet.

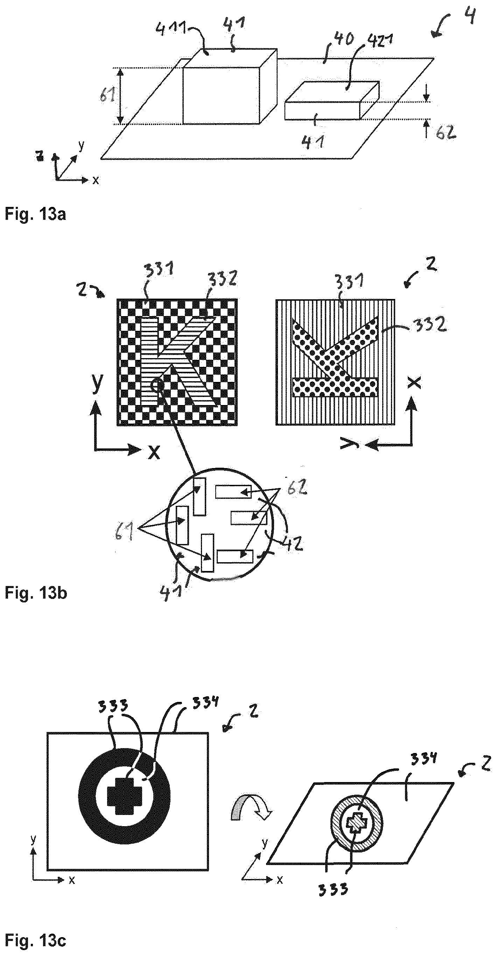

Fig. 13a zeigt nun einen Bereich der Mikrostruktur 4, in welchem auf der Grundfläche 40 zwei Grundelemente 41 vorgesehen sind. Die Elementfläche 411 des einen Grundelements 41 ist von der Grundfläche 40 in Richtung der z-Achse in dem Abstand 61 beabstandet und die Elementfläche 421 des anderen Grundelements 41 ist in Richtung der z-Achse von der Grundfläche 40 in einem Abstand 62 beabstandet.

Besteht die Mikrostruktur 4 aus einer Mischung von Grundelementen 41 mit unterschiedlichen Abständen 61 und 62, so ergibt sich ein entsprechender Farbeindruck, welcher aus einer Mischung der Einzelfarbeindrücke gebildet ist.

Dieser Effekt lässt sich beispielsweise vorteilhaft mit der Verwendung von asymmetrischen Grundelementen kombinieren, wie diese vorhergehend anhand der Figuren Fig. 5a bis Fig. 6b beschrieben worden sind. Weiter lässt sich dies weiter auch vorteilhaft mit der Verwendung von periodisch angeordneten Grundelemente oder einer Funktion folgenden Grundelementen kombinieren, wie dies vorhergehend anhand der Figuren Fig. 9a bis Fig. 12 beschrieben worden sind.

So zeigt Fig. 13b beispielsweise eine Ausgestaltung, bei der in einer ersten Bereich 332 asymmetrische Grundelemente 41 mit einem Abstand 61 und asymmetrische Grundelemente 42 mit einem Abstand 62 vorgesehen sind. Wie in Fig. 13b der unteren Darstellung angedeutet, weisen die Grundelemente 41 nicht nur einen unterschiedlichen Abstand der Grundflächen von den Elementflächen auf, sondern auch eine unterschiedliche Vorzugsrichtung und schließen so in dem Ausführungsbeispiel nach Fig. 13b bezüglich ihrer Vorzugsrichtung einen 90 Grad-Winkel ein. Weiter ist der Bereich 332 musterförmig als in Form eines K ausgebildeter Vordergrundbereich ausgebildet, der von einem Hintergrundbereich 332 umgeben wird. Bei dieser Anordnung lässt sich durch Drehung des Dekorelements 2 um eine senkrecht zur Grundebene stehende Achse folgender Farbeffekt erzielen: Erzeugen beispielsweise die Grundelemente 41 mit dem Abstand 61 für einen bestimmten Betrachtungswinkel α* und bei Betrachtung parallel zu der Längsachse des Grundelements (also in y-Richtung) ein deutlich sichtbaren, rötlichen Farbeindruck im Streulicht, bei Drehung um 90 Grad (Beibehaltung des Betrachtungswinkels α*) einen (nur schwach sichtbaren) rötlich oder keinen Farbeindruck und die Grundelemente 42 mit dem Abstand der Elementflächen von der Grundfläche 62 für diesen Betrachtungswinkel α* und bei Betrachtung parallel zur Längsachse der Grundelemente (also in x-Richtung) einen deutlich sichtbaren, grünlichen Farbeindruck bei Streulicht und bei Drehung um 90 Grad (bei Beibehaltung des Betrachtungswinkels α* einen nur schwach sichtbaren grünlichen oder keinen Farbeindruck, so weist das Sicherheitselement einen Farbdreheffekt von einem rötlichem K nach grünem Hintergrund auf. Zusammen ergibt dies einen sehr deutlich erkennbaren Farbeffekt mit einem Sicherheitsmerkmal hoher Sicherheit.

Weiter ist es auch möglich, dass in den Bereichen 31 und 32 oder in einem Teilbereich der Bereiche 31 und 32 eine Mikrostruktur vorgesehen ist, welche Grundelemente 41 mit verschiedenen Abständen 61 und 62 verwendet, wobei die Grundelemente nicht gemischt werden, sondern in mindestens zwei makroskopischen Bereichen vorliegen. Die laterale Größe dieser Bereiche ist typischerweise größer als 300 μm und kleiner als 50 mm. Die makroskopischen Bereiche können hierbei in Form von Logos, Schriftzeichen oder ähnlichem ausgebildet sein. Fig. 13c verdeutlicht nun ein Ausführungsbeispiel dieser Ausführungsform, wobei hier erste Zonen 333 vorgesehen sind, in welchen Grundelemente 41 mit einem Abstand 61 der Elementflächen von der Grundfläche vorgesehen sind und mehrere zweite Zonen 334, in denen Grundelemente 41 mit einem Abstand 62 der Elementflächen von der Grundfläche vorgesehen sind. Es zeigt sich beispielsweise der in Fig. 13c verdeutlichte Effekt, bei dem sich bei Verkippung des Dekorelements 2 um die x-Achse ein Kontrastwechseleffekt ergibt und beispielsweise der Kreis in der einen Verkippung stark grünlich erscheint und der Hintergrund violett und bei Verkippung um ca. 20 Grad sich die Farbeindrücke dieser Bereiche vertauschen.

Sind die Grundelemente der einen Zone als symmetrische Grundelemente und die der anderen Zone als asymmetrische Grundelemente ausgebildet, so ist die eine Zone farbkonstant bei Drehung, während die andere Zone in der Helligkeit der Farbe variiert und so beispielsweise die im Hintergrund angeordneten Zonen 334 in der Helligkeit ihrer Farbe variieren.

Weiter ist es auch möglich, dass in den Zonen 333 und 334 die Flächenbelegung der Grundebene mit den Grundelementen variiert wird, um so die Farbhelligkeit der jeweiligen Zone zur Generierung eines Graustufenbildes zu variieren. Bei einer Flächenbelegung eines jeweiligen Teilbereichs der Zonen 333 und 334 mit den Grundelementen nahe 50 % ergibt sich die größte Helligkeit der Farbe und bei einer Verringerung oder Erhöhung der Flächenbelegung des jeweiligen Teilbereichs verringert sich die Helligkeit der Farbe. Der Farbwert der Farbe wird durch den Abstand der Elementflächen der Grundelemente der Grundfläche bestimmt, d. h. durch die Abstände 61 und 62 der Grundelemente 41 bestimmt. So ist es beispielsweise möglich, dass auf diese Weise eine zusätzliche Information in die Zonen 334 oder 333 kodiert wird, so beispielsweise die Zone 334 noch ein in Graustufendarstellung sichtbares Porträt einer Person als zusätzliche Information aufweist.

Die Helligkeit dieses Graustufenbildes kann im Weiteren auch durch die Überlagerung mit weiteren Gitterstrukturen variiert werden. Besonders vorteilhaft ist es hierbei, Mottenaugenstrukturen vorzusehen. Diese Strukturen werden vorzugsweise von Kreuzgittern oder Hexagonalgittern mit einer Periode im Bereich von 200 nm bis 400 nm und einer Gittertiefe/Periodenverhältnis zwischen 0,5 und 2 bereitgestellt. Durch die Verwendung solcher Mottenaugenstrukturen lassen sich Teilbereiche der Zonen 333 und 334 dunkler gestalten und auf diese Weise ein Graustufenbild generieren. So ist es beispielsweise auch möglich, das Graustufenbild nur durch die gezielte, partielle Überlagerung der Zonen 333 und 334 mit solchen Mottenaugenstrukturen zu erzeugen und so beispielsweise die Flächenbelegung mit den Grundelementen innerhalb der Zonen 333 und 334 konstant zu halten und die Helligkeitsstufe nur dadurch einzustellen, dass die Zonen 333 und 334 in Teilbereichen partiell mit Mottenaugenstrukturen überlagert werden.

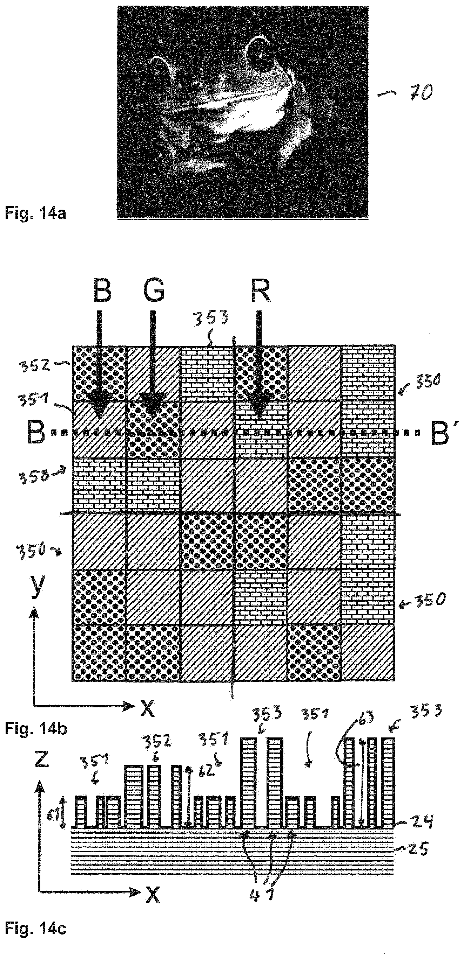

Weiter ist es auch möglich, durch den Einsatz von ersten, zweiten und dritten Zonen mit unterschiedlichen Abständen 61, 62 und 63 der Elementflächen von den Grundflächen Mehrfarbenbilder oder Echtfarbenbilder zu erzeugen. Fig. 14a zeigt so beispielsweise ein Echtfarbenbild 70. Der Bildbereich des Echtfarbenbilds 70 wird nun in eine Vielzahl von Bildpunktbereichen unterteilt und der Farbwert sowie die Farbhelligkeit in dem jeweiligen Bildpunktbereich bestimmt. Anschließend wird ein Bildbereich des Dekorelements 2 in eine Vielzahl von Bildpunktbereichen unterteilt und in jedem der Bildpunktbereiche erste, zweite und/oder dritte Zonen derart angeordnet, dass die für den jeweiligen Bildpunktbereich festgelegten Farb- und Farbhelligkeitswerte von der Mikrostruktur 4 generiert werden. Fig. 14b zeigt so beispielsweise einen Ausschnitt aus einem solchen Bildbereich mit vier Bildpunktbereichen 350. In den Bildpunktbereichen 350 sind jeweils mehrere Zonen 351, 352 und 353 vorgesehen. Die in den Zonen 351, 352 und 353 angeordneten Grundelemente weisen einen unterschiedlichen Abstand der Elementflächen von der Grundfläche auf, nämlich den Abstand 61, 62 und 63 auf, wie dies auch in der Schnittdarstellung nach Fig. 14c gezeigt ist. Der Schnitt ist in Fig. 14b mit B-B' gekennzeichnet. Die Ausformung und Anordnung der Grundelemente 41 in der jeweiligen Zone 351, 352 und 353 ist hierbei vorzugsweise gemäß den vorgehenden Ausführungen nach Fig. 2a bis Fig. 12 gewählt.

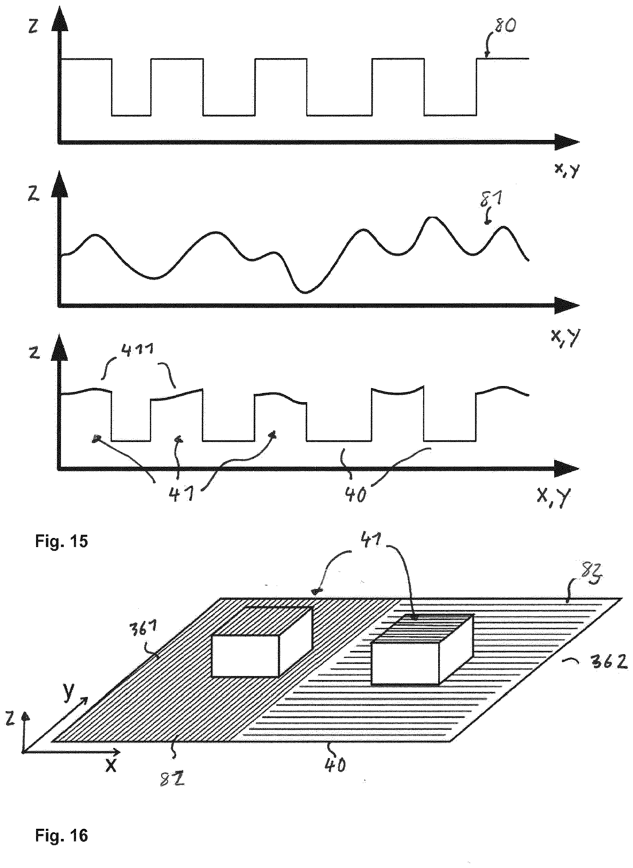

Weiter ist es bei den vorgehend anhand der Figuren Fig. 2a bis Fig. 14 beschriebenen Ausführungsformen der Mikrostruktur 4 auch möglich, zusätzlich eine versteckte Information in den Bereichen 31 und 32 vorzusehen. Hierzu ist es beispielsweise möglich, wie anhand der Fig. 15 verdeutlicht, zuerst gemäß den obigen Ausführungen eine Mikrostruktur 80 auszubilden und sodann in einem zweiten Schritt die Elementflächen und/oder die Grundfläche der Mikrostruktur durch die Belichtung eines Hologramms 81 oder Schreiben eines computergenerierten Hologramms leicht zu modulieren. Hierdurch ändert sich lokal die Höhe der Elementflächen bzw. Grundfläche leicht. Dies stört zwar die Interferenz und ändert damit die Farbe der Mikrostruktur 4, wie dies in der unteren Darstellung von Fig. 15 gezeigt ist, weshalb die Modulation auch gering ausfallen muss. Gleichzeitig wird der Mikrostruktur 80 jedoch die Bildinformation des Hologramms hinterlegt, welche jedoch aufgrund der geringen (leichten) Modulation von starkem Rauschen begleitet wird. Die Stärke der Modulation kann im Bereich von +/- 50 % der Höhe liegen, liegt jedoch bevorzugt im Bereich +/- 20 % und weiter bevorzugt im Bereich +/- 10 %. Wird nur die Elementfläche oder die Grundfläche moduliert, sind die Farbeffekte der Mikrostruktur stärker ausgeprägt und damit sichtbar. Die Bildinformation des Hologramms ist jedoch dafür wie oben erwähnt stark verrauscht. Werden beide Ebenen moduliert, ist die Störung der Farbeffekte stärker. Die Bildinformation des Hologramms ist dafür wenig verrauscht. Bei Betrachtung im Umgebungslicht ist die versteckte Information nicht oder nahezu kaum sichtbar (aufgrund der sehr geringen Modulation). Bei Beleuchtung mit geeignetem Laserlicht erscheint das Hologramm. Die für die Rekonstruktion des Hologramms optimale Laserwellenlänge ($\lambda$) ist zweimal der Abstand (h) 61-mal dem Brechungsindex (n) des umgebenden Mediums ($\lambda = 2*h*n$).

Eine weitere, in Fig. 16 gezeigte, Ausgestaltung sieht eine Modulation der Elementfläche der Grundelemente 41 und/oder der Grundfläche 40 mit einer speziellen Gitterstruktur vor. So sind beispielsweise in einem Bereich 361 die Grundfläche und die Elementfläche der Grundelemente 41 mit einer diffraktiven Struktur 82 und in einem Bereich 362 die Grundfläche 40 und die Elementflächen der Grundelemente 41 mit einer diffraktiven Struktur 83 moduliert. Die diffraktiven Strukturen 82 und 83 unterscheiden sich hierbei in der Ausrichtung ihrer Gitterlinien, wie dies in Fig. 16 angedeutet ist. Die Gitterstrukturen können linear, gekreuzt oder hexagonal sein. Die Gitterperiode der Gitter 82 und 83 ist vorzugsweise zwischen 100 nm und 2000 nm, weiter bevorzugt zwischen 200 nm und 500 nm gewählt. Die Gitter 82 und 83 können Teil eines Designs sein. Insbesondere können die Gitter 82 und 83 Polarisationsgitter nullter Ordnung sein. Dadurch lassen sich Bereiche mit einem Logo oder Hintergrund versehen, welches TE-polarisiert ist und andere Bereiche, z. B. der Hintergrund des Logos oder Bildes, mit der orthogonalen Polarisation TM. TE bezeichnet hierbei eine transversalelektrische Welle (TE = transversal elektrisch) und TM eine transversal magnetische Welle (TM = transversal magnetisch). Mit Bezug auf Lineargitter wird unter TE-polarisiertem Licht dasjenige verstanden, bei dem die elektrische Feldkomponente parallel zu den Gitterlinien steht und unter TM-polarisiertem Licht dasjenige, bei dem die elektrische Feldkomponente senkrecht zu den Gitterlinien steht. Das Logo oder Bild erscheint bei Betrachtung mit einem Polarisationsfilter. Entsprechend können so die Bereiche 361 und 362 als Hintergrund und Musterbereich ausgebildet sein, welche lediglich bei Betrachtung durch einen Polarisator sichtbar werden. Wie bei dem aufmodulierten Hologramm aus Fig. 15 muss die Modulation der Gitterstruktur gering sein, insbesondere im Bereich von +/- 50 % der Höhe liegen, jedoch bevorzugt im Bereich +/- 20 % und weiter bevorzugt im Bereich +/- 10 % liegen. Die Modulationstiefe des Hologramms bzw. der Beugungsgitter ist bevorzugt kleiner als 100 nm, besonders bevorzugt kleiner als 50 nm und weiter bevorzugt kleiner als 30 nm. Dadurch stört die Modulation die Interferenz, welche den Farbeffekt erzeugt, nur gering.

Eine weiter bevorzugte Ausgestaltungsform kombiniert die bisher beschriebenen, Farbeffekte generierenden Mikrostrukturen mit refraktiven, achromatischen Mikrospiegeln wie sie beispielsweise in der DE 10 2008 046 128 A1 beschrieben sind.

Hierbei wird die Grundebene durch die Mikrospiegel definiert, d. h. die Grundebene ändert sich von Mikrospiegel zu Mikrospiegel. Die Tiefe der Mikrostrukturen auf den Mikrospiegel, d. h. der Abstand 61 ist bevorzugt gleich, damit der achromatische Effekt der Mikrospiegel mit dem Farbeffekt der Mikrostrukturen überlagert wird.

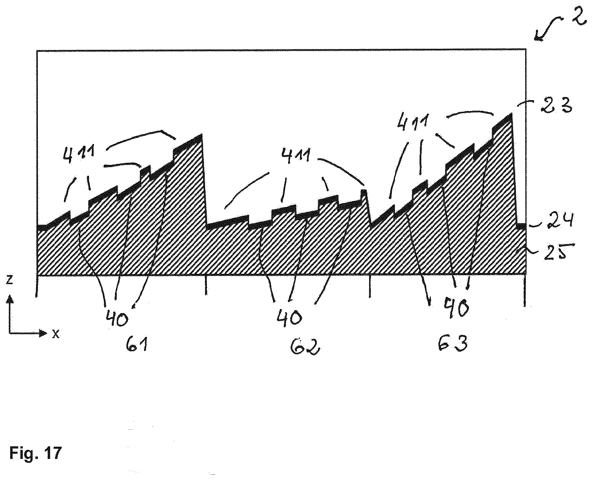

Fig. 17 zeigt diese Ausgestaltungsform in einer schematischen Seitenansicht. In unterschiedlichen Teilbereichen 61, 62 und 63 ist hierbei jeweils eine unterschiedliche Grundebene vorgesehen, welche durch die Mikrospiegel definiert ist, insbesondere durch die in DE 10 2008 046 128 A1 ausgebildeten Mikrospiegel definiert ist. In jedem der Teilbereiche 61, 62 und 63 sind die Elementflächen 411 der Grundelemente sowie die Grundflächen 40 parallel zur jeweiligen Grundebene ausgerichtet. Weiter sind die Grundebenen in den Bereichen 61, 62 und 63 nicht parallel zueinander angeordnet, sondern gegeneinander verkippt, wie in Fig. 17 gezeigt.

**Patentansprüche**

1. Dekorelement (2), wobei das Dekorelement (2) eine Mikrostruktur (4) aufweist, welche im Auflicht und/oder im Durchlicht einen optischen Effekt generiert, wobei die Mikrostruktur (4) in einem ersten Bereich (31, 32) eine Grundfläche (40) und mehrere Grundelemente (41) aufweist, die jeweils eine gegenüber der Grundfläche (40) erhöhte oder versenkte Elementfläche (411) und eine zwischen der Elementfläche (411) und der Grundfläche (40) angeordnete Flanke (410) aufweisen, wobei die Grundfläche (40) der Mikrostruktur eine durch Koordinatenachsen x und y aufgespannte Grundebene definiert, wobei die Elementflächen (411) der Grundelemente (41) jeweils im Wesentlichen parallel zu der Grundebene verlaufen, wobei in zumindest einer oder mehreren ersten Zonen (333, 351) des ersten Bereichs (31, 32) die Elementflächen (311) der Grundelemente (41) und die Grundfläche (40) in einer senkrecht zu der Grundebene in Richtung einer Koordinatenachse z verlaufenden Richtung beabstandet sind mit einem ersten Abstand (61), der so gewählt ist, dass, durch Interferenz des an der Grundfläche und den Elementflächen reflektierten Lichts, im Auflicht und/oder, durch Interferenz des durch die Elementflächen und die Grundflächen transmittierten Lichts, im Durchlicht eine Farbe in den ein oder mehreren ersten Zonen (333, 351) generiert wird, wobei die Ausformung und/oder Positionierung der Grundelemente (41) in dem ersten Bereich (31, 32) oder in zumindest einem ersten Teilbereich des ersten Bereichs pseudo-zufällig variiert ist, wobei die Mikrostruktur so ausgestaltet ist, dass sie die Farbe im Streulicht generiert, wobei in dem ersten Bereich (31, 32) oder in dem zumindest einen ersten Teilbereich des ersten Bereichs einer oder mehrere der Parameter:

Positionierung des Grundelements (41), Beabstandung des Grundelements (41) vom nächsten benachbarten Grundelement, Form- und/oder Flächengröße der Projektion des Grundelements (41) auf die Grundebene und laterale Vorzugsrichtung (418) der Projektion des Grundelements (41) auf die Grundebene der im ersten Bereich (31, 32) bzw. in dem zumindest einen ersten Teilbereich angeordneten Grundelemente (41) pseudo-zufällig innerhalb eines jeweiligen für den ersten Bereich (31, 32) bzw. jeweiligen ersten Teilbereich vordefinierten Variationsbereich variiert ist

**dadurch gekennzeichnet, dass**

die Variationsbereiche wie folgt gewählt sind: Variationsbereich für den Parameter Beabstandung der Grundelemente vom nächsten benachbarten Grundelement: 0,4 $\mu$m bis 50 $\mu$m, und/oder Variationsbereich des Parameters Flächengröße der Projektion des Grundelements auf die Grundebene: Variation zumindest einer lateralen Abmessung der Projektion des Grundelements auf die Grundebenen in einem Variationsbereich von 0,5 $\mu$m bis 30 $\mu$m, wobei in dem ersten Bereich (31, 32) oder in dem zumindest einen ersten Teilbereich des ersten Bereichs die Beabstandung der Grundelemente vom nächsten benachbarten Grundelement und/oder zumindest eine laterale Abmessung der Projektion des Grundelements auf die Grundebene pseudo-zufällig innerhalb des jeweiligen für den ersten Bereich (31, 32) bzw. jeweiligen ersten Teilbereich vordefinierten Variationsbereich variiert ist oder sind.

2. Dekorelement (2) nach Anspruch 1,
   **dadurch gekennzeichnet,**
   **dass** die Parameter, die pseudo-zufällig in einem ersten der ersten Teilbereiche und in einem zweiten der ersten Teilbereiche variiert sind, sich unterscheiden und/oder mindestens ein Variationsbereich der variierten Parameter in einem ersten der ersten Teilbereiche und in einem zweiten der ersten Teilbereiche unterschiedlich gewählt ist, insbesondere der mindestens eine Variationsbereich im ersten der ersten Teilbereiche sich von dem im zweiten der ersten Teilbereiche um mindestens 10 % unterscheidet.

3. Dekorelement (2) nach Anspruch 1 oder 2,
   **dadurch gekennzeichnet,**
   **dass** der vordefinierte Variationsbereich einen vordefinierten Satz von Werten umfasst, vorzugsweise zwischen 5 und 20 Werte umfasst.

4. Dekorelement (2) nach einem der vorhergehenden Ansprüche,
   **dadurch gekennzeichnet,**
   **dass** ein zweidimensionales, von den Koordinatenachsen x und y aufgespanntes Raster für jedes der im ersten Bereich (31, 32) oder im ersten Teilbereich angeordneten Grundelemente (41) eine Regelposition des jeweiligen Grundelements in der Grundebene definiert und dass die Position jeder der Grundelemente (41) im ersten Bereich (31, 32) oder im ersten Teilbereich durch eine pseudo-zufällige Verschiebung aus der jeweiligen Regelposition in Richtung der Koordinatenachse x und/oder in Richtung der Koordinatenachse y bestimmt ist.

5. Dekorelement (2) nach einem der Ansprüche 2 bis 4,
   **dadurch gekennzeichnet,**
   **dass** zumindest eine laterale Abmessung der Projektion des jeweiligen Grundelements (41) auf die Grundebene pseudo-zufällig in einem Variationsbereich von 1 bis 10 $\mu$m variiert ist.

6. Dekorelement (2) nach einem der vorhergehenden Ansprüche,
   **dadurch gekennzeichnet,**
   **dass** eines oder mehrere der Grundelemente (41) symmetrische Grundelemente sind, bei denen die Projektion des Grundelements (41) auf die Grundebene eine symmetrische Form besitzt und/oder dass eines oder mehrere der Grundelemente (41) asymmetrische Grundelemente sind, bei denen die Projektion des Grundelements (41) auf die Grundebene eine asymmetrische Form mit einer lateralen Abmessung in einer parallel zur Grundebene verlaufende Vorzugsrichtung (418) aufweist, welche größer als die laterale Abmessung der Projektion quer zur Vorzugsrichtung (415) ist, insbesondere 50 %, bevorzugt 300 % größer als die laterale Abmessung der Projektion quer zur Vorzugsrichtung (415) ist, wobei insbesondere in dem ersten Bereich (31, 32) oder in einem Teilbereich (312) des ersten Bereichs die Grundelemente (41) asymmetrische Grundelemente sind, welche die gleiche Vorzugsrichtung (318) aufweisen.

7. Dekorelement (2) nach Anspruch 6,
**dadurch gekennzeichnet,**
**dass** in dem ersten Bereich (31, 32) oder in einem Teilbereich (313) des ersten Bereichs die Grundelemente (41) asymmetrische Grundelemente sind, deren Vorzugsrichtung (418) jeweils pseudo-zufällig in einem vordefinierten Variationsbereich variiert ist, wobei als Variationsbereich vorzugsweise ein Winkelbereich von + 180 Grad bis - 180 Grad, weiter bevorzugt von + 90 Grad bis - 90 Grad und weiter bevorzugt von +30 Grad und - 30 Grad gewählt ist.

8. Dekorelement (2) nach Anspruch 6 oder 7,
**dadurch gekennzeichnet,**
**dass** der erste Bereich (31, 32) oder erste Teilbereich des ersten Bereichs eine oder mehrere erste Zellen (314) und/oder eine oder mehrere zweiten Zellen (315) aufweist, dass die in den ersten und zweiten Zellen (314, 315) angeordneten Grundelemente asymmetrische Grundelemente sind, wobei die asymmetrischen Grundelemente der ersten Zellen (314) eine erste Vorzugsrichtung (418) und die asymmetrischen Grundelemente der zweiten Zellen (315) eine zweite Vorzugsrichtung (418) aufweisen, die sich von der ersten Vorzugsrichtung unterscheidet, wobei insbesondere der erste Bereich (31, 32) oder der erste Teilbereich des ersten Bereichs eine oder mehrere dritten Zellen (316) aufweist und dass die in den dritten Zellen (316) angeordneten Grundelemente symmetrische Grundelemente sind.

9. Dekorelement (2) nach Anspruch 8,
**dadurch gekennzeichnet,**
**dass** die eine oder mehreren ersten, zweiten und/oder dritten Zellen (314, 315, 316) zumindest eine laterale Abmessung parallel zur Grundebene von weniger als 300 $\mu$m, insbesondere von weniger als 100 $\mu$m besitzen.

10. Dekorelement (2) nach einem der vorhergehenden Ansprüche,
**dadurch gekennzeichnet,**
**dass** die Projektion eines oder mehrerer der Grundelemente auf die Grundebene die Form eines Symbols oder eines Buchstabens oder eines Mikrotextes besitzt, um eine dem menschlichen Auge ohne Verwendung eines Hilfsmittels verborgene optische Information bereitzustellen.

11. Dekorelement (2) nach einem der vorhergehenden Ansprüche,
**dadurch gekennzeichnet,**
**dass** in dem ersten Bereich (31, 32) oder in einem und mehreren zweiten Teilbereichen des ersten Bereichs die Grundelemente (41) zumindest bereichsweise periodisch aufeinander abfolgen, insbesondere mit einer Periode zwischen 0,75 $\mu$m bis 10 $\mu$m aufeinander abfolgen, und vorzugsweise gemäß einem regelmäßigen ein- oder zweidimensionalen Raster positioniert sind, insbesondere wobei eine oder mehrere Zellen (320) mit jeweils mehreren zweiten Teilbereichen (321) vorgesehen sind, in welchen die Grundelemente (41) jeweils periodisch aufeinander abfolgen, wobei die Abfolge der Grundelemente (41) in jedem dieser zweiten Teilbereiche (321) durch die Parameter Azimutwinkel, Grundelemente-Form und/oder Spatialfrequenz definiert ist, und wobei einer oder mehrere der Parameter Azimutwinkel, Grundelemente-Form und/oder Spatialfrequenz der in der Zelle (320) angeordneten zweiten Teilbereiche (321) von zweitem Teilbereich zu zweitem Teilbereich pseudo-zufällig innerhalb eines für die Zelle (320) vordefinierten Variationsbereichs variiert sind.

12. Dekorelement (2) nach einem der vorhergehenden Ansprüche,
**dadurch gekennzeichnet,**

**dass** in dem ersten Bereich (31, 32) oder in einem oder mehreren dritten Teilbereichen (322) des ersten Bereichs die Grundelemente (41) einer nicht periodischen Funktion folgend positioniert sind, wobei insbesondere die Breite der Grundelemente und/oder die Beabstandung der Grundelemente in eine oder mehrere Richtungen variiert, sich insbesondere in eine oder mehrere Richtungen lokal linear vergrößert und/oder verkleinert, wobei insbesondere die Anordnung der Grundelemente (41) und die Flächenabmessungen der Projektionen der jeweiligen Grundelemente (41) auf die Grundebene in dem ersten Bereich oder in dem dritten Teilbereich (322) durch eine Funktion bestimmt sind, welche eine binäre Beugungsstruktur beschreibt, die das einfallende Licht zur Generierung einer ersten Information durch Beugung, vorzugsweise durch Beugung in die erste Beugungsordnung, ablenkt und als Beabstandung der Elementflächen der Grundelemente (41) von der Grundfläche in Richtung der z-Koordinatenachse in dem ersten Bereich oder in dem dritten Teilbereich (322) der erste Abstand, der zweite Abstand und/oder der dritte Abstand oder ein Vielfaches des ersten, zweiten und/oder dritten Abstands gewählt ist und so als zweite Information eine hierdurch bestimmte Farbinformation in dem ersten Bereich oder dem dritten Teilbereich (322) generiert wird.

13. Dekorelement (2) nach einem der vorhergehenden Ansprüche,
    **dadurch gekennzeichnet,**
    **dass** die mittlere Flächenbelegung der Grundebene mit den Grundelementen (41) im ersten Bereich und/oder in den ersten, zweiten und/oder dritten Teilbereichen zwischen 30 % und 70 %, bevorzugt zwischen 40 % und 60 %, und weiter bevorzugt in etwa 50 % beträgt.

14. Dekorelement (2) nach einem der vorhergehenden Ansprüche,
    **dadurch gekennzeichnet,**
    **dass** in dem ersten Bereich (31, 32) oder in einem vierten Teilbereich des ersten Bereichs die Elementflächen zur Bereitstellung einer versteckten Information moduliert sind, welche insbesondere mittels eines Lasers oder mittels eines Polarisators auslesbar ist.

15. Sicherheitsdokument (1) mit einem Dekorelement (2) nach einem der vorhergehenden Ansprüche.

16. Verfahren zur Herstellung eines Dekorelements (2), wobei bei dem Verfahren in das Dekorelement (2) eine Mikrostruktur (4) eingebracht wird, welche im Auflicht oder im Durchlicht einen optischen Effekt generiert, und welche in einem ersten Bereich (31, 32) eine Grundfläche (40) und mehrere Grundelemente (41) aufweist, die jeweils eine gegenüber der Grundfläche (40) erhöhte oder versenkte Elementfläche (411) und eine zwischen der Elementfläche und der Grundfläche angeordnete Flanke (310) aufweisen, und die Elementflächen (411) der Grundelemente (41) jeweils im Wesentlichen parallel zu der Grundebene verlaufen, wobei in einer oder mehreren ersten Zonen des ersten Bereichs die Elementflächen (311) der Grundelemente (41) und die Grundfläche (40) in einer senkrecht zur Grundebene verlaufende Richtung beabstandet werden mit einem ersten Abstand (61), der so gewählt wird, dass, durch Interferenz des an der Grundfläche (40) und den Elementflächen (411) reflektierten Lichts, im Auflicht und/oder, durch Interferenz des durch die Elementflächen (411) und der Grundfläche (40) transmittierten Lichts, im Durchlicht in der nullten Beugungsordnung eine erste Farbe in den ein oder mehreren ersten Zonen generiert wird, wobei die Ausformung und/oder Positionierung der Grundelemente (41) in dem ersten Bereich (31, 32) oder in zumindest einem ersten Teilbereich des ersten Bereichs pseudo-zufällig variiert ist, wobei die Mikrostruktur so ausgestaltet ist, dass sie die erste Farbe im Streulicht generiert, wobei in dem ersten Bereich (31, 32) oder in dem zumindest einen ersten Teilbereich des ersten Bereichs einer oder mehrere der Parameter:

    Positionierung des Grundelements (41), Beabstandung des Grundelements (41) vom nächsten benachbarten Grundelement, Form- und/oder Flächengröße der Projektion des Grundelements (41) auf die Grundebene und laterale Vorzugsrichtung (418) der Projektion des Grundelements (41) auf die Grundebene
    der im ersten Bereich (31, 32) bzw. in dem zumindest einen ersten Teilbereich angeordneten Grundelemente (41) pseudo-zufällig innerhalb eines jeweiligen für den ersten Bereich (31, 32) bzw. jeweiligen ersten Teilbereich vordefinierten Variationsbereich variiert ist und wobei die Variationsbereiche wie folgt gewählt sind: Variationsbereich für den Parameter Beabstandung der Grundelemente vom nächsten benachbarten Grundelement: 0,4 $\mu$m bis 50 $\mu$m, und/oder
    Variationsbereich des Parameters Flächengröße der Projektion des Grundelements auf die Grundebene: Variation zumindest einer lateralen Abmessung der Projektion des Grundelements auf die Grundebenen in einem Variationsbereich von 0,5 $\mu$m bis 30 $\mu$m.

## Claims

1. Decorative element (2), wherein the decorative element (2) has a microstructure (4) which generates an optical effect in incident light and/or in transmitted light, wherein the microstructure (4) has a base area (40) and several base elements (41) in a first region (31, 32), which in each case have an increased or reduced element area (411) in comparison to the base area (40), and an edge (410) arranged between the element area (411) and the base area (40), wherein the base area (40) of the microstructure defines a base plane spanned by coordinate axes x and y, wherein the element areas (411) of the base elements (41) respectively run substantially parallel to the base plane, wherein in at least one or several first zones (333, 351) of the first region (31, 32), the element areas (311) of the base elements (41) and the base area (40) are spaced apart by a first distance (61) in a direction running perpendicular to the base plane in the direction of a coordinate axis z, said distance being selected in such a way that, due to interference of the light reflected on the base area and the element areas, in incident light and/or, due to interference of the light transmitted through the element areas and the base areas, in transmitted light, a colour is generated in the one or several first zones (333, 351), wherein the formation and/or positioning of the base elements (41) in the first region (31, 32) or in at least one first section of the first region is pseudo-randomly varied, wherein the microstructure is designed in such a way that it generates the colour in scattered light, wherein in the first region (31, 32) or in the at least one first section of the first region, one or several of the parameters:

positioning of the base element (41), spacing apart of the base element (41) from the nearest adjacent base element, shape- and/or area size of the projection of the base element (41) onto the base plane and lateral preferential direction (418) of the projection of the base element (41) onto the base plane of the base elements (41) arranged in the first region (31, 32) or in the at least one first section, is varied pseudo-randomly within a respective variation range pre-defined for the first region (31, 32) or respective first section,

**characterised in that**

the variation ranges are selected as follows: variation range for the parameter spacing of the base elements from the nearest adjacent base element: 0.4 $\mu$m to 50 $\mu$m, and/or variation range of the parameter area size of the projection of the base element onto the base plane: variation at least of a lateral dimension of the projection of the base element onto the base planes in a variation range of from 0.5 $\mu$m to 30 $\mu$m, wherein in the first region (31, 32) or in the at least one first section of the first region, the spacing apart of the base elements from the nearest adjacent base element and/or at least one lateral dimension of the projection of the base element onto the base plane is or are pseudo-randomly varied within the respective variation range pre-defined for the first region (31, 32) or respective first section.

2. Decorative element (2) according to claim 1,
**characterised in that**
the parameters, which are pseudo-randomly arranged in a first of the first sections and in a second of the first sections, differ from one another and/or at least one variation range of the varied parameters is differently selected in a first of the first sections and in a second of the first sections, in particular the at least one variation range in the first of the first sections differs from the variation range in the second of the first sections by at least 10%.

3. Decorative element (2) according to claim 1 or 2,
**characterised in that**
the predefined variation range comprises a predefined set of values, preferably comprises between 5 and 20 values.

4. Decorative element (2) according to one of the preceding claims,
**characterised in that**
a two-dimensional grid, spanned by the coordinates x and y, for each of the base elements (41) arranged in the first region (31, 32) or in the first section defines a regulating position of the respective base element in the base plane, and the position of each of the base elements (41) in the first region (31, 32) or in the first section is determined by a pseudo-random movement from the respective regulating position in the direction of the coordinate axis x and/or in the direction of the coordinate axis y.

5. Decorative element (2) according to one of claims 2 to 4,
**characterised in that**
at least one lateral dimension of the projection of the respective base element (41) onto the base plane is pseudo-randomly varied in a variation range of 1 to 10 $\mu$m.

6. Decorative element (2) according to one of the preceding claims,
**characterised in that**
one or several of the base elements (41) are symmetrical base elements, with which the projection of the base element (41) onto the base plane has a symmetrical shape and/or one or several of the base elements (41) are asymmetrical base elements, with which the projection of the base element (41) onto the base plane has an asymmetrical shape with a lateral dimension in a preferential direction (418) running parallel to the base plane, said dimension being greater than the lateral dimension of the projection transverse to the preferential direction (415), in particular 50%, preferably 300% greater than the lateral dimension of the projection transverse to the preferential direction (415), wherein in particular in the first region (31, 32) or in a section (312) of the first region, the base elements (41) are asymmetrical base elements which have the same preferential direction (318).

7. Decorative element (2) according to claim 6,
   **characterised in that**
   in the first region (31, 32) or in a section (313) of the first region, the base elements (41) are asymmetrical base elements, whose preferential direction (418) is pseudo-randomly varied in a respective, predefined variation range, wherein as a variation range, preferably an angle range of + 180 degrees to - 180 degrees, more preferably of + 90 degrees to -90 degrees and more preferably of + 30 degrees and -30 degrees is selected.

8. Decorative element (2) according to claim 6 or 7,
   **characterised in that**
   the first region (31, 32) or the first section of the first region has one or several first cells (314) and/or one or several second cells (315), the base elements arranged in the first and second cells (314, 315) are asymmetrical base elements, wherein the asymmetrical base elements of the first cells (314) have a first preferential direction (418) and the asymmetrical base elements of the second cells (315) have a second preferential direction (418) which differs from the first preferential direction, wherein in particular the first region (31, 32) or the first section of the first region has one or several third cells (316) and the base elements arranged in the third cells (316) are symmetrical base elements.

9. Decorative element (2) according to claim 8,
   **characterised in that**
   the one or several first, second and/or third cells (314, 315, 316) have at least one lateral dimension parallel to the base plane of less than 300 $\mu$m, in particular of less than 100 $\mu$m.

10. Decorative element (2) according to one of the preceding claims,
    **characterised in that**
    the projection of one or several of the base elements onto the base plane has the shape of a symbol or a letter or a microtext, in order to make hidden optical information available to the human eye without using an aid.

11. Decorative element (2) according to one of the preceding claims,
    **characterised in that**
    in the first region (31, 32) or in one and several second sections of the first region, the base elements (41) follow one another periodically at least in regions, in particular follow one another with a period between 0.75 $\mu$m to 10 $\mu$m, and preferably are positioned according to a periodic one- or two-dimensional grid, in particular wherein one or several cells (320) are provided with several second sections (321) in each case, in which the base elements (41) follow one another periodically in each case, wherein the sequence of the base elements (41) in each of these second sections (321) is defined by the parameters azimuth angle, base elements shape and/or spatial frequency, and wherein one or several of the parameters azimuth angle, base elements shape and/or spatial frequency of the second sections (321) arranged in the cell (320) are pseudo-randomly varied from the second section to the second section within a variation range predefined for the cell (320).

12. Decorative element (2) according to one of the preceding claims,
    **characterised in that**,

    in the first region (31, 32) or in one or several third sections (322) of the first region, the base elements (41) of a non-periodic function are positioned sequentially, wherein in particular
    the width of the base elements and/or the spacing apart of the base elements varies in one or several directions, in particular increases and/or decreases locally in a linear manner in one or several directions,
    wherein in particular the arrangement of the base elements (41) and the area dimensions of the projections of the respective base elements (41) onto the base plane in the first region or in the third section (322) are determined by a function, which describes a binary diffraction structure, which deflects the incident light to generate a first piece of information by diffraction, preferably by diffraction in the first diffraction order, and is selected as spacing of the element areas of the base elements (41) from the base area in the direction of the z-coordinate axis in the first region or in the second section (322) of the first distance, the second distance and/or the third distance or a multiple of the first, second and/or third distance, and thus colour information determined in this way in the first region or the third section (322) is generated as a second piece of information.

13. Decorative element (2) according to one of the preceding claims,

**characterised in that**

the average area coverage of the base plane by the base elements (41) in the first region and/or in the first, second and/or third section is between 30% and 70%, preferably between 40% and 60%, and more preferably approximately 50%.

14. Decorative element (2) according to one of the preceding claims,
**characterised in that**
in the first region (31, 32) or in a fourth section of the first region, the element areas are modulated to provide hidden information, which can be read in particular by means of a laser or by means of a polariser.

15. Security document (1) having a decorative element (2) according to one of the preceding claims.

16. Method for manufacturing a decorative element (2), wherein during the method, a microstructure (4) is introduced into the decorative element (2), which generates an optical effect in incident light or in transmitted light, and which has a base area (40) and several base elements (41) in a first region (31, 32), which in each case have an element area (411) which is increased or reduced in comparison to the base area (40) and an edge (310) arranged between the element area and the base area, and the element areas (411) of the base elements (41) each run substantially parallel to the base plane, wherein in one or several first zones of the first region, the element areas (311) of the base elements (41) and the base area (40) are spaced apart in a direction running perpendicular to the base plane by a first distance (61) which is selected in such a way that, due to interference of the light reflected on the base area (40) and the element areas (411), in incident light and/or, due to interference of the light transmitted through the element areas (411) and the base area (40), in transmitted light in the zeroth diffraction order, a first colour is generated in the one or several first zones, wherein the formation and/or positioning of the base elements (41) in the first region (31, 32) or in at least a first section of the first region is pseudo-randomly varied, wherein the microstructure is designed in such a way that it generates the first colour in scattered light, wherein in the first region (31, 32) or in the at least one first section of the first region, one or several of the parameters:
positioning of the base element (41), spacing apart of the base element (41) from the nearest adjacent base element, shape- and/or area size of the projection of the base element (41) onto the base plane and lateral preferential direction (418) of the projection of the base element (41) onto the base plane of the base elements (41) arranged in the first region (31, 32) or in the at least one first section is pseudo-randomly varied within a variation range predefined respectively for the first region (31, 32) or respective first section, and wherein the variation ranges are selected as follows: variation range for the parameter spacing of the base elements from the nearest adjacent base element: 0.4 μm to 50 μm, and/or variation range of the parameter area size of the projection of the base element onto the base plane: variation at least of a lateral dimension of the projection of the base element onto the base planes in a variation range of 0.5 μm to 30 μm.

## Revendications

1. Elément décoratif (2), dans lequel l'élément décoratif (2) présente une microstructure (4) qui génère en lumière incidente et/ou en lumière transmise un effet optique, dans lequel la microstructure (4) présente dans une première zone (31, 32) une surface de base (40) et plusieurs éléments de base (41) qui présentent chacun une surface d'élément (411) abaissée ou relevée par rapport à la surface de base (40) et un flanc (410) agencé entre la surface d'élément (411) et la surface de base (40), dans lequel la surface de base (40) de la microstructure définit un plan de base défini par des axes de coordonnées x et y, dans lequel les surfaces d'élément (411) des éléments de base (41) s'étendent respectivement sensiblement parallèlement au plan de base, dans lequel dans au moins une ou plusieurs premières zones (333, 351) de la première zone (31, 32), les surfaces d'élément (311) des éléments de base (41) et la surface de base (40) sont espacés dans une direction s'étendant perpendiculairement au plan de base en direction d'un axe de coordonnées z à une première distance (61) qui est choisie de sorte que par interférence de la lumière réfléchie sur la surface de base et les surfaces d'élément, en lumière incidente et/ou par interférence de la lumière transmise par les surfaces d'élément et les surfaces de base, en lumière transmise une couleur soit générée dans l'une ou les plusieurs premières zones (333, 351), dans lequel la formation et/ou le positionnement des éléments de base (41) dans la première zone (31, 32) ou dans au moins une première zone partielle de la première zone est varié de manière pseudo-aléatoire, dans lequel la microstructure est configurée de sorte qu'elle génère la couleur en lumière diffusée, dans lequel dans la première zone (31, 32) ou dans l'au moins une première zone partielle de la première zone un ou plusieurs des paramètres :

   positionnement de l'élément de base (41), espacement de l'élément de base (41) de l'élément de base contigu suivant, grandeur de forme et/ou de surface de la projection de l'élément de base (41) sur le plan de base et direction préférée (418) latérale de la projection de l'élément de base (41) sur le plan de base des éléments de base (41) agencés dans la première zone (31, 32) ou dans l'au moins une première zone partielle est varié de manière pseudo-aléatoire dans une plage de variation prédéfinie respective pour la première zone (31, 32) ou première zone partielle respective,

**caractérisé en ce que**

les plages de variation sont choisies comme suit : plage de variation pour le paramètre espacement des éléments de base de l'élément de base contigu suivant : 0,4 $\mu$m à 50 $\mu$m, et/ou plage de variation du paramètre grandeur de surface de la projection de l'élément de base sur le plan de base : variation au moins d'une dimension latérale de la projection de l'élément de base sur les plans de base dans une plage de variation de 0,5 $\mu$m à 30 $\mu$m, dans lequel dans la première zone (31, 32) ou dans l'au moins une première zone partielle de la première zone, l'espacement des éléments de base de l'élément de base contigu suivant et/ou au moins une dimension latérale de la projection de l'élément de base sur le plan de base est ou sont varié (s) de manière pseudo-aléatoire dans la plage de variation respective prédéfinie pour la première zone (31, 32) ou la première zone partielle respective.

2. Elément décoratif (2) selon la revendication 1,
   **caractérisé en ce que**
   les paramètres qui sont variés de manière pseudo-aléatoire dans une première des premières zones partielles et dans une seconde des premières zones partielles, se distinguent et/ou au moins une plage de variation des paramètres variés est choisie différemment dans une première des premières zones partielles et dans une seconde des premières zones partielles, en particulier l'au moins une plage de variation dans la première des premières zones partielles se distingue d'elle dans la seconde des premières zones partielles d'au moins 10 %.

3. Elément décoratif (2) selon la revendication 1 ou 2,
   **caractérisé en ce que**
   la plage de variation prédéfinie comporte un jeu prédéfini de valeurs, de préférence comporte entre 5 et 20 valeurs.

4. Elément décoratif (2) selon l'une des revendications précédentes,
   **caractérisé en ce que**
   une trame en deux dimensions, définie par les axes de coordonnées x et y pour chacun des éléments de base (41) agencés dans la première zone (31, 32) ou dans la première zone partielle définit une position de règle de l'élément de base respectif dans le plan de base et que la position de chacun des éléments de base (41) dans la première zone (31, 32) ou dans la première zone partielle est déterminée par un déplacement pseudo-aléatoire à partir de la position de règle respective en direction de l'axe de coordonnées x et/ou en direction de l'axe de coordonnées y.

5. Elément décoratif (2) selon l'une des revendications 2 à 4,
   **caractérisé en ce que**
   au moins une dimension latérale de la projection de l'élément de base (41) respectif sur le plan de base est variée de manière pseudo-aléatoire dans une plage de variation de 1 à 10 $\mu$m.

6. Elément décoratif (2) selon l'une des revendications précédentes,
   **caractérisé en ce que**
   un ou plusieurs des éléments de base (41) sont des éléments de base symétriques pour lesquels la projection de l'élément de base (41) sur le plan de base possède une forme symétrique et/ou qu'un ou plusieurs des éléments de base (41) sont des éléments de base asymétriques, pour lesquels la projection de l'élément de base (41) sur le plan de base présente une forme asymétrique avec une dimension latérale dans une direction préférée (418) s'étendant parallèlement au plan de base, qui est plus grande que la dimension latérale de la projection transversalement à la direction préférée (415), est plus grande en particulier de 50 %, de préférence de 300 % que la dimension latérale de la projection transversalement à la direction préférée (415), dans lequel en particulier dans la première zone (31, 32) ou dans une zone partielle (312) de la première zone les éléments de base (41) sont des éléments de base asymétriques qui présentent la même direction préférée (318).

7. Elément décoratif (2) selon la revendication 6,
   **caractérisé en ce que**
   dans la première zone (31, 32) ou dans une zone partielle (313) de la première zone les éléments de base (41) sont des éléments de base asymétriques dont la direction préférée (418) est variée respectivement de manière pseudo-aléatoire dans une plage de variation prédéfinie, dans lequel en tant que plage de variation de préférence une plage angulaire de +180 degrés à -180 degrés est choisie, de manière plus préférée de +90 degrés à -90 degrés, et de manière encore plus préférée de +30 degrés à -30 degrés.

8. Elément décoratif (2) selon la revendication 6 ou 7,
   **caractérisé en ce que**
   la première zone (31, 32) ou première zone partielle de la première zone présente une ou plusieurs premières cellules (314) et/ou une ou plusieurs deuxièmes cellules (315), que les éléments de base agencés dans les premières et deuxièmes cellules (314, 315) sont des éléments de base asymétriques, dans lequel les éléments de base asymétriques des premières cellules (314) présentent une première direction préférée (418) et les éléments de base asymétriques des deuxièmes cellules (315) présentent une seconde direction préférée (418) qui se distingue de la première direction préférée, dans lequel en particulier la première zone (31, 32) ou la première zone partielle de la première zone présente une ou plusieurs troisièmes cellules (316) et que les éléments de base agencés dans les troisièmes cellules (316) sont des éléments de base symétriques.

9. Elément décoratif (2) selon la revendication 8,
   **caractérisé en ce que**
   les unes ou plusieurs premières, deuxièmes et/ou troisièmes cellules (314, 315, 316) possèdent au moins une dimension latérale parallèlement au plan de base de moins de 300 μm, en particulier de moins de 100 μm.

10. Elément décoratif (2) selon l'une des revendications précédentes,
    **caractérisé en ce que**
    la projection d'un ou de plusieurs des éléments de base sur le plan de base possède la forme d'un symbole ou d'une lettre ou d'un microtexte afin de mettre à disposition une information optique dissimulée à l'œil humain sans utiliser de moyen auxiliaire.

11. Elément décoratif (2) selon l'une des revendications précédentes,
    **caractérisé en ce que**
    dans la première zone (31, 32) ou dans une ou plusieurs deuxièmes zones partielles de la première zone les éléments de base (41) se suivent au moins par endroits périodiquement l'un l'autre, en particulier se suivent l'un l'autre avec une période entre 0,75 um à 10 um, et de préférence selon une trame régulière à une ou deux dimensions, en particulier dans lequel une ou plusieurs cellules (320) sont prévues avec respectivement plusieurs deuxièmes zones partielles (321) dans lesquelles les éléments de base (41) se suivent respectivement périodiquement l'un l'autre, dans lequel la suite des éléments de base (41) est définie dans chacune de ces deuxièmes zones partielles (321) par les paramètres angle azimutal, forme d'éléments de base et/ou fréquence spatiale, et dans lequel un ou plusieurs des paramètres angle azimutal, forme d'élément de base et/ou fréquence spatiale des deuxièmes zones partielles (321) agencées dans la cellule (320) sont variés de la deuxième zone partielle à la deuxième zone partielle de manière pseudo-aléatoire dans une plage de variation prédéfinie pour la cellule (320).

12. Elément décoratif (2) selon l'une des revendications précédentes,
    **caractérisé en ce que**

    dans la première zone (31, 32) ou dans une ou plusieurs troisièmes zones partielles (322) de la première zone les éléments de base (41) sont positionnés suivant une fonction non périodique, dans lequel en particulier la largeur des éléments de base et/ou l'espacement des éléments de base dans une ou plusieurs directions, varie, s'agrandit et/ou se réduit en particulier dans une ou plusieurs directions localement linéairement, dans lequel en particulier l'agencement des éléments de base (41) et les dimensions de surface des projections des éléments de base (41) respectifs sur le plan de base dans la première zone ou dans la troisième zone partielle (322) sont déterminés par une fonction qui décrit une structure de diffraction binaire qui dévie la lumière incidente pour la génération d'une première information par diffraction, de préférence par diffraction dans le premier ordre de diffraction et la première distance, la deuxième distance et/ou la troisième distance ou un multiple de la première, deuxième et/ou troisième distance est choisi en tant qu'espacement des surfaces d'élément des éléments de base (41) de la surface de base en direction de l'axe de coordonnées z dans la première zone ou dans la troisième zone partielle (322) et une information de couleur ainsi déterminée est ainsi générée en tant que deuxième information dans la première zone ou la troisième zone partielle (322).

13. Elément décoratif (2) selon l'une des revendications précédentes,
    **caractérisé en ce que**
    l'occupation de surface médiane du plan de base avec les éléments de base (41) dans la première zone et/ou dans les première, deuxième et/ou troisième zones partielles s'élève entre 30 % et 70 %, de préférence entre 40 % et 60 % et de manière plus préférée à peu près à 50 %.

14. Elément décoratif (2) selon l'une des revendications précédentes, **caractérisé en ce que** dans la première zone (31, 32) ou dans une quatrième zone partielle de la première zone les surfaces d'élément sont modulées pour la mise à disposition d'une information cachée qui peut être lue en particulier au moyen d'un laser ou au moyen d'un polarisateur.

15. Document de sécurité (1) avec un élément décoratif (2) selon l'une des revendications précédentes.

16. Procédé de fabrication d'un élément décoratif (2), dans lequel pour le procédé une microstructure (4) est introduite dans l'élément décoratif (2), laquelle génère en lumière incidente ou en lumière transmise un effet optique, et qui présente dans une première zone (31, 32) une surface de base (40) et plusieurs éléments de base (41) qui présentent respectivement une surface d'élément (411) relevée ou abaissée par rapport à la surface de base (40) et un flanc (310) agencé entre la surface d'élément et la surface de base, et les surfaces d'élément (411) des éléments de base (41) s'étendent respectivement sensiblement parallèlement au plan de base, dans lequel dans une ou plusieurs premières zones de la première zone, les surfaces d'élément (311) des éléments de base (41) et la surface de base (40) sont espacées dans une direction s'étendant perpendiculairement au plan de base à une première distance (61) qui est choisie de sorte que par interférence de la lumière réfléchie sur la surface de base (40) et les surfaces d'élément (411), en lumière incidente et/ou, par interférence de la lumière transmise par les surfaces d'élément (411) et la surface de base (40), en lumière transmise dans l'ordre de diffraction nul, une première couleur soit générée dans les unes ou plusieurs premières zones, dans lequel la formation et/ou le positionnement des éléments de base (41) dans la première zone (31, 32) ou dans au moins une première zone partielle de la première zone est varié de manière pseudo-aléatoire, dans lequel la microstructure est configurée de sorte qu'elle génère la première couleur ou en lumière diffusée, dans lequel dans la première zone (31, 32) ou dans l'au moins une première zone partielle de la première zone un ou plusieurs des paramètres : positionnement de l'élément de base (41), espacement de l'élément de base (41) de l'élément de base contigu suivant, grandeur de forme et/ou de surface de la projection de l'élément de base (41) sur le plan de base et direction préférée (418) latérale de la projection de l'élément de base (41) sur le plan de base des éléments de base (41) agencés dans la première zone (31, 32) ou dans l'au moins une première zone partielle est varié de manière pseudo-aléatoire dans une plage de variation prédéfinie respective pour la première zone (31, 32) ou première zone partielle respective et dans lequel les plages de variation sont choisies comme suit : plage de variation pour le paramètre espacement des éléments de base de l'élément de base suivant contigu : 0,4 $\mu$m à 50 $\mu$m, et/ou plage de variation du paramètre grandeur de surface de la projection de l'élément de base sur le plan de base : variation au moins d'une dimension latérale de la projection de l'élément de base sur les plans de base dans une plage de variation de 0,5 $\mu$m à 30 $\mu$m.

EP 3 422 056 B2

Fig. 1a

Fig. 1b

Fig. 1c

39

**Fig. 1d**

Fig. 2a

Fig. 2b

Fig. 2c

**Fig. 3a**

**Fig. 3b**

**Fig. 3c**

Fig. 4

Fig. 5a

Fig. 5b

Fig. 5c

Fig. 5d

Fig. 6a

Fig. 6b

Fig. 7

Fig. 8a

Fig. 8b

Fig. 9a

Fig. 9b

Fig. 10a

The CIE 1931, 2° observer chromaticity diagram.

Fig. 10b

Fig. 11a

Fig. 11b

Fig. 11c                                    Fig. 11d

Fig. 12a

Fig. 12b

Fig. 12c

Fig. 12d

**Fig. 13a**

**Fig. 13b**

**Fig. 13c**

Fig. 14a — 70

B  G  R

353
352
351
B ······· B'
358
350
350
350

y

x

Fig. 14b

Z

351  352  351  353  351  63  353
62  67  24  25

x

4 1

Fig. 14c

Fig. 15

Fig. 16

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007131375 A1
- DE 102010050031 A1
- DE 102008046128 A1